(19) Europäisches Patentamt
European Patent Office
Office européen des brevets

(11) EP 3 159 737 B1

(12) **EUROPEAN PATENT SPECIFICATION**

(45) Date of publication and mention of the grant of the patent:
**26.05.2021 Bulletin 2021/21**

(21) Application number: **15809640.4**

(22) Date of filing: **16.06.2015**

(51) Int Cl.:
***G02F 1/1337*** *(2006.01)* ***C08K 5/06*** *(2006.01)*
***C08L 79/08*** *(2006.01)* ***G02F 1/1334*** *(2006.01)*

(86) International application number:
**PCT/JP2015/067340**

(87) International publication number:
**WO 2015/194562 (23.12.2015 Gazette 2015/51)**

(54) **LIQUID CRYSTAL DISPLAY ELEMENT, LIQUID CRYSTAL ALIGNMENT FILM, AND LIQUID CRYSTAL ALIGNMENT TREATMENT AGENT**

FLÜSSIGKRISTALLANZEIGEELEMENT, FLÜSSIGKRISTALLAUSRICHTUNGSFILM UND FLÜSSIGKRISTALLAUSRICHTUNGSBEHANDLUNGSMITTEL

ÉLÉMENT D'AFFICHAGE À CRISTAUX LIQUIDES, FILM D'ALIGNEMENT DE CRISTAUX LIQUIDES ET AGENT DE TRAITEMENT D'ALIGNEMENT DE CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2014 JP 2014124623**

(43) Date of publication of application:
**26.04.2017 Bulletin 2017/17**

(73) Proprietor: **Nissan Chemical Corporation**
**Tokyo (JP)**

(72) Inventors:
- **OMURA, Hiroyuki**
  **Funabashi-shi**
  **Chiba 274-0052 (JP)**
- **MIKI, Noritoshi**
  **Funabashi-shi**
  **Chiba 274-0052 (JP)**
- **HASHIMOTO, Jun**
  **Funabashi-shi**
  **Chiba 274-0052 (JP)**
- **HOSAKA, Kazuyoshi**
  **Funabashi-shi**
  **Chiba 274-0052 (JP)**

(74) Representative: **Blodig, Wolfgang**
**Wächtershäuser & Hartz**
**Patentanwaltspartnerschaft mbB**
**Weinstrasse 8**
**80333 München (DE)**

(56) References cited:
**WO-A1-2012/002513** **WO-A1-2013/099937**
**WO-A1-2013/099937** **WO-A1-2015/022980**
**WO-A1-2015/053233** **JP-A- 2003 255 315**
**JP-A- 2007 249 041** **JP-A- 2008 058 374**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a transmission/scattering type liquid crystal display device which is in a transparent state when no voltage is applied and in a scattering state when a voltage is applied, and a liquid crystal aligning agent to form a liquid crystal alignment film used for the device.

BACKGROUND ART

A liquid crystal display device employing a liquid crystal material, a TN (twisted nematic) mode liquid crystal display device is in practical use. In such a mode, light switching is carried out employing optical rotation property of a liquid crystal, and a liquid crystal display device in this mode requires use of a polarizing plate. However, use of a polarizing plate lowers the light utilization efficiency.

As a liquid crystal display device which achieves a high light utilization efficiency without using a polarizing plate, a liquid crystal display device in which switching is conducted between a transmission state (also called a transparent state) and a scattering state of liquid crystal may be mentioned, and a liquid crystal display device employing a polymer dispersed liquid crystal (PDLC) or a polymer network liquid crystal (PNLC) is commonly known.

A liquid crystal display device employing such a liquid crystal is a liquid crystal display device comprising a liquid crystal layer, that is, a cured product composite (for example, a polymer network) of a liquid crystal and a polymerizable compound formed by disposing a liquid crystal composition containing a polymerizable compound which undergoes polymerization by ultraviolet rays between a pair of substrate provided with an electrode and curing the liquid crystal composition in such a state that the liquid crystal composition partly or entirely shows liquid crystallinity. In such a liquid crystal display device, the transmission state and the scattering state of the liquid crystal are controlled by voltage application.

A conventional liquid crystal display device employing PDLC or PNLC is a liquid crystal display device (also called a normal device) which is a cloudy (scattering) state when no voltage is applied since liquid crystal molecules are randomly aligned, and is in a transmission state when a voltage is applied since liquid crystal molecules are aligned in an electric field direction, whereby light is transmitted. However, in a normal device, it is necessary to always apply a voltage in order to obtain a transmission state, and accordingly when it is used for an application which is mainly used in a transparent state, for example, when used for window glass, the electrical power consumption tends to be large.

Further, a liquid crystal display device (also called a reverse device) which is in a transmission state when no voltage is applied and is in a scattering state when a voltage is applied has been reported (for example, Patent Documents 1, 2, and 3).

PRIOR ART DOCUMENTS

PATENT DOCUMENTS

Patent Document 1: Japanese Patent No. 2885116
Patent Document 2: Japanese Patent No. 4132424
Patent Document 3: WO 2012/002513 A1

DISCLOSURE OF INVENTION

TECHNICAL PROBLEM

For a reverse PDLC device, a liquid crystal alignment film to vertically align a liquid crystal (also called a vertical liquid crystal alignment film) is used since it is necessary to vertically align a liquid crystal. Since a vertical liquid crystal alignment film is a highly hydrophobic film, the adhesion of the liquid crystal alignment film to a liquid crystal layer tends to be low. Therefore, for a liquid crystal composition used for the reverse PDLC device, a polymerizable compound to increase the adhesion between the liquid crystal layer and the liquid crystal alignment film (also called a curing agent) should be incorporated in a large amount. However, if such a polymerizable compound is incorporated in a large amount, the vertical alignment property of the liquid crystal tends to be impaired, and the transparency when no voltage is applied and scattering property when a voltage is applied tend to be significantly decreased. Therefore, a liquid crystal alignment film used for a reverse PDLC device is required to have not only high vertical alignment property of the liquid crystal but

also high adhesion to the liquid crystal layer.

Under these circumstances, the object of the present invention is to provide a liquid crystal display device in which the adhesion between the liquid crystal layer and the vertical liquid crystal alignment film is high, the vertical alignment property of the liquid crystal is high, and further, favorable optical properties, that is, favorable transparency when no voltage is applied and favorable scattering property when a voltage is applied are achieved. Another object of the present invention is to provide a vertical liquid crystal alignment film having high adhesion to the liquid crystal layer and having high vertical alignment property of the liquid crystal, to be used for the liquid crystal display device, and a liquid crystal aligning agent from which the vertical liquid crystal alignment film can be obtained.

SOLUTION TO PROBLEM

The present inventors have conducted extensive studies and as a result, found that a liquid crystal display device employing a vertical liquid crystal alignment film obtained from a liquid crystal aligning agent with a side chain having a specific structure and with a specific structure, is very effective to achieve the above object, and accomplished the present invention.

That is, the present invention provides the following.

A liquid crystal display device, which is in a transparent state when no voltage is applied and in a scattering state when a voltage is applied, and which comprises a liquid crystal layer formed by disposing a liquid crystal composition containing a polymerizable compound which undergoes a polymerization reaction by ultraviolet rays, between a pair of substrates provided with an electrode, and irradiating the liquid crystal composition with ultraviolet rays and curing it in a such state that the liquid crystal composition partly or entirely shows liquid crystallinity, and at least one of the substrates being provided with a liquid crystal alignment film to vertically align a liquid crystal, wherein the liquid crystal alignment film is a liquid crystal alignment film obtained from a liquid crystal aligning agent containing a solvent and a polymer having a side chain structure (hereinafter referred to as a first side chain structure in the present invention) represented by the following formula [1-1] or [1-2] and a side chain structure (hereinafter referred to as a second side chain structure in the present invention) represented by the following formula [2]:

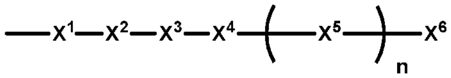

[1−1]

wherein $X^1$ and $X^3$ are each independently at least one binding group selected from the group consisting of a single bond, $-(CH_2)_a-$ (wherein a is an integer of from 1 to 15), -O-, $-CH_2O-$, -COO- and -OCO-; $X^2$ is a single bond or $-(CH_2)_b-$ (wherein b is an integer of from 1 to 15); $X^4$ is at least one bivalent cyclic group selected from the group consisting of a benzene ring, a cyclohexane ring and a heterocyclic ring, or a $C_{17-51}$ bivalent organic group having a steroid skeleton, provided that an optional hydrogen atom on the cyclic group may be substituted by a $C_{1-3}$ alkyl group, a $C_{1-3}$ alkoxy group, a $C_{1-3}$ fluorine-containing alkyl group, a $C_{1-3}$ fluorine-containing alkoxy group or a fluorine atom; $X^5$ is at least one cyclic group selected from the group consisting of a benzene ring, a cyclohexane ring and a heterocyclic ring, provided that an optional hydrogen atom on such a cyclic group may be substituted by a $C_{1-3}$ alkyl group, a $C_{1-3}$ alkoxy group, a $C_{1-3}$ fluorine-containing alkyl group, a $C_{1-3}$ fluorine-containing alkoxy group or a fluorine atom; n is an integer of from 0 to 4; and $X^6$ is at least one member selected from the group consisting of a $C_{1-18}$ alkyl group, a $C_{1-18}$ fluorine-containing alkyl group, a C1-18 alkoxy group and a $C_{1-18}$ fluorine-containing alkoxy group;

$$-X^7-X^8 \qquad [1\text{-}2]$$

wherein $X^7$ is at least one binding group selected from the group consisting of a single bond, -O-, $-CH_2O-$, -CONH-, -NHCO-, $-CON(CH_3)-$, $-N(CH_3)CO-$, -COO- and -OCO-; and $X^8$ is a $C_{8-22}$ alkyl group or a $C_{6-18}$ fluorine-containing alkyl group;

$$-Y^1-Y^2-Y^3-Y^4 \qquad [2]$$

wherein $Y^1$ and $Y^3$ are each independently at least one binding group selected from the group consisting of a single bond, -O-, -NH-, $-N(CH_3)-$, $-CH_2O-$, -CONH-, -NHCO-, $-CON(CH_3)-$, $-N(CH_3)CO-$, -COO- and -OCO-; $Y^2$ is a $C_{1-18}$ alkylene group, or a $C_{6-24}$ organic group having at least one cyclic group selected from the group consisting of a benzene ring, a cyclocyclohexane ring and a heterocyclic ring, provided that an optional hydrogen atom on such a cyclic group may be substituted by a $C_{1-3}$ alkyl group, a $C_{1-3}$ alkoxy group, a $C_{1-3}$ fluorine-containing alkyl group, a $C_{1-3}$ fluorine-containing alkoxy group or a fluorine atom; and $Y^4$ is at least one member selected from the group consisting of structures represented by the following formulae [2-a] to [2-g]:

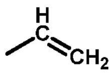
[2−a]

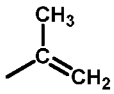
[2−b]

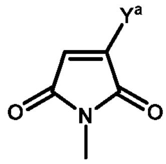
[2−c]

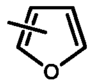
[2−d]

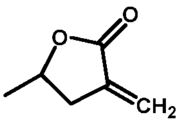
[2−e]

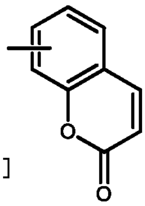
[2−f]

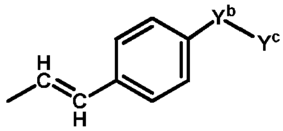
[2−g]

wherein $Y^a$ is a hydrogen atom or a benzene ring; $Y^b$ is a single bond, or at least one cyclic group selected from the group consisting of a benzene ring, a cyclohexane ring and a heterocyclic ring; and $Y^c$ is at least one member selected from the group consisting of a $C_{1-18}$ alkyl group, a $C_{1-18}$ fluorine-containing alkyl group, a $C_{1-18}$ alkoxy group and a $C_{1-18}$ fluorine-containing alkoxy group,

wherein the liquid crystal aligning agent is a liquid crystal aligning agent containing a polyimide precursor obtained by a reaction of a diamine component containing a diamine having the side chain structure represented by the above formula [1-1] or [1-2] and a diamine having the side chain structure represented by the above formula [2], and a tetracarboxylic acid component, or a polyimide obtained by imidizing the polyimide precursor,

wherein the liquid crystal aligning agent contains at least one generator selected from the group consisting of a photo-radical generator, a photo-acid generator and a photo-base generator,

wherein the liquid crystal aligning agent contains a compound having at least one member selected from the group consisting of structures represented by the following formulae [b-1] to [b-8]:

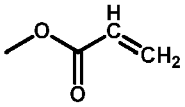
[b−1]

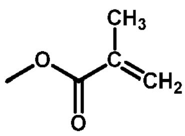
[b−2]

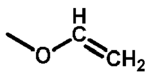
[b−3]

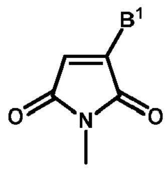
[b−4]

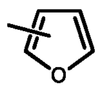
[b−5]

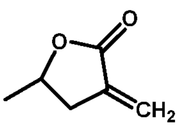
[b−6]

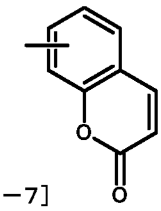
[b−7]

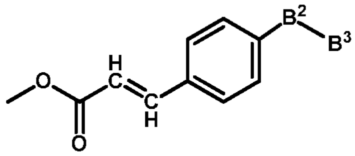
[b−8]

wherein $B^1$ is a hydrogen atom or a benzene ring, $B^2$ is at least one cyclic group selected from the group consisting of a benzene ring, a cyclohexane ring and a heterocyclic ring, and $B^3$ is at least one member selected from the group consisting of a C1-18 alkyl group, a $C_{1-18}$ fluorine-containing alkyl group, a $C_{1-18}$ alkoxy group and a $C_{1-18}$ fluorine-containing alkoxy group, and

wherein the liquid crystal aligning agent contains a compound having at least one group selected from the group consisting of an epoxy group, an isocyanate group, an oxetane group, a cyclocarbonate group, a hydroxy group, a hydroxyalkyl group and a lower alkoxyalkyl group.

## ADVANTAGEOUS EFFECTS OF INVENTION

According to the present invention, it is possible to provide a liquid crystal display device in which the adhesion between the liquid crystal layer and the vertical liquid crystal alignment film is high, the vertical alignment property of the liquid crystal is high, and favorable optical properties, that is, favorable transparency when no voltage is applied and favorable scattering property when a voltage is applied are achieved. Accordingly, the liquid crystal display device of the present invention is useful for e.g. a liquid crystal display used for display, a light control window or an optical shutter device controlling transmission and blocking of light, having excellent properties.

The vertical liquid crystal alignment film used for the liquid crystal display device of the present invention is obtained from a liquid crystal aligning agent containing a polymer having a first side chain structure and a second side chain structure. Since the first side chain structure represented by the formula [1-1] is a rigid structure, in a liquid crystal display device employing a vertical liquid crystal alignment film with such a first side chain structure, highly stable vertical alignment property of the liquid crystal is achieved. Further, since high vertical alignment property can be achieved by the first side chain structure even with a small amount of incorporation of the side chain structure, in a liquid crystal display device employing a vertical liquid crystal alignment film with the first side chain structure represented by the formula [1-1], the adhesion between the liquid crystal layer and the vertical liquid crystal alignment film is higher.

Further, the second side chain structure and a reactive group of the polymerizable compound in the liquid crystal composition undergo a photoreaction in a step of applying ultraviolet rays in the process for producing the liquid crystal display device, and the adhesion between the vertical liquid crystal alignment film and a cured product of the liquid crystal composition (liquid crystal layer) will be firm. Particularly, the second side chain structure is in the polymer as the base, firmer adhesion can be achieved as compared with a method of introducing a compound having a group which will undergo such a photoreaction into the liquid crystal aligning agent.

Accordingly, the liquid crystal display device of the present invention comprising a liquid crystal alignment film obtained from a liquid crystal aligning agent containing a polymer having a first side chain structure and a second side chain structure is a liquid crystal display device in which favorable optical properties, that is, favorable transparency when no voltage is applied and favorable scattering property when a voltage is applied are achieved, and the adhesion between the liquid crystal layer and the vertical liquid crystal alignment film is high.

## DESCRIPTION OF EMBODIMENTS

### <Liquid crystal display device>

The liquid crystal display device of the present invention is a liquid crystal display device comprising a liquid crystal layer formed by disposing a liquid crystal composition between a pair of substrates provided with an electrode, and irradiating the liquid crystal composition with ultraviolet rays and curing it in a such state that the liquid crystal composition partly or entirely shows liquid crystallinity, and at least one of the substrates being provided with a liquid crystal alignment film to vertically align a liquid crystal, and it is suitably used as a reverse device which is in a transmission state when no voltage is applied and is in a scattering state when a voltage is applied.

### <First side chain structure>

The first side chain structure in the present invention is represented by the following formula [1-1] or [1-2]:

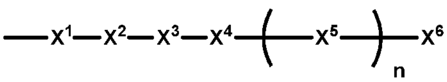

[1-1]

In the formula, $X^1$, $X^2$, $X^3$, $X^4$, $X^5$, $X^6$ and n are as defined above, and particularly, they are preferably as follows.

$X^1$ is, in view of availability of the material and easiness of preparation, preferably a single bond, $-(CH_2)_a-$ (wherein a is an integer of from 1 to 15), -O-, $-CH_2O-$ or -COO-. It is more preferably a single bond, $-(CH_2)_a-$ (wherein a is an integer of from 1 to 10), -O-, $-CH_2O-$ or -COO-.

$X^2$ is preferably a single bond or $-(CH_2)_b-$ (wherein b is an integer of from 1 to 10).

$X^3$ is, in view of easiness of preparation, preferably a single bond, $-(CH_2)_c-$(wherein c in an integer of from 1 to 15), -O-, $-CH_2O-$ or -COO-. It is more preferably a single bond, $-(CH_2)_c-$ (wherein c in an integer of from 1 to 10), -O-, $-CH_2O-$ or -COO-.

$X^4$ is, in view of easiness of preparation, preferably a benzene ring, a cyclohexane ring or a $C_{17-51}$ organic group having a steroid skeleton.

$X^5$ is preferably a benzene ring or a cyclohexane ring.

$X^6$ is preferably a $C_{1-18}$ alkyl group, a $C_{1-10}$ fluorine-containing alkyl group, a $C_{1-18}$ alkoxy group or a $C_{1-10}$ fluorine-containing alkoxy group. It is more preferably a $C_{1-12}$ alkyl group or a $C_{1-12}$ alkoxy group, particularly preferably a $C_{1-9}$ alkyl group or a $C_{1-9}$ alkoxy group.

n is, in view of availability of the material and easiness of preparation, preferably from 0 to 3, more preferably from 0 to 2.

As preferred combinations of $X^1$, $X^2$, $X^3$, $X^4$, $X^5$, $X^6$ and n, combinations (2-1) to (2-629) disclosed in WO2011/132751 (published on October 27, 2011), pages 13 to 34, tables 6 to 47. In the tables in WO2011/132751, $X^1$ to $X^6$ in the present invention are represented as Y1 to Y6, and Y1 to Y6 should be read as $X^1$ to $X^6$. Further, in (2-605) to (2-629) in tables in WO2011/132751, the $C_{17-51}$ organic group having a steroid skeleton in the present invention is represented as a $C_{12-25}$ organic group having a steroid skeleton, and the $C_{12-25}$ organic group having a steroid skeleton should be read as a $C_{17-51}$ organic group having a steroid skeleton.

Among them, preferred are combinations (2-25) to (2-96), (2-145) to (2-168), (2-217) to (2-240), (2-268) to (2-315), (2-364) to (2-387), (2-436) to (2-483) and (2-603) to (2-615). Particularly preferred are combinations (2-49) to (2-96), (2-145) to (2-168), (2-217) to (2-240), (2-603) to (2-606), (2-607) to (2-609), (2-611), (2-612) and (2-624).

$$-X^7-X^8 \qquad [1\text{-}2]$$

In the formula, $X^7$ and $X^8$ are as defined above. Particularly, $X^7$ is preferably a single bond, -O-, $-CH_2O-$, -CONH-, $-CON(CH_3)-$ or -COO-. It is more preferably a single bond, -O-, -CONH- or -COO-.

$X^8$ is preferably a $C_{8-18}$ alkyl group.

The first side chain structure in the present invention is preferably the first side chain structure represented by the formula [1-1] in that a highly stable vertical alignment property of the liquid crystal can be thereby achieved, as described above.

<Second side chain structure>

The second side chain structure in the present invention is represented by the following formula [2]:

$$-Y^1-Y^2-Y^3-Y^4 \qquad [2]$$

In the formula, $Y^1$, $Y^2$, $Y^3$ and $Y^4$ are as defined above. Particularly, they are preferably as follows.

$Y^1$ is preferably a single bond, -O-, $-CH_2O-$, -CONH-, $-CON(CH_3)-$ or -COO-. It is more preferably, in view of easiness of preparation, a single bong, -O-, $-CH_2O-$ or -COO-.

$Y^2$ is preferably a $C_{2-12}$ alkylene group or a $C_{6-24}$ organic group having at least one cycle group selected from the group consisting of a benzene ring and a cyclocyclohexane ring. It is more preferably a $C_{2-12}$ alkylene group in view of easiness of preparation and adhesion between the liquid crystal layer and the vertical liquid crystal alignment film in the obtainable liquid crystal display device.

$Y^3$ is preferably a single bond, -O-, -NHCO-, $-N(CH_3)CO-$ or -OCO-. It is more preferably, in view of easiness of preparation, a single bond, -O-, -NHCO- or -OCO-.

$Y^4$ is preferably the above formula [2-a], [2-b], [2-d] or [2-e]. It is more preferably the formula [2-a], [2-b] or [2-e] in view of easiness of preparation and adhesion of the liquid crystal layer and the vertical liquid crystal alignment film in the obtainable liquid crystal display device.

Preferred combinations of $Y^1$ to $Y^4$ in the formula [2] are as shown in the following Tables 1 to 3.

[Table 1]

| Combination | $Y^1$ | $Y^2$ | $Y^3$ | $Y^4$ |
|---|---|---|---|---|
| 2-1a | Single bond | $C_{2-12}$ alkylene group | Single bond | Formula [2-a] |
| 2-2a | Single bond | $C_{2-12}$ alkylene group | -O- | Formula [2-a] |
| 2-3a | Single bond | $C_{2-12}$ alkylene group | -NHCO- | Formula [2-a] |
| 2-4a | Single bond | $C_{2-12}$ alkylene group | -OCO- | Formula [2-a] |
| 2-5a | Single bond | $C_{2-12}$ alkylene group | Single bond | Formula [2-b] |
| 2-6a | Single bond | $C_{2-12}$ alkylene group | -O- | Formula [2-b] |
| 2-7a | Single bond | $C_{2-12}$ alkylene group | -NHCO- | Formula [2-b] |

(continued)

| Combination | $Y^1$ | $Y^2$ | $Y^3$ | $Y^4$ |
|---|---|---|---|---|
| 2-8a | Single bond | $C_{2-12}$ alkylene group | -OCO- | Formula [2-b] |
| 2-9a | Single bond | $C_{2-12}$ alkylene group | Single bond | Formula [2-e] |
| 2-10a | Single bond | $C_{2-12}$ alkylene group | -O- | Formula [2-e] |
| 2-11a | Single bond | $C_{2-12}$ alkylene group | -NHCO- | Formula [2-e] |
| 2-12a | Single bond | $C_{2-12}$ alkylene group | -OCO- | Formula [2-e] |
| 2-13a | -O- | $C_{2-12}$ alkylene group | Single bond | Formula [2-a] |
| 2-14a | -O- | $C_{2-12}$ alkylene group | -O- | Formula [2-a] |
| 2-15a | -O- | $C_{2-12}$ alkylene group | -NHCO- | Formula [2-a] |
| 2-16a | -O- | $C_{2-12}$ alkylene group | -OCO- | Formula [2-a] |

[Table 2]

| Combination | $Y^1$ | $Y^2$ | $Y^3$ | $Y^4$ |
|---|---|---|---|---|
| 2-17a | -O- | $C_{2-12}$ alkylene group | Single bond | Formula [2-b] |
| 2-18a | -O- | $C_{2-12}$ alkylene group | -O- | Formula [2-b] |
| 2-19a | -O- | $C_{2-12}$ alkylene group | -NHCO- | Formula [2-b] |
| 2-20a | -O- | $C_{2-12}$ alkylene group | -OCO- | Formula [2-b] |
| 2-21a | -O- | $C_{2-12}$ alkylene group | Single bond | Formula [2-e] |
| 2-22a | -O- | $C_{2-12}$ alkylene group | -O- | Formula [2-e] |
| 2-23a | -O- | $C_{2-12}$ alkylene group | -NHCO- | Formula [2-e] |
| 2-24a | -O- | $C_{2-12}$ alkylene group | -OCO- | Formula [2-e] |
| 2-25a | $-CH_2O-$ | $C_{2-12}$ alkylene group | Single bond | Formula [2-a] |
| 2-26a | $-CH_2O-$ | $C_{2-12}$ alkylene group | -O- | Formula [2-a] |
| 2-27a | $-CH_2O-$ | $C_{2-12}$ alkylene group | -NHCO- | Formula [2-a] |
| 2-28a | $-CH_2O-$ | $C_{2-12}$ alkylene group | -OCO- | Formula [2-a] |
| 2-29a | $-CH_2O-$ | $C_{2-12}$ alkylene group | Single bond | Formula [2-b] |
| 2-30a | $-CH_2O-$ | $C_{2-12}$ alkylene group | -O- | Formula [2-b] |
| 2-31a | $-CH_2O-$ | $C_{2-12}$ alkylene group | -NHCO- | Formula [2-b] |
| 2-32a | $-CH_2O-$ | $C_{2-12}$ alkylene group | -OCO- | Formula [2-b] |

[Table 3]

| Combination | $Y^1$ | $Y^2$ | $Y^3$ | $Y^4$ |
|---|---|---|---|---|
| 2-33a | $-CH_2O-$ | $C_{2-12}$ alkylene group | Single bond | Formula [2-e] |
| 2-34a | $-CH_2O-$ | $C_{2-12}$ alkylene group | -O- | Formula [2-e] |
| 2-35a | $-CH_2O-$ | $C_{2-12}$ alkylene group | -NHCO- | Formula [2-e] |
| 2-36a | $-CH_2O-$ | $C_{2-12}$ alkylene group | -OCO- | Formula [2-e] |
| 2-37a | -COO- | $C_{2-12}$ alkylene group | Single bond | Formula [2-a] |
| 2-38a | -COO- | $C_{2-12}$ alkylene group | -O- | Formula [2-a] |

(continued)

| Combination | $Y^1$ | $Y^2$ | $Y^3$ | $Y^4$ |
|---|---|---|---|---|
| 2-39a | -COO- | $C_{2-12}$ alkylene group | -NHCO- | Formula [2-a] |
| 2-40a | -COO- | $C_{2-12}$ alkylene group | -OCO- | Formula [2-a] |
| 2-41a | -COO- | $C_{2-12}$ alkylene group | Single bond | Formula [2-b] |
| 2-42a | -COO- | $C_{2-12}$ alkylene group | -O- | Formula [2-b] |
| 2-43a | -COO- | $C_{2-12}$ alkylene group | -NHCO- | Formula [2-b] |
| 2-44a | -COO- | $C_{2-12}$ alkylene group | -OCO- | Formula [2-b] |
| 2-45a | -COO- | $C_{2-12}$ alkylene group | Single bond | Formula [2-e] |
| 2-46a | -COO- | $C_{2-12}$ alkylene group | -O- | Formula [2-e] |
| 2-47a | -COO- | $C_{2-12}$ alkylene group | -NHCO- | Formula [2-e] |
| 2-48a | -COO- | $C_{2-12}$ alkylene group | -OCO- | Formula [2-e] |

More preferred combinations of $Y^1$ to $Y^4$ are combinations (2-2a) to (2-4a), (2-6a) to (2-8a), (2-10a) to (2-12a), (2-14a) to (2-16a), (2-18a) to (2-20a), (2-22a) to (2-24a), (2-26a) to (2-28a), (2-30a) to (2-32a), (2-34a) to (2-36a), (2-38a) to (2-40a), (2-42a) to (2-44a) and (2-46a) to (2-48a).

Further preferred combinations of $Y^1$ to $Y^4$ are combinations (2-3a), (2-4a), (2-7a), (2-8a), (2-11a), (2-12a), (2-15a), (2-16a), (2-19a) to (2-21a), (2-23a), (2-24a), (2-27a), (2-28a), (2-31a) to (2-33a), (2-35a), (2-36a), (2-39a), (2-40a), (2-43a) to (2-45a), (2-47a) and (2-48a).

Most preferred are combinations (2-20a), (2-21a), (2-28a), (2-32a), (2-33a), (2-40a), (2-44a) and (2-45a), in view of easiness of preparation and adhesion of the liquid crystal layer and the vertical liquid crystal alignment film in the obtainable liquid crystal display device.

<Specific polymer>

The liquid crystal aligning agent in the present invention contains a polymer having the first side chain structure and the second side chain structure. The polymer having the first side chain structure and the second side chain structure (hereinafter referred to as a specific polymer in the present invention) may be composed of different two polymers i.e. a polymer having the first side chain structure and a polymer having the second side chain structure, or may be composed of a single polymer. However, in view of easiness of preparation, it is preferably composed of different two polymers i.e. a polymer having the first side chain structure and a polymer having the second side chain structure.

The specific polymer may be at least one polymer selected from the group consisting of an acrylic polymer, a methacrylic polymer, a novolac resin, a polyhydroxystyrene, a polyimide precursor, a polyimide, a polyamide, a polyester, a cellulose and a polysiloxane. Among them, preferred is a polyimide precursor, a polyimide or a polysiloxane, more preferred is a polyimide precursor or a polyimide, and most preferred is a polyimide. In the present invention, the liquid crystal aligning agent contains, as defined in claim 1, a polyimide precursor or a polyimide obtained by imidzing the polyimide precursor.

In a case where the specific polymer is a polyimide precursor or a polyimide (they will sometimes be generally referred to as a polyimide-based polymer), they are preferably a polyimide precursor or a polyimide obtained by reacting a diamine component and a tetracarboxylic acid component.

The polyimide precursor has a structure represented by the following formula [A]:

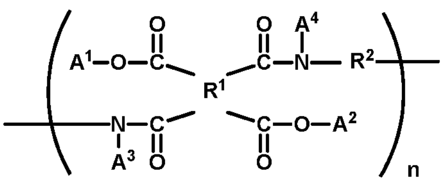

[A]

wherein $R^1$ is a tetravalent organic group, $R^2$ is a bivalent organic group, $A^1$ and $A^2$ are each independently a hydrogen atom or a $C_{1-8}$ alkyl group, $A^3$ and $A^4$ are each independently a hydrogen atom, a $C_{1-5}$ alkyl group or an acetyl group, and n is a positive integer.

The diamine component may be a diamine having two primary or secondary amino groups in its molecule. The tetracarboxylic acid component may, for example, be a tetracarboxylic acid compound, a tetracarboxylic acid dianhydride, a tetracarboxylic acid dihalide compound, a tetracarboxylic acid dialkyl ester compound or a tetracarboxylic acid dialkyl ester dihalide compound.

The polyimide-based polymer is preferably a polyamide acid having repeating units represented by the following formula [D] or a polyimide obtained by imidizing the polyamide acid, which is relatively easily obtained from a tetracarboxylic acid dianhydride represented by the following formula [B] and a diamine represented by the following formula [C] as materials. Particularly, the polyimide-based polymer is preferably a polyimide in view of physical and chemical stability of the obtainable vertical liquid crystal alignment film.

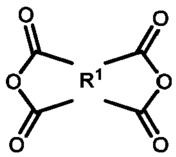 [B] $H_2N—R^2—NH_2$ [C]

wherein $R^1$ and $R^2$ are as defined for the formula [A];

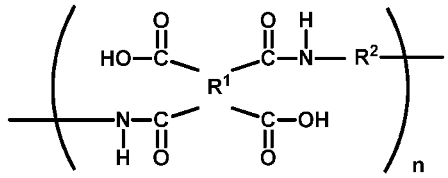 [D]

wherein $R^1$ and $R^2$ are as defined for the formula [A].

Further, it is possible to introduce, to the above-obtained polymer of the formula [D], a $C_{1-8}$ alkyl group as each of $A^1$ and $A^2$ in the formula [A], or a $C_{1-5}$ alkyl group or an acetyl group as each of $A^3$ and $A^4$ in the formula [A].

As a method for introducing the first side chain structure to the polyimide-based polymer, it is preferred to use a diamine having the first side chain structure as a part of the material. Particularly, it is preferred to use a diamine represented by the following formula [1a] (hereinafter sometimes referred to as a first side chain type diamine):

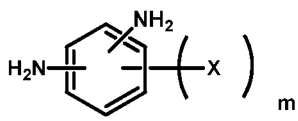 [1a]

X is a structure represented by the above formula [1-1] or [1-2].

m is an integer of from 1 to 4. It is preferably an integer of 1.

The first side chain type diamine in the present invention is preferably a diamine having a structure represented by the following formula [1-1a] with a view to obtaining a highly stable vertical alignment property of the liquid crystal.

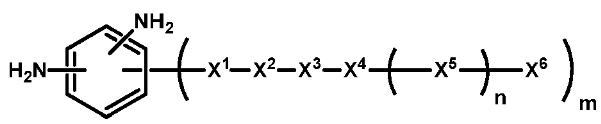 [1−1a]

The details and preferred combinations of $X^1$, $X^2$, $X^3$, $X^4$, $X^5$, $X^6$ and n in the formula [1-1 a] are as defined for the above formula [1-1].

m is an integer of from 1 to 4. It is preferably 1.

Specifically, for example, diamines represented by the following formulae [1a-1] to [1a-31] may be mentioned.

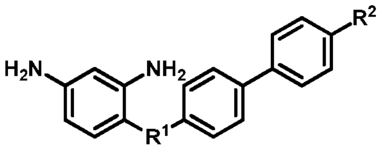

[1a−1]

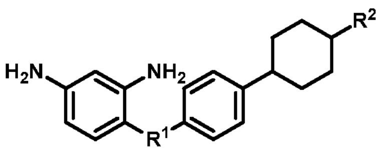

[1a−2]

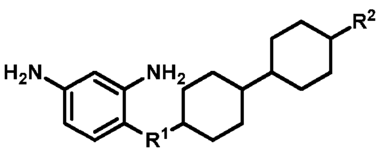

[1a−3]

wherein $R^1$ is each independently at least one binding group selected from the group consisting of -O-, -$OCH_2$-, -$CH_2O$-, -$COOCH_2$- and -$CH_2OCO$-, and $R^2$ is each independently a $C_{1-22}$ linear or branched alkyl group, a $C_{1-22}$ linear or branched alkoxy group, a $C_{1-22}$ linear or branched fluorine-containing alkyl group, or a $C_{1-22}$ linear or branched fluorine-containing alkoxy group;

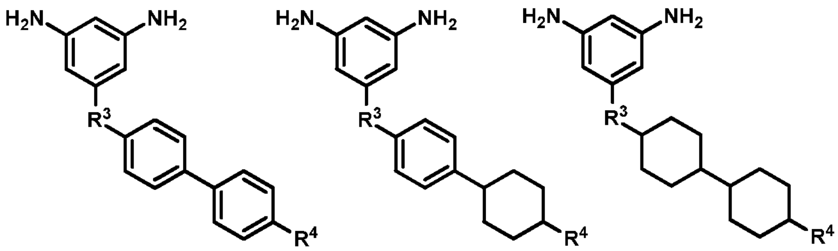

[1a−4] [1a−5] [1a−6]

wherein $R^3$ is each independently at least one binding group selected from the group consisting of -COO-, -OCO-, -CONH-, -NHCO-, -$COOCH_2$-, -$CH_2OCO$-, -$CH_2O$-, -$OCH_2$- and -$CH_2$-, and $R^4$ is each independently a $C_{1-22}$ linear or branched alkyl group, a $C_{1-22}$ linear or branched alkoxy group, a $C_{1-22}$ linear or branched fluorine-containing alkyl group, or a $C_{1-22}$ linear or branched fluorine-containing alkoxy group;

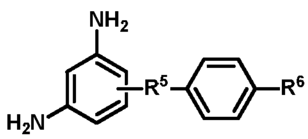

[1a−7]

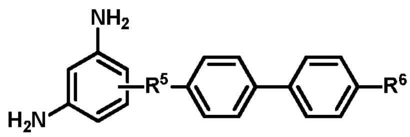

[1a−8]

wherein $R^5$ is each independently at least one binding group selected from the group consisting of -COO-, -OCO-, -CONH-, -NHCO-, -$COOCH_2$-, -$CH_2OCO$-, -$CH_2O$-, -$OCH_2$-, -$CH_2$-, -O- and -NH-, and $R^6$ is each independently at least one member selected from the group consisting of a fluorine atom, a cyano group, a trifluoromethane group, a nitro group, an azo group, a formyl group, an acetyl group, an acetoxy group and a hydroxy group;

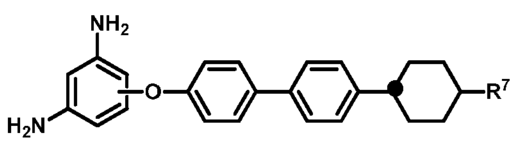

[1a−9]

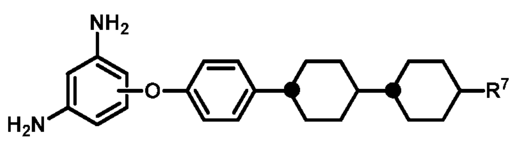

[1a−10]

wherein $R^7$ is each independently a $C_{3-12}$ linear or branched alkyl group, and regarding the cis-trans isomerism, 1,4-cyclohexylene is a trans isomer;

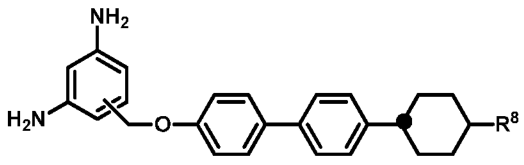

[1a-11]

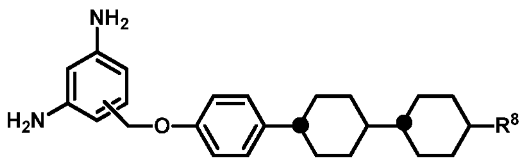

[1a-12]

wherein $R^8$ is each independently a $C_{3-12}$ linear or branched alkyl group, and regarding the cis-trans isomerism, 1,4-cyclohexylene is a trans isomer;

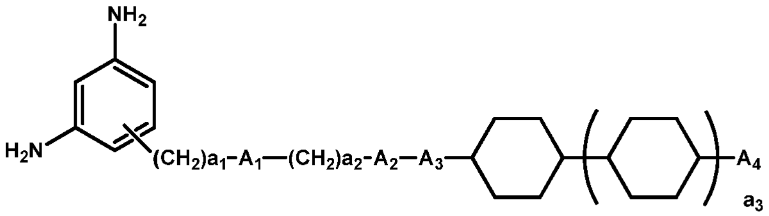

[1a-13]

wherein $A_4$ is a $C_{3-20}$ linear or branched alkyl group which may be substituted by a fluorine atom, $A_3$ is a 1,4-cyclohexylene group or a 1,4-phenylene group, $A_2$ is an oxygen atom or -COO-* (wherein the binding site with the symbol "*" is bonded to $A_3$), $A_1$ is an oxygen atom or -COO-* (wherein the binding site with the symbol "*" is bonded to $(CH_2)a_2$), $a_1$ is an integer of 0 or 1, $a_2$ is an integer of from 2 to 10, and $a_3$ is an integer of 0 or 1:

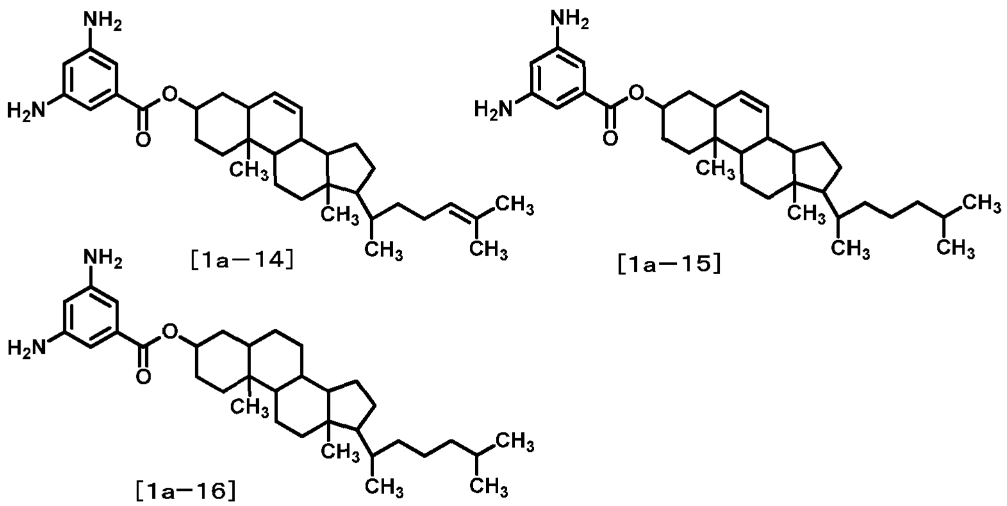

[1a-14]

[1a-15]

[1a-16]

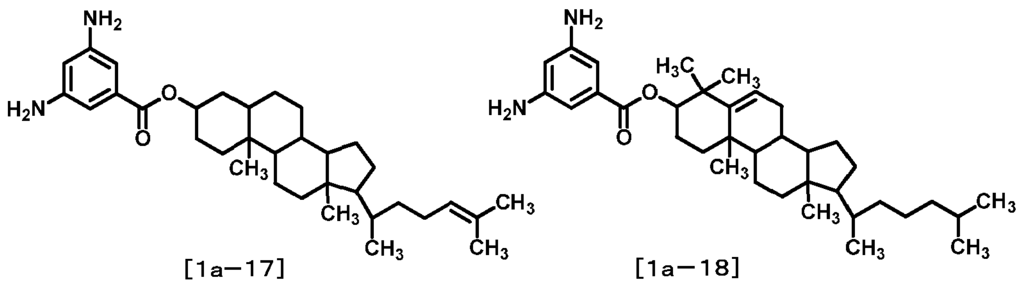

[1a-17]

[1a-18]

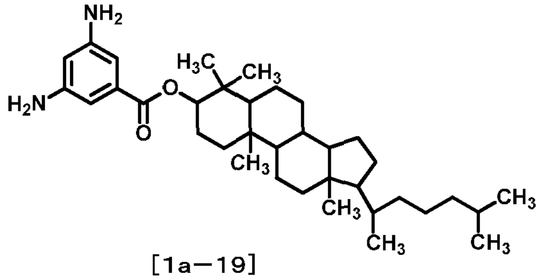

[1a−19]

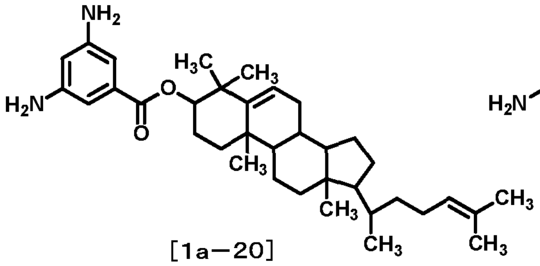

[1a−20]

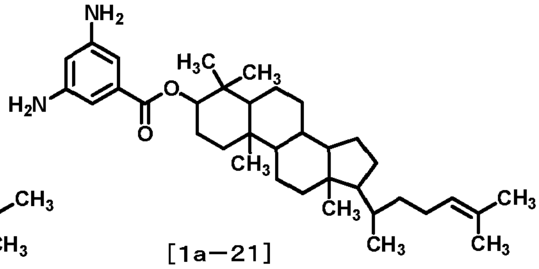

[1a−21]

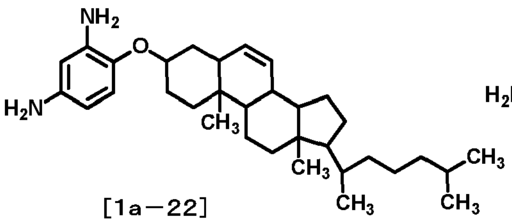

[1a−22]

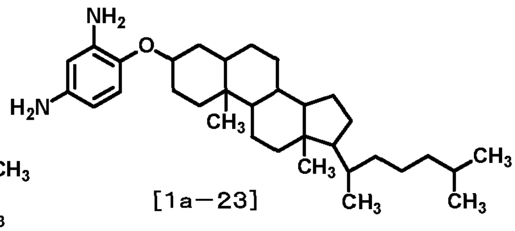

[1a−23]

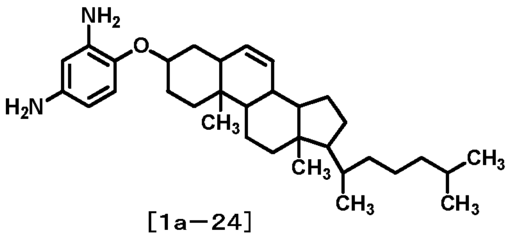

[1a−24]

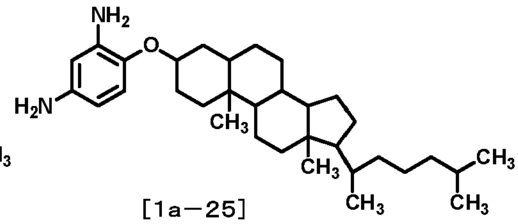

[1a−25]

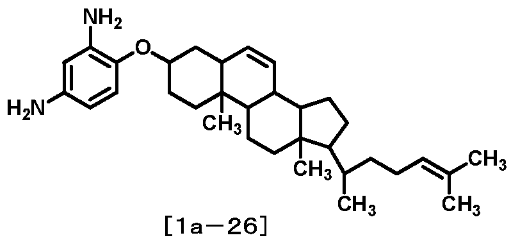

[1a−26]

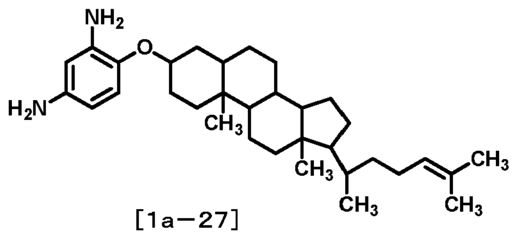

[1a−27]

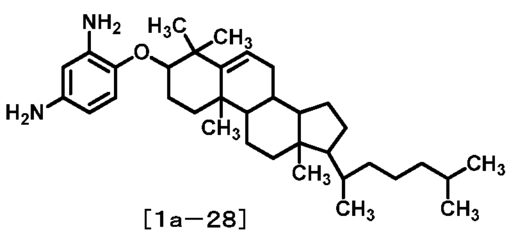

[1a−28]

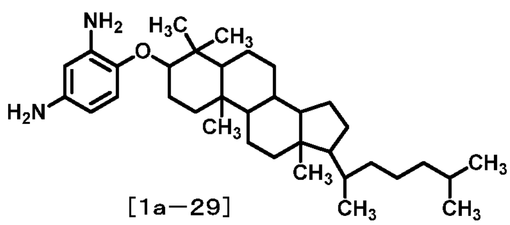

[1a−29]

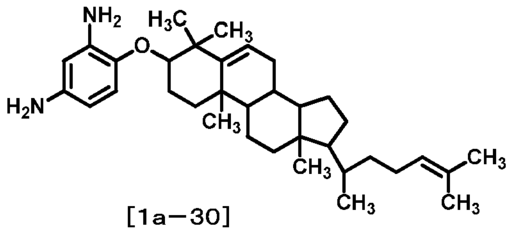

[1a-30]

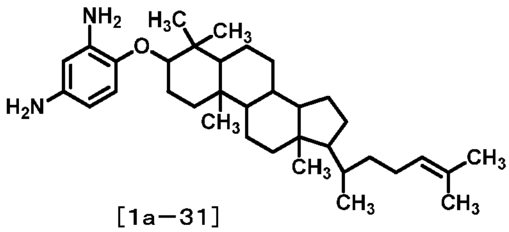

[1a-31]

Among the above formulae [1a-1] to [1a-31], preferred are the formulae [1a-1] to [1a-6], [1a-9] to [1a-13] and [1a-22] to [1a-31]. Further, diamines represented by the following formulae [1a-32] to [1a-36] are most preferred in view of optical properties of the obtainable liquid crystal display device.

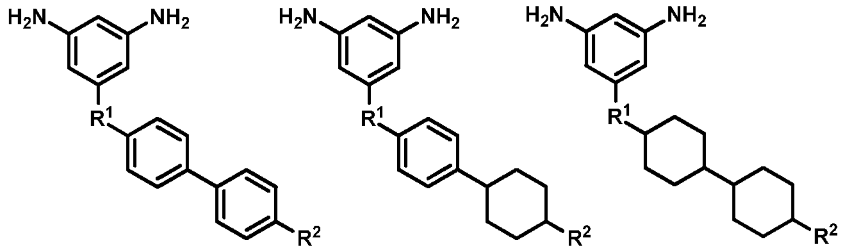

[1a-32] [1a-33] [1a-34]

wherein $R^1$ is $-CH_2O-$, and $R^2$ is each independently a $C_{3-12}$ alkyl group;

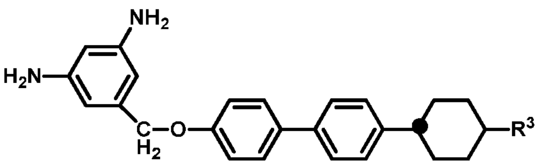

[1a-35]

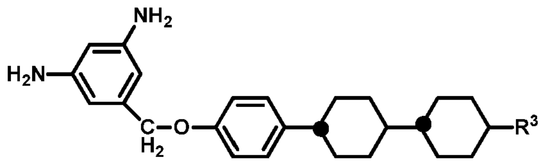

[1a-36]

wherein $R^3$ is each independently a $C_{3-12}$ alkyl group, and regarding the cis-trans isomerism, 1,4-cyclohexylene is a trans isomer.

Further, as a diamine having the first side chain structure represented by the above formula [1-2], diamines represented by the following formula [1b-1] to [1b-10] may be mentioned.

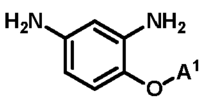

[1b-1]

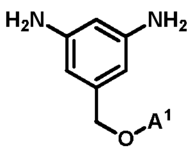

[1b-2]

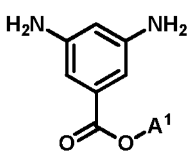

[1b-3]

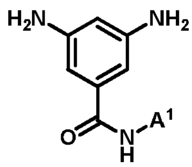

[1b-4]

wherein $A^1$ is each independently a $C_{1-22}$ alkyl group or fluorine-containing alkyl group;

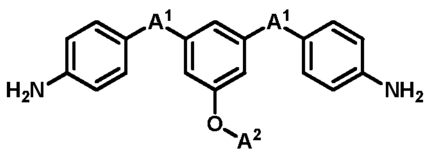

[1b-5]

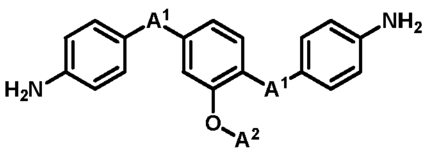

[1b-6]

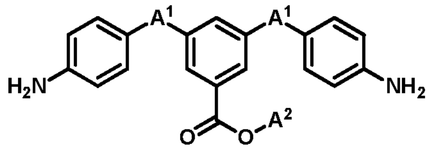

[1b-7]

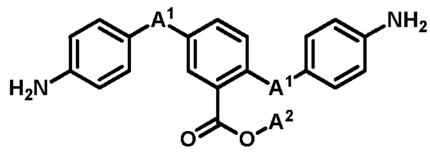

[1b-8]

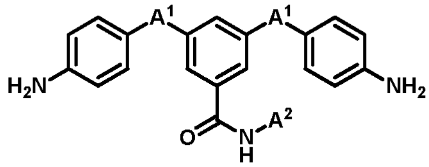

[1b-9]

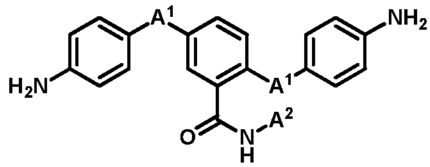

[1b-10]

wherein $A^1$ is each independently at least one binding group selected from the group consisting of -COO-, -OCO-, -CONH-, -NHCO-, $-CH_2-$, -O-, -CO- and -NH-, and $A^2$ is each independently a $C_{1-22}$ linear or branched alkyl group, or a $C_{1-22}$ linear or branched fluorine-containing alkyl group.

The proportion of the first side chain type diamine is preferably from 10 to 80 mol%, more preferably from 20 to 70 mol% based on the entire diamine component, in view of the vertical alignment property of the liquid crystal and the adhesion between the liquid crystal layer and the vertical liquid crystal alignment film in the obtainable liquid crystal display device.

Further, the first side chain type diamine may be used alone or in combination of two or more depending upon the solubility of the polyimide-based polymer in a solvent, the vertical alignment property of the liquid crystal when a vertical liquid crystal alignment film is formed, and optical properties of the obtainable liquid crystal display device.

As a method for introducing the second side chain structure to the polyimide-based polymer, it is preferred to use a diamine having the second side chain structure as a part of the material. It is particularly preferred to use a diamine represented by the following formula [2a] (hereinafter sometimes referred to as a second side chain type diamine).

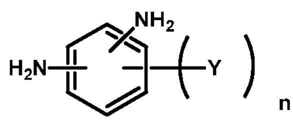

[2a]

Y is the structure represented by the above formula [2], and the definitions and preferred combinations of $Y^1$, $Y^2$, $Y^3$ and $Y^4$ are as defined for the above formula [2].

n is an integer of from 1 to 4. It is preferably an integer of 1.

Specifically, for example, diamines represented by the following formulae [2a-1] to [2a-9] may be mentioned.

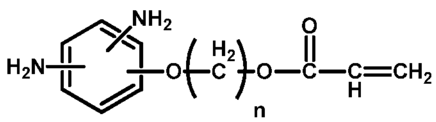

[2a-1]

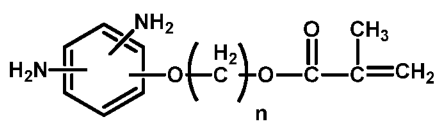

[2a-2]

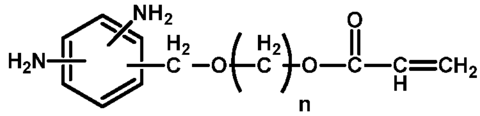

[2a-3]

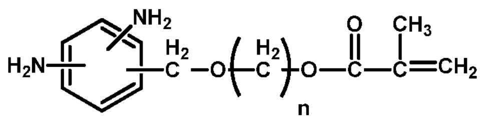

[2a-4]

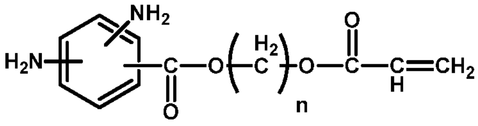

[2a−5]

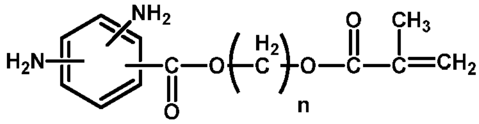

[2a−6]

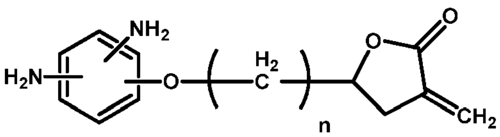

[2a−7]

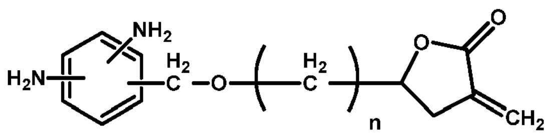

[2a−8]

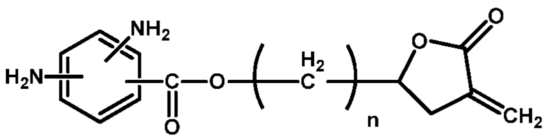

[2a−9]

wherein n is each independently an integer of from 2 to 12.

Among the above formulae [2a-1] to [2a-9], particularly preferred as the diamine are diamines of the formulae [2a-1], [2a-2], [2a-5], [2a-6] and [2a-9] in view of the optical properties of the obtainable liquid crystal display device. In the formulae, n is each independently preferably an integer of from 2 to 10.

The proportion of the second side chain type diamine is preferably from 1 to 50 mol%, more preferably from 1 to 40 mol%, particularly preferably from 5 to 40 mol% based on the entire diamine component, in view of the vertical alignment property of the liquid crystal and adhesion of the liquid crystal layer and the vertical liquid crystal alignment film in the obtainable liquid crystal display device.

Further, the second side chain type diamine may be used alone or in combination of two or more depending upon the solubility of the polyimide-based polymer in a solvent, the vertical alignment property of the liquid crystal when a vertical liquid crystal alignment film is formed, and optical properties of the obtainable liquid crystal display device.

The diamine component to prepare the polyimide-based polymer preferably contains a diamine represented by the following formula [4a] (hereinafter sometimes referred to as a third diamine):

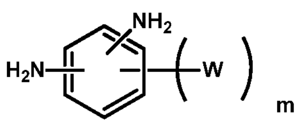

[4a]

W is at least one substituent selected from the group consisting of the following formulae [4-1] to [4-4]. m is an integer of from 1 to 4, preferably 1.

$-(CH_2)_a-OH$ [4-1]

$-(CH_2)_b-COOH$ [4-2]

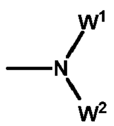

[4−3]

$-W^3$ [4-4]

In the above formulae, a is an integer of from 0 to 4, and in view of availability of the material and easiness of preparation, it is preferably an integer of 0 or 1. b is an integer of from 0 to 4, and in view of availability of the material and easiness of preparation, it is preferably an integer of 0 or 1. $W^1$ and $W^2$ are each independently a C1-12 hydrocarbon group. $W^3$ is a $C_{1-5}$ alkyl group.

Specific structures of the third diamine represented by the formula [4a] will be shown below, however, the third diamine is not limited to such specific examples.

As the third diamine, for example, 2,4-dimethyl-m-phenylenediamine, 2,6-diaminotoluene, 2,4-diaminophenol, 3,5-diaminophenol, 3,5-diaminobenzyl alcohol, 2,4-diaminobenzyl alcohol, 4,6-diaminoresorcinol, 2,4-diaminobenzoic acid, 2,5-diaminobenzoic acid, 3,5-diaminobenzoic acid, and diamines of structures represented by the following formulae [4a-1] to [4a-6] may be mentioned.

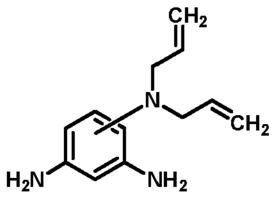
[4a−1]

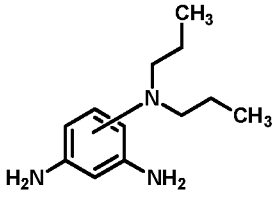
[4a−2]

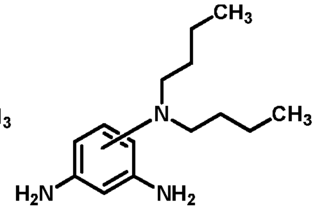
[4a−3]

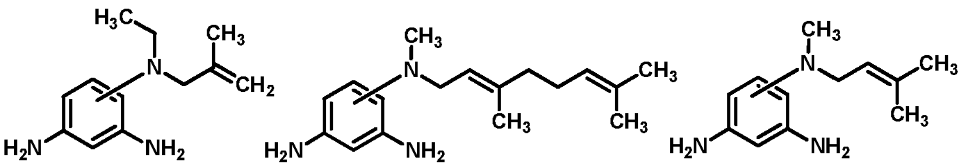
[4a−4] [4a−5] [4a−6]

Among them, preferred is 2,4-diaminophenol, 3,5-diaminophenol, 3,5-diaminobenzyl alcohol, 2,4-diaminobenzyl alcohol, 4,6-diaminoresorcinol, 2,4-diaminobenzoic acid, 2,5-diaminobenzoic acid, 3,5-diaminobenzoic acid, or a diamine represented by the formula [4a-1], [4a-2] or [4a-3]. Particularly preferred is 2,4-diaminophenol, 3,5-diaminophenol, 3,5-diaminobenzyl alcohol, 3,5-diaminobenzoic acid, or a diamine represented by the formula [4a-1] or [4a-2], in view of the solubility of the polyimide-based polymer in a solvent and optical properties of the obtainable liquid crystal display device.

The third diamine may be used alone or in combination of two or more depending upon the solubility of the polyimide-based polymer in a solvent, the vertical alignment property of the liquid crystal when a vertical liquid crystal alignment film is formed, and optical properties of the obtainable liquid crystal display device.

The diamine component to prepare the polyimide-based polymer may contain, within a range not to impair the effects of the present invention, a diamine (hereinafter sometimes referred to as other diamine) other than the diamine represented by the above formula [1a], [2a] or [4a]. Specific examples of such other diamine will be described below, however, other diamine is not limited to such specific examples.

Other diamine may, for example, be m-phenylenediamine, p-phenylenediamine, 4,4'-diaminobiphenyl, 3,3'-dimethyl-4,4'-diaminobiphenyl, 3,3'-dimethoxy-4,4'-diaminobiphenyl, 3,3'-dihydroxy-4,4'-diaminobiphenyl, 3,3'-dicarboxy-4,4'-diaminobiphenyl, 3,3'-difluoro-4,4'-diaminobiphenyl, 3,3'-trifluoromethyl-4,4'-diaminobiphenyl, 3,4'-diaminobiphenyl, 3,3'-diaminobiphenyl, 2,2'-diaminobiphenyl, 2,3'-diaminobiphenyl, 4,4'-diaminodiphenylmethane, 3,3'-diaminodiphenylmethane, 3,4'-diaminodiphenylmethane, 2,2'-diaminodiphenylmethane, 2,3'-diaminodiphenylmethane, 4,4'-diaminodiphenyl ether, 3,3'-diaminodiphenyl ether, 3,4'-diaminodiphenyl ether, 2,2'-diaminodiphenyl ether, 2,3'-diaminodiphenyl ether, 4,4'-sulfonyldianiline, 3,3'-sulfonyldianiline, bis(4-aminophenyl)silane, bis(3-aminophenyl)silane, dimethyl-bis(4-aminophenyl)silane, dimethyl-bis(3-aminophenyl)silane, 4,4'-thiodianiline, 3,3'-thiodianiline, 4,4'-diaminodiphenylamine, 3,3'-diaminodiphenylamine, 3,4'-diaminodiphenylamine, 2,2'-diaminodiphenylamine, 2,3'-diaminodiphenylamine, N-methyl(4,4'-diaminodiphenyl)amine, N-methyl(3,3'-diaminodiphenyl)amine, N-methyl(3,4'-diaminodiphenyl)amine, N-methyl(2,2'-diaminodiphenyl)amine, N-methyl(2,3'-diaminodiphenyl)amine, 4,4'-diaminobenzophenone, 3,3'-diaminobenzophenone, 3,4'-diaminobenzophenone, 1,4-diaminonaphthalene, 2,2'-diaminobenzophenone, 2,3'-diaminobenzophenone, 1,5-diaminonaphthalene, 1,6-diaminonaphthalene, 1,7-diaminonaphthalene, 1,8-diaminonaphthalene, 2,5-diaminonaphthalene, 2,6-diaminonaphthalene, 2,7-diaminonaphthalene, 2,8-diaminonaphthalene, 1,2-bis(4-aminophenyl)ethane, 1,2-bis(3-aminophenyl)ethane, 1,3-bis(4-aminophenyl)propane, 1,3-bis(3-aminophenyl)propane, 1,4-bis(4-aminophenyl)butane, 1,4-bis(3-aminophenyl)butane, bis(3,5-diethyl-4-aminophenyl)methane, 1,4-bis(4-aminophenoxy)benzene, 1,3-bis(4-aminophenoxy)benzene, 1,4-bis(4-aminophenyl)benzene, 1,3-bis(4-aminophenyl)benzene, 1,4-bis(4-aminobenzyl)benzene, 1,3-bis(4-aminophenoxy)benzene, 4,4'-[1,4-phenylenebis(methylene)]dianiline, 4,4'-[1,3-phenylenebis(methylene)]dianiline, 3,4'-[1,4-phenylenebis(methylene)]dianiline, 3,4'-[1,3-phenylenebis(methylene)]dianiline, 3,3'-[1,4-phenylenebis(methylene)]dianiline, 3,3'-[1,3-phenylenebis(methylene)]dianiline, 1,4-phenylenebis[(4-aminophenyl)methanone], 1,4-phenylenebis[(3-aminophenyl)methanone], 1,3-phenylenebis[(4-aminophenyl)methanone], 1,3-phenylenebis[(3-aminophenyl)methanone], 1,4-phenylenebis(4-aminobenzoate), 1,4-phenylenebis(3-aminobenzoate), 1,3-phenylenebis(4-aminobenzoate), 1,3-phenylenebis(3-aminobenzoate), bis(4-aminophenyl)terephthalate, bis(3-aminophenyl)terephthalate, bis(4-aminophenyl)isophthalate, bis(3-aminophenyl)isophthalate, N,N'-(1,4-phenylene)bis(4-aminobenzamide), N,N'-(1,3-phenylene)bis(4-aminobenzamide), N,N'-(1,4-phenylene)bis(3-aminobenzamide), N,N'-(1,3-phenylene)bis(3-aminobenzamide), N,N'-bis(4-aminophenyl)terephthalamide, N,N'-bis(3-aminophenyl)terephthalamide, N,N'-bis(4-aminophenyl)isophthalamide, N,N'-bis(3-aminophenyl)isophthalamide, 9,10-bis(4-aminophenyl)anthracene, 4,4'-bis(4-aminophenoxy)diphenylsulfone, 2,2'-bis[4-(4-aminophenoxy)phenyl]propane, 2,2'-bis[4-(4-aminophenoxy)phenyl]hexafluoropropane, 2,2'-bis(4-aminophenyl)hexafluoropropane, 2,2'-bis(3-aminophenyl)hexafluoropropane, 2,2'-bis(3-amino-4-methylphenyl)hexafluoropropane, 2,2'-bis(4-aminophenyl)propane, 2,2'-bis(3-aminophenyl)propane, 2,2'-bis(3-amino-4-methylphenyl)propane, 1,3-bis(4-aminophenoxy)propane, 1,3-bis(3-aminophenoxy)propane, 1,4-bis(4-aminophenoxy)butane, 1,4-bis(3-aminophenoxy)butane, 1,5-bis(4-aminophenoxy)pentane, 1,5-bis(3-aminophenoxy)pentane, 1,6-bis(4-aminophenoxy)hexane, 1,6-bis(3-aminophenoxy)hexane, 1,7-bis(4-aminophenoxy)heptane, 1,7-(3-aminophenoxy)heptane, 1,8-bis(4-aminophenoxy)octane, 1,8-bis(3-aminophenoxy)octane, 1,9-bis(4-aminophenoxy)nonane, 1,9-bis(3-aminophenoxy)nonane, 1,10-bis(4-aminophenoxy)decane, 1,10-bis(3-aminophenoxy)decane, 1,11-bis(4-aminophenoxy)undecane, 1,11-bis(3-aminophenoxy)undecane, 1,12-bis(4-aminophenoxy)dodecane, 1,12-bis(3-aminophenoxy)dodecane, bis(4-aminocyclohexyl)methane, bis(4-amino-3-methylcyclohexyl)methane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane or 1,12-diaminododecane.

Further, as other diamine, within a range not to impair the effects of the present invention, a diamine represented by any of the following formulae [DA1] to [DA11] may be used.

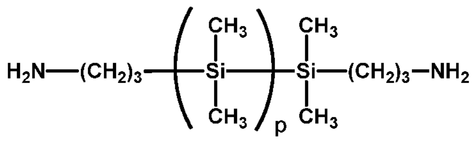
[DA1]

wherein p is an inter of from 1 to 10;

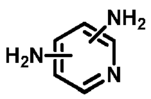
[DA2]

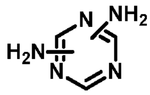
[DA3]

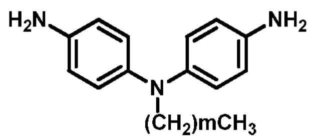
[DA4]

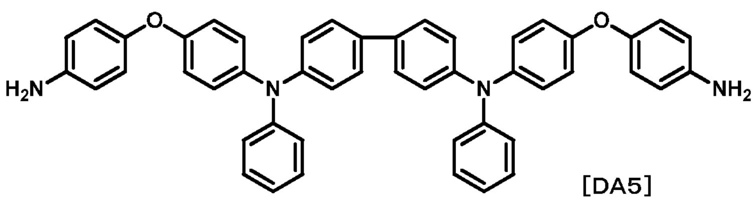
[DA5]

wherein m is an integer of from 0 to 3;

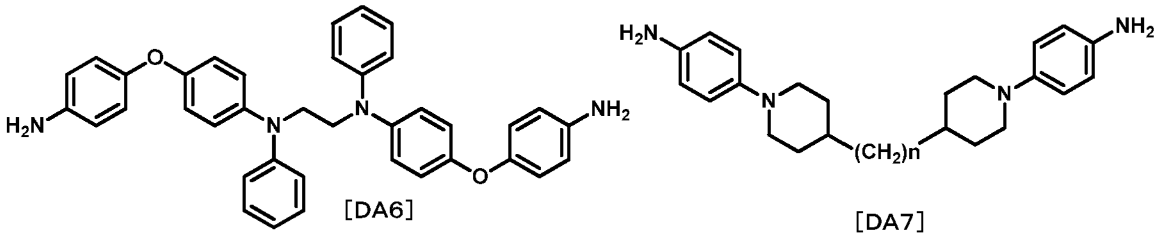

[DA6] [DA7]

wherein n is an integer of from 1 to 5;

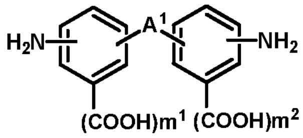

[DA8]

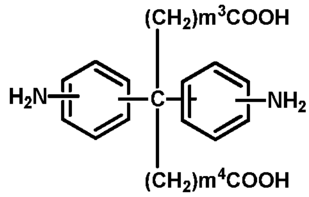

[DA9]

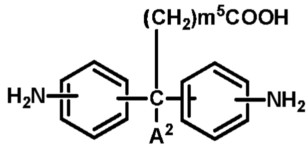

[DA10]

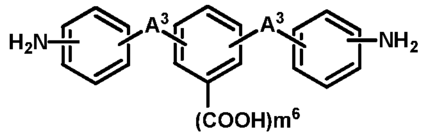

[DA11]

wherein $A^1$ is at least one member selected from the group consisting of a single bond, $-CH_2-$, $-C_2H_4-$, $-C(CH_3)_2-$, $-CF_2-$, $-C(CF_3)_2-$, -O-, -CO-, -NH-, $-N(CH_3)-$, -CONH-, -NHCO-, $-CH_2O-$, $-OCH_2-$, -COO-, -OCO-, $-CON(CH_3)-$ and $-N(CH_3)CO-$, $m^1$ and $m^2$ are each independently an integer of from 0 to 4, provided that $m^1+m^2$ is an integer of from 1 to 4, $m^3$ and $m^4$ are each independently an integer of from 1 to 5, $A^2$ is a $C_{1-5}$ linear or branched alkyl group, $m^5$ is an integer of from 1 to 5, $A^3$ is at least one member selected from the group consisting of a single bond, $-CH_2-$, $-C_2H_4-$, $-C(CH_3)_2-$, $-CF_2-$, $-C(CF_3)_2-$, -O-, -CO-, -NH-, $-N(CH_3)-$, -CONH-, -NHCO-, $-CH_2O-$, $-OCH_2-$, -COO-, -OCO-, $-CON(CH_3)-$ and $-N(CH_3)CO-$, and $m^6$ is an integer of from 1 to 4.

Further, within a range not to impair the effects of the present invention, a diamine represented by the following formula [DA12] or [DA13] may be used.

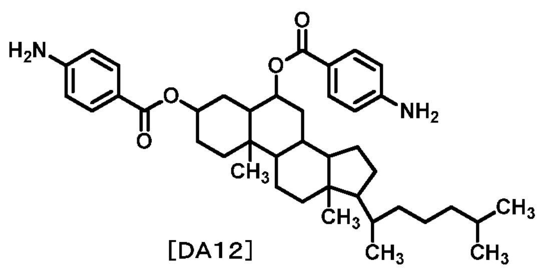

[DA12]

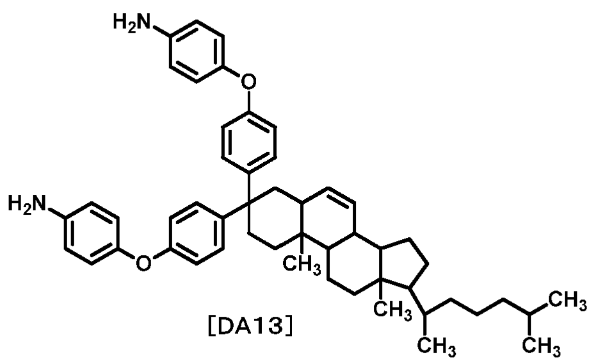

[DA13]

Such other dimaine may be used alone or in combination of two or more depending upon the solubility of the polyimide-based polymer in a solvent, the vertical alignment property of the liquid crystal when a vertical liquid crystal alignment film is formed, and optical properties of the obtainable liquid crystal display device.

As the tetracarboxylic acid component to prepare the polyimide-based polymer, it is preferred to use a tetracarboxylic acid dianhydride represented by the following formula [3] or its tetracarboxylic acid derivative i.e. tetracarboxylic acid, a tetracarboxylic acid dihalide, a tetracarboxylic acid dialkyl ester or a tetracarboxylic acid dialkyl ester dihalide (they will sometimes be generally referred to as a specific tetracarboxylic acid component).

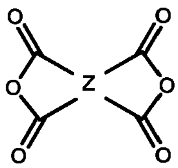
[3]

Z is at least one structure selected from the group consisting of structures represented by the following formulae [3a] to [3k]:

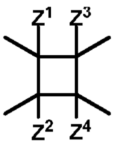
[3a]

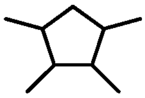
[3b]

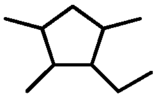
[3c]

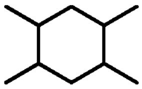
[3d]

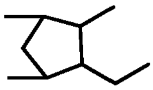
[3e]

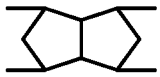
[3f ]

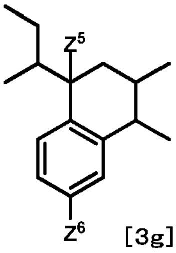
[3g]

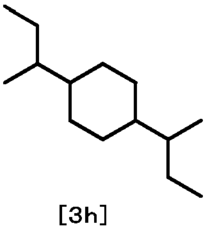
[3h]

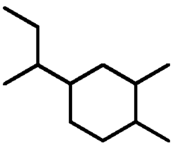
[3i ]

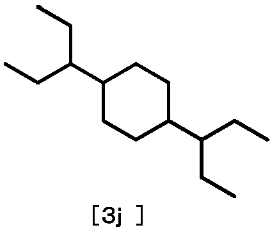
[3j ]

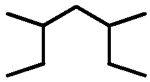
[3k]

$Z^1$ to $Z^4$ are each independently at least one member selected from the group consisting of a hydrogen atom, a methyl group, a chlorine atom and a benzene ring.

$Z^5$ and $Z^6$ are each independently a hydrogen atom or a methyl group.

Z in the structure represented by the formula [3] is preferably a structure represented by the formula [3a], [3c], [3d], [3e], [3f], [3g] or [3k] in view of easiness of preparation and polymerizability when a polymer is produced. It is more preferably a structure represented by the formula [3a], [3e], [3f], [3g] or [3k], particularly preferably a structure represented by the formula [3e], [3f], [3g] or [3k].

The proportion of the specific tetracarboxylic acid component is preferably at least 1 mol% based on the entire tetracarboxylic acid component. It is more preferably at least 5 mol%, further preferably at least 10 mol%. It is particularly preferably from 10 to 90 mol% in view of optical properties of the obtainable liquid crystal display device.

Further, in a case where the specific tetracarboxylic acid component of the structure represented by the above formula [3e], [3f], [3g] or [3k] is used, desired effects will be obtained when its amount is at least 20 mol% based on the entire tetracarboxylic acid component. It is preferably at least 30 mol%. Further, the tetracarboxylic acid component may be entirely composed of the tetracarboxylic acid component of the structure represented by the formula [3e], [3f], [3g] or [3k].

For the polyimide-based polymer, within a range not to impair the effects of the present invention, other tetracarboxylic acid component other than the specific tetracarboxylic acid component may be used. As such other tetracarboxylic acid component, the following tetracarboxylic acid, tetracarboxylic acid dianhydride, dicarboxylic acid dihalide, dicarboxylic acid dialkyl ester or dialkyl ester dihalide may be mentioned.

For example, pyromellitic acid, 2,3,6,7-naphthalenetetracarboxylic acid, 1,2,5,6-naphthalenetetracarboxylic acid, 1,4,5,8-naphthalenetetracarboxylic acid, 2,3,6,7-anthracenetetracarboxylic acid, 1,2,5,6-anthracenetetracarboxylic acid, 3,3',4,4'-biphenyltetracarboxylic acid, 2,3,3',4'-biphenyltetracarboxylic acid, bis(3,4-dicarboxylphenyl) ether, 3,3',4,4'-benzophenonetetracarboxylic acid, bis(3,4-dicarboxyphenyl) sulfone, bis(3,4-dicarboxyphenyl)methane, 2,2-bis(3,4-dicarboxylphenyl)propane, 1,1,1,3,3,3-hexafluoro-2,2-bis(3,4-dicarboxyphenyl)propane, bis(3,4-dicarboxyphenyl)dimethylsilane, bis(3,4-dicarboxyphenyl)diphenylsilane, 2,3,4,5-pyridinetetracarboxylic acid, 2,6-bis(3,4-dicarboxyphenyl)pyridine, 3,3',4,4'-diphenylsulfonetetracarboxylic acid, 3,4,9,10-perylenetetracarboxylic acid or 1,3-diphenyl-1,2,3,4-cyclobutanetetracarboxylic acid may be mentioned.

Each of the specific tetracarboxylic acid component and other tetracarboxylic acid component may be used alone or in combination of two or more depending upon the solubility of the polyimide-based polymer in a solvent, the vertical alignment property of the liquid crystal when a vertical liquid crystal alignment film is formed, and optical properties

of the obtainable liquid crystal display device.

In a case where the polyimide-based polymer is used as the specific polymer, as a method for introducing the first side chain structure and the second side chain structure to the polyimide-based polymer, it is preferred to use the first side chain type diamine represented by the above formula [1a] and the second side chain type diamine represented by the formula [2a]. On that occasion, as described above, these two diamines may be used as a part of the material to prepare the polyimide-based polymer, which is used as the specific polymer, or polyimide-based polymers obtained by using the respective diamines as the material may be mixed to obtain the specific polymer.

In a case where the polyimide-based polymers are mixed to obtain the specific polymer, the proportion of the polyimide-based polymer using the second side chain type diamine as a part of the material is preferably from 1 to 100 parts by mass per 100 parts by mass of the polyimide-based polymer using the first side chain type diamine as a part of the material. The proportion is more preferably from 3 to 100 parts by mass, particularly preferably from 5 to 70 parts by mass.

The method for preparing the polyimide-based polymer is not particularly limited. Usually, the polyimide-based polymer is obtained by reacting the diamine component and the tetracarboxylic acid component. Usually, at least one tetracarboxylic acid component selected from the group consisting of a tetracarboxylic acid and its derivative and a diamine component consisting of one or more types of diamine are reacted to obtain a polyamide acid. Specifically, a method of subjecting a tetracarboxylic acid dianhydride and a primary or secondary diamine to polycondensation to obtain a polyamide acid, a method of subjecting a tetracarboxylic acid and a primary or secondary diamine to dehydration polycondensation to obtain a polyamide acid, or a method of subjecting a dicarboxylic acid dihalide and a primary or secondary diamine to polycondensation to obtain a polyamide acid may be employed.

To obtain a polyamide acid alkyl ester, a method of subjecting a tetracarboxylic acid having a carboxylic acid group dialkyl-esterified and a primary or secondary diamine to polycondensation, a method of subjecting a dicarboxylic acid dihalide having a carboxylic acid group dialkyl-esterified and a primary or secondary diamine to polycondensation, or a method of converting a carboxy group of a polyamide acid to an ester may be employed.

To obtain a polyimide, a method of cyclizing the above polyamide acid or polyamide acid alkyl ester to obtain a polyimide may be employed.

The reaction of the diamine component and the tetracarboxylic acid component is carried out usually in a solvent. The solvent used is not particularly limited so long as the produced polyimide precursor is soluble in it. Specific examples of the solvent used for the reaction will be described below, however, the solvent is not limited to such specific examples.

For example, N-methyl-2-pyrrolidone, N-ethyl-2-pyrrolidone or $\gamma$-butyrolactone, N,N-dimethylformamide, N,N-dimethylacetamide, dimethyl sulfoxide or 1,3-dimethyl-imidazolidinone may be mentioned. In a case where the solubility of the polyimide precursor in a solvent is high, methyl ethyl ketone, cyclohexanone, cyclopentanone, 4-hydroxy-4-methyl-2-pentanone or a solvent represented by the following formula [D-1] to [D-3] may be used.

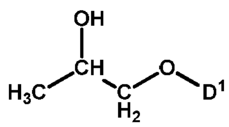

[D1]

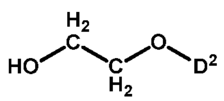

[D2]

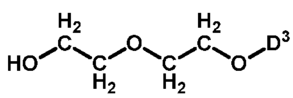

[D3]

wherein $D^1$ is a $C_{1-3}$ alkyl group, $D^2$ is a $C_{1-3}$ alkyl group, and $D^3$ is a $C_{1-4}$ alkyl group.

Such a solvent may be used alone or as mixed. Further, a solvent in which the polyimide precursor is not soluble may be used as mixed with the above solvent within a range where the formed polyimide precursor is not precipitated. Further, since moisture in the solvent will inhibit the polymerization reaction and may cause hydrolysis of the formed polyimide precursor, the solvent is preferably one which is dehydrated and dried.

When the diamine component and the tetracarboxylic acid component are reacted in the solvent, a method of adding the tetracarboxylic acid component as it is or as dispersed or dissolved in a solvent, to a liquid having the diamine component dispersed or dissolved in a solvent with stirring, or on the contrary, a method of adding the diamine component to a liquid having the tetracarboxylic acid component dispersed or dissolved in a solvent, or a method of alternately adding the diamine component and the tetracarboxylic acid component may, for example, be mentioned, and any of these methods may be employed. Further, in a case where each of the diamine component and the tetracarboxylic acid component comprises a plurality of compounds, they may be reacted as mixed, the respective compounds may be sequentially reacted separately, or the compounds may be separately reacted to form low molecular weight products, which are mixed and reacted to obtain a polymer.

On that occasion, the polymerization temperature is optionally selected from -20 to 150°C, and is preferably

from -5 to 100°C. Further, the reaction may be carried out at an optional concentration. If the concentration is too low, a high molecular weight polymer will hardly be obtained, and if the concentration is too high, the viscosity of the reaction liquid will be too high, whereby uniform mixing will be difficult. Accordingly, the concentration is preferably from 1 to 50 mass%, more preferably from 5 to 30 mass%. The reaction may be carried out at a high concentration at the initial stage of the reaction, and then a solvent may be added.

In the polymerization reaction of the polyimide precursor, the ratio of the total number of moles of the diamine component to the total number of moles of the tetracarboxylic acid component is preferably from 0.8 to 1.2. Like usual polycondensation reaction, the closer to 1.0 the molar ratio is, the higher the molecular weight of the polyimide precursor to be formed will be.

The polyimide is a polyimide obtained by cyclization of the polyimide precursor, and in this polyimide, the cyclization ratio (also called an imidization degree) of amide acid groups is not necessarily 100%, and may optionally be adjusted depending upon the application and the purpose of use. In the present invention, it is preferably from 30 to 80%, more preferably from 40 to 70%.

As a method of imidizing the polyimide precursor, thermal imidization of heating a solution of the polyimide precursor as it is, or catalytic imidization of adding a catalyst to a solution of the polyimide precursor may be mentioned.

In the case of thermal imidization of the polyimide precursor in a solution, the temperature is preferably from 100 to 400°C, more preferably from 120 to 250°C, and it is preferably carried out while water formed by the imidization reaction is discharged out of the system.

The catalytic imidization of the polyimide precursor may be carried out by adding a basic catalyst and an acid anhydride to a solution of the polyimide precursor, followed by stirring at from -20 to 250°C, preferably from 0 to 180°C. The amount of the basic catalyst is from 0.5 to 30 molar times, preferably from 2 to 20 molar times the amide acid groups, and the amount of the acid anhydride is from 1 to 50 molar times, preferably from 3 to 30 molar times the amide acid groups.

The basic catalyst may be pyridine, triethylamine, trimethylamine, tributylamine or trioctylamine. Among them, polyimide is preferred, which has appropriate basicity to let the reaction proceed. The acid anhydride may be acetic anhydride, trimellitic anhydride or pyromellitic anhydride. Among them, it is preferred to use acetic anhydride, whereby purification after completion of the reaction will easily be carried. The imidization degree by catalytic imidization may be controlled by adjusting the catalyst amount, the reaction temperature and the reaction time.

To recover the formed polyimide precursor or polyimide from the reaction solution of the polyimide precursor or the polyimide, the reaction solution is poured into a solvent to precipitate the product. The solvent to be used for precipitation may, for example, be methanol, ethanol, isopropyl alcohol, acetone, hexane, butyl cellosolve, heptane, methyl ethyl ketone, methyl isobutyl ketone, toluene, benzene or water. The reaction solution is poured into the solvent, and the precipitated polymer is recovered by filtration, and dried under normal pressure or under reduced pressure at room temperature or with heating. Further, by carrying out an operation of dissolving the precipitated and recovered polymer again in an organic solvent and precipitating and recovering it again for from 2 to 10 times, impurities in the polymer can be reduced. The solvent in such a case may, for example, be an alcohol, a ketone or a hydrocarbon, and it is preferred to use three or more types of the solvents selected from them, whereby the purification efficiency will further be improved.

The molecular weight of the polyimide-based polymer is preferably from 5,000 to 1,000,000, more preferably from 10,000 to 150,000, as the weight average molecular weight measured by a GPC (Gel Permeation Chromatography) method, considering the strength of the obtainable liquid crystal alignment film, workability at the time of forming the liquid crystal alignment film, and coating property.

<Liquid crystal aligning agent>

The liquid crystal aligning agent in the present invention is a solution for forming a vertical liquid crystal alignment film and is a solution containing the specific polymer having the first side chain structure and the second side chain structure, and a solvent.

All the polymer components in the liquid crystal aligning agent may be the specific polymers, or other polymer may be mixed. In such a case, the content of other polymer is from 0.5 to 15 parts by mass, preferably from 1 to 10 parts by mass per 100 parts by mass of the specific polymer. As such other polymer, the above polymer having no second side chain structure may be mentioned.

The content of the solvent in the liquid crystal aligning agent may be properly selected in view of the method of applying the liquid crystal aligning agent and with a view to obtaining a desired film thickness. Particularly, with a view to forming a more uniform vertical liquid crystal alignment film by coating, the content of the solvent in the liquid crystal aligning agent is preferably from 50 to 99.9 mass%, more preferably from 60 to 99 mass%, particularly preferably from 65 to 99 mass%.

The solvent used for the liquid crystal aligning agent is not particularly limited so long as a specific polymer is soluble in it. Particularly in a case where the specific polymer is the polyimide precursor, the polyimide, a polyamide or

a polyester, or in a case where the solubility of an acrylic polymer, methacrylic polymer, novolac resin, polyhydroxystyrene, cellulose or polysiloxane in a solvent is low, it is preferred to use the following solvent (also called class A solvent).

For example, N,N-dimethylformamide, N,N-dimethylacetamide, N-methyl-2-pyrrolidone, N-ethyl-2-pyrrolidone, dimethyl sulfoxide, γ-butyrolactone, 1,3-dimethyl-imidazolidinone, methyl ethyl ketone, cyclohexanone, cyclopentanone or 4-hydroxy-4-methyl-2-pentanone may be mentioned. Among them, it is preferred to use N-methyl-2-pyrrolidone, N-ethyl-2-pyrrolidone or γ-butyrolactone. They may be used alone or in combination as a mixture.

In a case where the specific polymer is an acrylic polymer, a methacrylic polymer, a novolac resin, a polyhydroxystyrene, a cellulose or a polysiloxane, or further in a case where the specific polymer is the polyimide precursor, the polyimide, a polyamide or a polyester and the solubility of such a specific polymer in a solvent is high, the following solvent (also called class B solvent) may be employed.

For example, ethanol, isopropyl alcohol, 1-butanol, 2-butanol, isobutyl alcohol, tert-butyl alcohol, 1-pentanol, 2-pentanol, 3-pentanol, 2-methyl-1-butanol, isopentyl alcohol, tert-pentyl alcohol, 3-methyl-2-butanol, neopentyl alcohol, 1-hexanol, 2-methyl-1-pentanol, 2-methyl-2-pentanol, 2-ethyl-1-butanol, 1-heptanol, 2-heptanol, 3-heptanol, 1-octanol, 2-octanol, 2-ethyl-1-hexanol, cyclohexanol, 1-methylcyclohexanol, 2-methylcyclohexanol, 3-methylcyclohexanol, 1,2-ethanediol, 1,2-propanediol, 1,3-propanediol, 1,2-butanediol, 1,3-butanediol, 1,4-butanediol, 2,3-butanediol, 1,5-pentanediol, 2-methyl-2,4-pentanediol, 2-ethyl-1,3-hexanediol, dipropyl ether, dibutyl ether, dihexyl ether, dioxane, ethylene glycol dimethyl ether, ethylene glycol diethyl ether, ethylene glycol dibutyl ether, 1,2-butoxyethane, diethylene glycol dimethyl ether, diethylene glycol diethyl ether, diethylene glycol methyl ethyl ether, diethylene glycol dibutyl ether, 2-pentanone, 3-pentanone, 2-hexanone, 2-heptanone, 4-heptanone, 3-ethoxybutyl acetate, 1-methylpentyl acetate, 2-ethybutyl acetate, 2-ethylhexyl acetate, ethylene glycol monoacetate, ethylene glycol diacetate, propylene carbonate, ethylene carbonate, 2-(methoxymethoxy)ethanol, ethylene glycol monobutyl ether, ethylene glycol monoisoamyl ether, ethylene glycol monohexyl ether, 2-(hexyloxy)ethanol, furfuryl alcohol, diethylene glycol, propylene glycol, propylene glycol monobutyl ether, 1-(butoxyethoxy)propanol, propylene glycol monomethyl ether acetate, dipropylene glycol, dipropylene glycol monomethyl ether, dipropylene glycol monoethyl ether, tripropylene glycol monomethyl ether, ethylene glycol monomethyl ether acetate, ethylene glycol monoethyl ether acetate, ethylene glycol monobutyl ether acetate, ethylene glycol monoacetate, ethylene glycol diacetate, diethylene golycol monoethyl ether acetate, diethylene glycol monobutyl ether acetate, 2-(2-ethoxyethoxy)ethyl acetate, diethylene glycol acetate, triethylene glycol, triethylene glycol monomethyl ether, triethylene glycol monoethyl ether, methyl lactate, ethyl lactate, methyl acetate, ethyl acetate, n-butyl acetate, acetic acid propylene glycol monoethyl ether, methyl pyruvate, ethyl pyruvate, methyl 3-methoxypropionate, methyl ethyl 3-ethoxypropionate, ethyl 3-methoxypropionate, 3-ethoxypropionic acid, 3-methoxypropionic acid, propyl 3-methoxypropionate, butyl 3-methoxypropionate, lactic acid methyl ester, lactic acid ethyl ester, lactic acid n-propyl ester, lactic acid n-butyl ester, lactic acid isoamyl ester, or a solvent represented by any of the above formulae [D-1] to [D-3] may, for example, be mentioned.

Among them, it is preferred to use 1-hexanol, cyclohexanol, 1,2-ethanediol, 1,2-propanediol, propylene glycol monobutyl ether, ethylene glycol monobutyl ether, dipropylene glycol dimethyl ether, cyclohexanone, cyclopentanone or a solvent represented by any of the above formulae [D1] to [D3] is preferably used.

Further, when such a solvent is used, for the purpose of improving the coating property of the liquid crystal aligning agent, it is preferred to use N-methyl-2-pyrrolidone, N-ethyl-2-pyrrolidone or γ-butyrolactone which is the above class A solvent in combination. It is more preferred to use γ-butyrolactone in combination.

Since such a class B solvent can improve the coating property and the surface smoothness when the liquid crystal aligning agent is applied to form a vertical liquid crystal alignment film, in a case where the polyimide precursor, the polyimide, a polyamide or a polyester is used as the specific polymer, such a class B solvent is preferably used in combination with the above class A solvent. In such a case, the proportion of the class B solvent is preferably from 1 to 99 mass% based on the entire solvent contained in the liquid crystal aligning agent. It is more preferably from 10 to 99 mass%, further preferably from 20 to 95 mass%.

In the present invention, at least one generator (hereinafter sometimes referred to as a specific generator) selected from the group consisting of a photo-radical generator, a photo-acid generator and a photo-base generator is incorporated in the liquid crystal aligning agent.

The photo-radical generator is not particularly limited so long as radicals are generated by ultraviolet rays, and it may, for example, be an organic peroxide such as tert-butylperoxy-iso-butyrate, 2,5-dimethyl-2,5-bis(benzoyldioxy)hexane, 1,4-bis[α-(tert-butyldioxy)-iso-propoxy]benzene, di-tert-butyl peroxide, 2,5-dimethyl-2,5-bis(tert-butyldioxy)hexene hydroperoxide, α-(iso-propylphenyl)-iso-propyl hydroperoxide, 2,5-dimethylhexane, tert-butyl hydroperoxide, 1,1-bis(tert-butyldioxy)-3,3,5-trimethylcyclohexane, butyl-4,4-bis(tert-butyldioxy)valerate, cyclohexanone peroxide, 2,2',5,5'-tetra(tert-butylperoxycarbonyl)benzophenone, 3,3',4,4'-tetra(tert-butylperoxycarbonyl)benzophenone, 3,3',4,4'-tetra(tert-amylperoxycarbonyl)benzophenone, 3,3',4,4'-tetra(tert-hexylperoxycarbonyl)benzophenone, 3,3'-bis(tert-butylperoxycarbonyl)-4,4'-dicarboxybenzophenone, tert-butyl peroxybenzoate or di-tert-butyldiperoxy isophthalate, a quinone such as 9,10-anthraquinone, 1-chloroanthraquinone, 2-chloroanthraquinone, octamethylanthraquinone or 1,2-benzanthraquinone, or a benzoin derivative such as benzoin methyl, benzoin ethyl ether, α-methyl benzoin or α-phenyl benzoin.

Further, the photo-acid generator and the photo-base generator are not particularly limited so long as an acid or a base is generated by ultraviolet rays and may, for example, be a triazine compound, an acetophenone derivative compound, a disulfone compound, a diazomethane compound, a sulfonic acid derivative compound, a diaryliodonium salt, a triarylsulfonium salt, a triarylphosphonium salt or an iron arene complex. More specifically, for example, diphenyliodonium chloride, diphenyliodonium trifluoromethanesulfonate, diphenyliodonium mesylate, diphenyliodonium tosylate, diphenyliodonium bromide, diphenyliodonium tetrafluoroborate, diphenyliodonium hexafluoroantimonate, diphenyliodonium hexafluoroarsenate, bis(p-tert-butylphenyl)iodonium hexafluorophosphate, bis(p-tert-butylphenyl)iodonium mesylate, bis(p-tert-butylphenyl)iodonium tosylate, bis(p-tert-butylphenyl)iodonium trifluoromethanesulfonate, bis(p-tert-butylphenyl)iodonium tetrafluoroborate, bis(p-tert-butylphenyl)iodonium chloride, bis(p-chlorophenyl)iodonium chloride, bis(p-chlorophenyl)iodonium tetrafluoroborate, triphenylsulfonium chloride, triphenylsulfonium bromide, tri(p-methoxyphenyl)sulfonium tetrafluoroborate, tri(p-methoxyphenyl)sulfonium hexafluorophosphonate, tri(p-ethoxyphenyl)sulfonium tetrafluoroborate, triphenylphosphonium chloride, triphenylphosphonium bromide, tri(p-methoxyphenyl)phosphonium tetrafluoroborate, tri(p-methoxyphenyl)phosphonium hexafluorophosphonate, tri(p-ethoxyphenyl)phosphonium tetrafluoroborate, bis[[(2-nitrobenzyl)oxy]carbonylhexane-1,6-diamine], nitrobenzylcyclohexyl carbamate, di(methoxybenzyl)hexamethylene dicarbamate, bis[[(2-nitrobenzyl)oxy]carbonylhexane-1,6-diamine], nitrobenzyl cyclohexyl carbamate or di(methoxybenzyl)hexamethylene dicarbamate may be mentioned.

Among them, it is preferred to use as the specific generator, a photo-radical generator, with a view to improving the adhesion between the liquid crystal layer and the vertical liquid crystal alignment film.

In the liquid crystal aligning agent, a compound (hereinafter sometimes referred to as a specific adhesive compound) having at least one structure selected from the group consisting of structures represented by the following formulae [b-1] to [b-8], is incorporated for the purpose of improving the adhesion between the liquid crystal layer and the vertical liquid crystal alignment film.

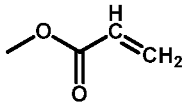
[b-1]

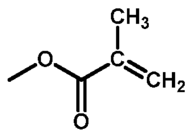
[b-2]

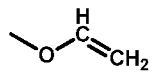
[b-3]

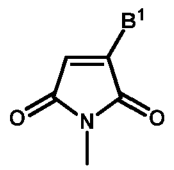
[b-4]

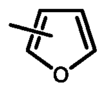
[b-5]

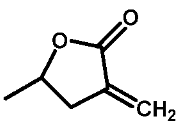
[b-6]

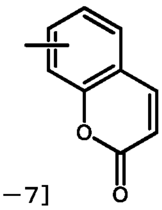
[b-7]

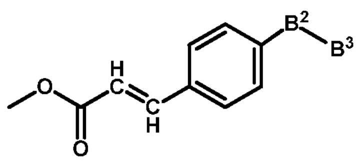
[b-8]

wherein $B^1$ is a hydrogen atom or a benzene ring, $B^2$ is at least one cyclic group selected from the group consisting of a benzene ring, a cyclohexane ring and a heterocyclic ring, and $B^3$ is at least one member selected from the group consisting of a C1-18 alkyl group, a $C_{1-18}$ fluorine-containing alkyl group, a $C_{1-18}$ alkoxy group and a $C_{1-18}$ fluorine-containing alkoxy group.

More specifically, it is preferred to use as the specific adhesive compound a compound represented by the following formula [6]:

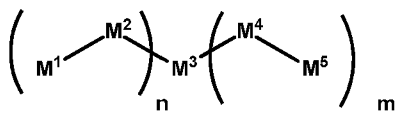
[6]

In the formula [6], $M^1$ is at least one structure selected from the group consisting of structures represented by the following formulae [a-1] to [a-7]. Among them, in view of easiness of preparation, preferred is the structure represented by the formula [a-1], [a-2], [a-3], [a-5] or [a-6]. More preferred is the structure represented by the formula [a-1], [a-3], [a-5] or [a-6].

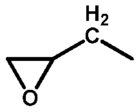
[a−1]

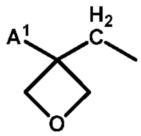
[a−2]

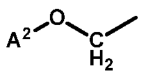
[a−3]

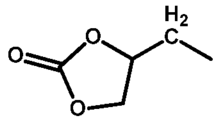
[a−4]

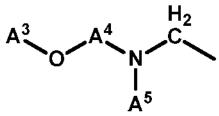
[a−5]

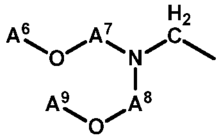
[a−6]

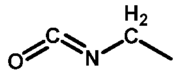
[a−7]

$A^1$ is a hydrogen atom or a $C_{1-5}$ alkyl group. In view of easiness of preparation, a hydrogen atom or a $C_{1-2}$ alkyl group is preferred. A hydrogen atom or a methyl group is more preferred.

$A^2$ is a hydrogen atom or a $C_{1-3}$ alkyl group. In view of easiness of preparation, a hydrogen atom or a $C_{1-2}$ alkyl group is preferred. A hydrogen atom or a methyl group is more preferred.

$A^3$, $A^5$, $A^6$ and $A^9$ are each independently a hydrogen atom or a $C_{1-3}$ alkyl group. In view of easiness of preparation, a hydrogen atom or a $C_{1-2}$ alkyl group is preferred. A hydrogen atom or a methyl group is more preferred.

$A^4$, $A^7$ and $A^8$ are each independently a $C_{1-3}$ alkylene group. In view of easiness of preparation, a $C_{1-2}$ alkylene group is preferred.

In the formula [6], $M^2$ is at least one binding group selected from the group consisting of a single bond, $-CH_2-$, -O-, -NH-, $-N(CH_3)-$, -CONH-, -NHCO-, $-CH_2O-$, $-OCH_2-$, -COO-, -OCO-, $-CON(CH_3)-$ and $-N(CH_3)CO-$. Among them, in view of easiness of preparation, it is preferably a single bond, $-CH_2-$, -O-, -NH-, -CONH-, -NHCO-, $-CH_2O-$, $-OCH_2-$, -COO-, -OCO-, $-CON(CH_3)-$ or $-N(CH_3)CO-$. It is more preferably a single bond, $-CH_2-$, -O-, -NH-, -CONH-, $-CH_2O-$, $-OCH_2-$, -COO- or -OCO-, particularly preferably a single bond, -O-, -CONH-, $-OCH_2-$, -COO- or -OCO-.

In the formula [6], $M^3$ is at least one member selected from the group consisting of a $C_{1-20}$ alkylene group, $-(CH_2-CH_2-O)_p-$ (wherein p is an integer of from 1 to 10), $-(CH_2-O-)_q-$ (wherein q is an integer of from 1 to 10), and a $C_{6-20}$ organic group having a benzene ring or a cyclohexane ring. In the above alkylene group, an optional $-CH_2$-group may be replaced with -COO-, -OCO-, -CONH-, NHCO-, -CO-, -S-, $-SO_2-$, $-CF_2-$, $-C(CF_3)_2-$, $-Si(CH_3)_2-$, $-OSi(CH_3)_2-$ or $-Si(CH_3)_2O-$, and a hydrogen atom bonded to an optional carbon atom may be replaced with a hydroxy group (OH group), a carboxy group (COOH group) or a halogen atom.

Among them, in view of easiness of preparation, preferred is a $C_{1-20}$ alkylene group, $-(CH_2-CH_2-O)_p-$ (wherein p is an integer of from 1 to 10), $-(CH_2-O-)_q-$ (wherein q is an integer of from 1 to 10) or a structure represented by any of the following formulae [c-1] to [c-5]. More preferred is a $C_{1-15}$ alkylene group, $-(CH_2-CH_2-O)_p-$ (wherein p is an integer of from 1 to 10), $-(CH_2-O-)_q-$ (wherein q is an integer of from 1 to 10), or a structure represented by the following formula [c-1], [c-3], [c-4] or [c-5]. Particularly preferred is a $C_{1-15}$ alkylene group, $-(CH_2-CH_2-O)_p-$ (wherein p is an integer of from 1 to 10) or a structure represented by the formula [c-1], [c-4] or [c-5].

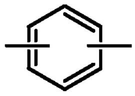
[c−1]

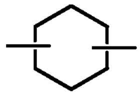
[c−2]

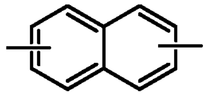
[c−3]

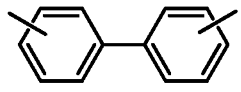
[c−4]

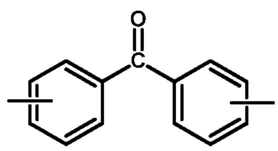
[c−5]

In the formula [6], $M^4$ is at least one binding group selected from the group consisting of a single bond, $-CH_2-$, $-OCH_2-$ and $O-CH_2-CH_2-$. Among them, in view of easiness of preparation, it is preferably a single bond or a structure represented by $-CH_2-$ or $-OCH_2-$.

In the formula [6], $M^5$ is at least one member selected from the group consisting of structures represented by the above formulae [b-1] to [b-8]. Among them, in view of easiness of preparation, preferred is a structure represented by the formula [b-1], [b-2] or [b-6]. More preferred is a structure represented by the formula [b-1] or [b-2]. In the formula [6], n is an integer of from 1 to 3. Among them, in view of easiness of preparation, it is preferably 1 or 2. It is more preferably 1.

In the formula [6], m is an integer of from 1 to 3. In view of easiness of preparation, it is preferably 1 or 2.

It is preferred to use, as the specific adhesive compound, at least one member selected from the group consisting

of compounds represented by the following formulae [6-1] to [6-5].

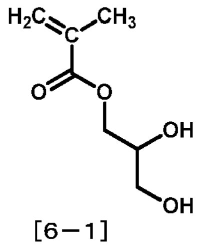

[6-1]

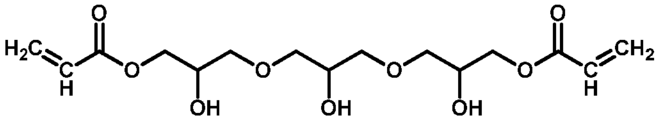

[6-2]

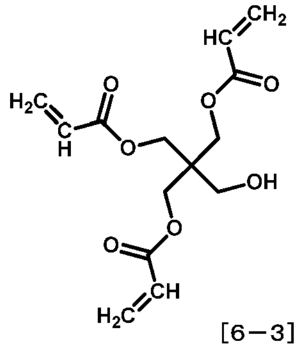

[6-3]

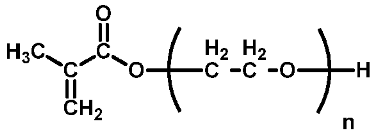

[6-4]

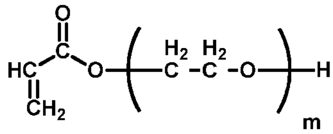

[6-5]

(wherein n is an integer of from 1 to 10, and m is an integer of from 1 to 10.)

As the specific adhesive compound, further, the following may be mentioned. For example, a compound having three polymerizable unsaturated groups in its molecule, such as trimethylolpropane tri(meth)acrylate, pentaerythritol tri(meth)acrylate, dipentaerythritol penta(meth)acrylate, tri(meth)acryloyloxyethoxy trimethylolpropane or glycerin polyglycidyl ether poly(meth)acrylate, a compound having two polymerizable unsaturated groups in its molecule, such as ethylene glycol di(meth)acrylate, diethylene glycol di(meth)acrylate, tetraethylene glycol di(meth)acrylate, polyethylene glycol di(meth)acrylate, propylene glycol di(meth)acrylate, polypropylene glycol di(meth)acrylate, butylene glycol di(meth)acrylate, neopentyl glycol di(meth)acrylate, ethylene oxide bisphenol A di(meth)acrylate, propylene oxide bisphenol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether, di(meth)acrylate, phthalic acid diglycidyl ester di(meth)acrylate or hydroxypivalic acid neopentyl glycol di(meth)acrylate, or a compound having one polymerizable unsaturated group in its molecule, such as 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-(meth)acryloyloxy-2-hydroxypropyl phthalate, 3-chloro-2-hydroxypropyl (meth)acrylate, glycerin mono(meth)acrylate, 2-(meth)acryloyloxyethyl phosphate or N-methylol (meth)acrylamide may be mentioned.

The content of the specific adhesive compound in the liquid crystal aligning agent is preferably from 0.1 to 150 parts by mass per 100 parts by mass of all the polymer components. In order that the crosslink reaction proceed and the desired effects are obtained, it is more preferably from 0.1 to 100 parts by mass, most preferably from 1 to 50 parts by mass per 100 parts by mass of all the polymer components.

Further, the specific adhesive compound may be used alone or in combination of two or more, depending upon the vertical alignment property of the liquid crystal when a vertical liquid crystal alignment film is formed, and optical properties of the obtainable liquid crystal display device.

In the liquid crystal aligning agent, within a range not to impair the effects of the present invention, a compound having at least one type of group selected from the group consisting of an epoxy group, an isocyanate group, an oxetane group, a cyclocarbonate group, a hydroxy group, a hydroxyalkyl group and a lower alkoxyalkyl group (such compounds will sometimes be generally referred to as a specific crosslinkable compound) is incorporated. In such a case, the compound has to have at least two such groups.

The crosslinkable compound having an epoxy group or an isocyanate group may, for example, be bisphenol acetone glycidyl ether, a phenol novolac epoxy resin, a cresol novolac epoxy resin, triglycidyl isocyanurate, tetraglycidyl aminodiphenylene, tetraglycidyl-m-xylenediamine, tetraglycidyl-1,3-bis(aminoethyl)cyclohexane, tetraphenylglycidyl ether ethane, triphenylglycidyl ether ethane, bisphenol hexafluoroacetodiglycidyl ether, 1,3-bis(1-(2,3-epoxypropoxy)-1-trifluoromethyl-2,2,2-trifluoromethyl)benzene, 4,4-bis(2,3-epoxypropoxy)octafluorobiphenyl, triglycidyl-p-aminophenol, tetraglycidyl metaxylenediamine, 2-(4-(2,3-epoxypropoxy)phenyl)-2-(4-(1,1-bis(4-(2,3-epoxypropoxy)phenyl)ethyl)phenyl)propane or 1,3-bis(4-(1-(4-(2,3-epoxypropoxy)phenyl)-1-(4-(1-(4-(2,3-epoxypropoxy)phenyl)-1-methylethyl)phenyl)ethyl)phenoxy)-2-propanol.

The crosslinkable compound having an oxetane group is a crosslinkable compound having at least two oxetane groups represented by the following formula [4]:

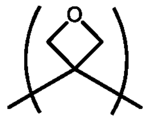

[4]

Specifically, crosslinkable compounds represented by the formulae [4a] to [4k] disclosed in WO2011/132751 (published on October 27, 2011), pages 58 to 59 may be mentioned.

The crosslinkable compound having a cyclocarbonate group is a crosslinkable compound having at least two cyclocarbonate groups represented by the following formula [5]:

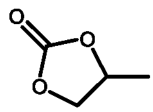

[5]

Specifically, crosslinkable compounds represented by the formulae [5-1] to [5-42] disclosed in WO2012/014898 (published on February 2, 2012), pages 76 to 82 may be mentioned.

The crosslinkable compound having at least one type of group selected from the group consisting of a hydroxy group and an alkoxy group may, for example, be an amino resin having hydroxy groups or alkoxy groups, such as a melamine resin, a urea resin, a guanamine resin, a glycoluril-formaldehyde resin, a succinylamide-formaldehyde resin or an ethyleneurea-formaldehyde resin. Specifically, a melamine derivative or a benzoguanamine derivative having a hydrogen atom(s) of an amino group substituted by a methylol group or an alkoxymethyl group or both of them, or glycoluril may be used. Such a melamine derivative or benzoguanamine derivative may be present as a dimer or a trimer. Such a derivative is preferably one having at least 3 and at most 6 methylol groups or alkoxymethyl groups on average per one triazine ring.

As examples of such a melamine derivative or benzoguanamine derivative, commercial products methoxymethylated melamine such as MX-750 having 3.7 methoxymethyl groups on average per one triazine ring and MW-30 having 5.8 methoxymethyl groups on average per one triazine ring (each manufactured by Sanwa Chemical Co., Ltd.), CYMEL 300, 301, 303, 350, 370, 771, 325, 327, 703 and 712, methoxymethylated butoxymethylated melamine such as CYMEL 235, 236, 238, 212, 253 and 254, butoxymethylated melamine such as CYMEL 506 and 508, carboxy group-containing methoxymethylated isobutoxymethylated melamine such as CYMEL 1141, methoxymethylated ethoxymethylated benzoguanamine such as CYMEL 1123, methoxymethylated butoxymethylated benzoguanamine such as CYMEL 1123-10, butoxymethylated benzoguanamine such as CYMEL 1128, and carboxy group-containing methoxymethylated ethoxymethylated benzoguanamine such as CYMEL 1125-80 (each manufactured by Mitsui Cyanamid) may be mentioned. Further, as examples of glycoluril, butoxymethylated glycoluril such as CYMEL 1170, methylolated glycoluril such as CYMEL 1172 and methoxymethylolated glycoluril such as Powderlink 1174 may be mentioned.

As a benzene or phenolic compound having a hydroxy group or an alkoxy group, for example, 1,3,5-tris(methoxymethyl)benzene, 1,2,4-tris(isopropoxymethyl)benzene, 1,4-bis(sec-butoxymethyl)benzene or 2,6-dihydroxymethyl-p-tert-butylphenol may be mentioned. More specifically, crosslinkable compounds represented by the formulae [6-1] to [6-48] disclosed in WO2011/132751 (published on October 27, 2011), pages 62 to 66 may be mentioned.

The content of the specific crosslinkable compound in the liquid crystal aligning agent is preferably from 0.1 to 100 parts by mass per 100 parts by mass of all the polymer components. In order that the crosslink reaction proceeds and the desired effects are achieved, it is more preferably from 0.1 to 50 parts by mass, most preferably from 1 to 30 parts by mass per 100 parts by mass of all the polymer components.

It is possible to incorporate in the liquid crystal aligning agent a nitrogen-containing heterocyclic amine represented by any of the formulae [M1] to [M156] disclosed in WO2011/132751 (published on October 27, 2011), pages 69 to 73, in order to promote charge transfer in the liquid crystal alignment film and to promote charge loss of the device. Such an amine may be directly added to the liquid crystal aligning agent, but is preferably added in the form of a solution in a proper solvent at a concentration of from 0.1 to 10 mass%, preferably from 1 to 7 mass%. The solvent is not particularly limited so long as it is an organic solvent in which the specific polymer is dissolved.

Further, for the liquid crystal aligning agent, within a range not to impair the effects of the present invention, a compound which improves the film thickness uniformity or the surface smoothness of an obtainable vertical liquid crystal alignment film when the liquid crystal aligning agent is applied may be used. Further, a compound which improves the adhesion between the vertical liquid crystal alignment film and the substrate may be used.

The compound which improves the film thickness uniformity or the surface smoothness of the vertical liquid

crystal alignment film may, for example, be a fluorinated surfactant, a silicone surfactant or a nonionic surfactant. More specifically, for example, Eftop EF301, EF303 or EF352 (each manufactured by TOHKEM PRODUCTS CORPORATION), MEGAFAC F171, F173 or R-30 (each manufactured by DIC Corporation), Fluorad FC430 or FC431 (each manufactured by Sumitomo 3M Limited) or AsahiGuard AG710, SURFLON S-382, SC101, SC102, SC103, SC104, SC105 or SC106 (each manufactured by Asahi Glass Company, Limited) may be mentioned. The proportion of such a surfactant is preferably from 0.01 to 2 parts by mass, more preferably from 0.01 to 1 part by mass per 100 parts by mass of all the polymer components contained in the liquid crystal aligning agent.

As specific examples of the compound which improves the adhesion between the vertical liquid crystal alignment film and the substrate, a functional silane-containing compounds or epoxy group-containing compounds may, for example, be mentioned. For example, 3-aminopropyltrimethoxysilane, 3-aminopropyltriethoxysilane, 2-aminopropyltrimethoxysilane, 2-aminopropyltriethoxysilane, N-(2-aminoethyl)-3-aminopropyltrimethoxysilane, N-(2-aminoethyl)-3-aminopropylmethyldimethoxysilane, 3-ureidopropyltrimethoxysilane, 3-ureidopropyltriethoxysilane, N-ethoxycarbonyl-3-aminopropyltrimethoxysilane, N-ethoxycarbonyl-3-aminopropyltriethoxysilane, N-triethoxysilylpropyl triethylene triamine, N-trimethoxysilylpropyl triethylene triamine, 10-trimethoxysilyl-1,4,7-triazadecane, 10-triethoxysilyl-1,4,7-triazadecane, 9-trimethoxysilyl-3,6-diazanonyl acetate, 9-triethoxysilyl-3,6-diazanonyl acetate, N-benzyl-3-aminopropyltrimethoxysilane, N-benzyl-3-aminopropyltriethoxysilane, N-phenyl-3-aminopropyltrimethoxysilane, N-phenyl-3-aminopropyltriethoxysilane, N-bis(oxyethylene)-3-aminopropyltrimethoxysilane, N-bis(oxyethylene)-3-aminopropyltriethoxysilane, ethylene glycol diglycidyl ether, polyethylene glycol diglycidyl ether, propylene glycol diglycidyl ether, tripropylene glycol diglycidyl ether, polypropylene glycol diglycidyl ether, neopentyl glycol diglycidyl ether, 1,6-hexanediol diglycidyl ether, glycerin diglycidyl ether, 2,2-dibromoneopentyl glycol diglycidyl ether, 1,3,5,6-tetraglycidyl-2,4-hexanediol, N,N,N',N'-tetraglycidyl-m-xylenediamine, 1,3-bis(N,N-diglycidylaminomethyl)cyclohexane or N,N,N',N'-tetraglycidyl-4,4'-diaminodiphenylmethane may be mentioned. The proportion of such a compound which improves the adhesion to the substrate is preferably from 0.1 to 30 parts by mass, more preferably from 1 to 20 parts by mass per 100 parts by mass of all the polymer components contained in the liquid crystal aligning agent. If the proportion is less than 0.1 part by mass, no effect to improve the adhesion will be expected, and if it is larger than 30 parts by mass, storage stability of the liquid crystal aligning agent may be deteriorated in some cases.

In the liquid crystal aligning agent, in addition to the above compounds, a dielectric or an electrically conductive substance for the purpose of changing the electrical properties of the obtainable vertical liquid crystal alignment film, such as the dielectric constant or the electrical conductivity, may be incorporated within a range not to impair the effects of the present invention.

<Liquid crystal composition>

The liquid crystal composition in the present invention is a liquid crystal composition containing at least a liquid crystal and a polymerizable compound which undergoes a polymerization reaction by ultraviolet rays.

As the liquid crystal, a nematic liquid crystal, a smectic liquid crystal or a cholesteric liquid crystal may be used. Among them, preferred is one having a negative dielectric anisotropy. Further, in view of low voltage drive and scattering property, preferred is one having large dielectric anisotropy and large diffractive index anisotropy. Further, it is possible to use a mixture of two or more types of liquid crystal depending upon physical property values of the phase transfer temperature, the dielectric anisotropy and the diffractive index anisotropy.

In order that the liquid crystal display device is operated as an active device such as a thin film transistor (TFT), the liquid crystal is required to have a high electrical resistance and a high voltage holding ratio (hereinafter sometimes referred to as VHR). Accordingly, it is preferred to use as the liquid crystal a fluorine-type or chlorine-type liquid crystal which has a high electrical resistance and of which VHR is not decreased by active energy rays such as ultraviolet rays.

Further, for the liquid crystal display device, a dichroic dye may be dissolved in the liquid crystal composition to constitute a guest host device. In such a case, a device is obtained which is in a transparent state when no voltage is applied and which is in an absorption (scattering) state when a voltage is applied. Further, in such a liquid crystal display device, the director (direction of alignment) of the liquid crystal changes by 90 degrees depending upon application/non-application of a voltage. Accordingly, with such a liquid crystal display device, a high contrast can be obtained utilizing differences of light absorption properties of the dichroic dye, as compared with a conventional guest host device in which switching is conducted between random alignment and vertical alignment. Further, with respect to a guest host device in which a dichroic dye is dissolved, the device is colored when the liquid crystal is aligned in a horizontal direction and is opaque only in a scattering state. Accordingly, it is possible to obtain a device which shifts from a colorless and transparent state when no voltage is applied to a colored opaque state and a colored transparent state along with application of a voltage.

The polymerizable compound is not limited so long as it undergoes a polymerization reaction by ultraviolet rays to form a cured product of the liquid crystal composition (for example, a structure like a polymer network). On that occasion, a monomer of a polymerizable compound may be introduced to the liquid crystal composition, or a polymer

preliminarily obtained by polymerizing the monomer may be introduced to the liquid crystal composition. However, in the case of the polymer, the polymer is required to have a moiety which undergoes a polymerization reaction by ultraviolet rays. More preferred is a method of introducing a monomer to the liquid composition and subjecting the monomer to a polymerization reaction by irradiation with ultraviolet rays to form a cured product at the time of preparation of the liquid crystal display device, in view of handling efficiency of the liquid crystal composition, that is, with a view to suppressing an increase of the viscosity of the liquid crystal composition and in view of the solubility in the liquid crystal.

Further, the polymerizable compound is not particularly limited so long as it is soluble in the liquid crystal, but it is required that when the polymerizable compound is dissolved in the liquid crystal, there is a temperature at which the liquid crystal composition partly or entirely shows a liquid crystalline phase. In a case where the liquid crystal composition partly shows a liquid crystalline phase, the entire liquid crystal display device should show substantially uniform transparency and scattering property when visually observed.

The polymerizable compound is not limited so long as it is a compound which undergoes a polymerization reaction by ultraviolet rays, and on that occasion, the reaction mode of the polymerization is not limited so long as a cured product of the liquid crystal composition is formed. As a specific reaction mode, radical polymerization, cationic polymerization, anionic polymerization or addition polymerization may be mentioned.

Among them, the reaction mode of the polymerization of the polymerizable compound is preferably radical polymerization. On that occasion, as the polymerizable compound, the following radical-type polymerizable compound (monomer) or its oligomer may be used. Further, as described above, a polymer obtained by polymerizing such a monomer may also be used.

As a monofunctional polymerizable compound (also called a monofunctional monomer), for example, 2-ethylhexyl acrylate, butylethyl acrylate, butoxyethyl acrylate, 2-cyanoethyl acrylate, benzyl acrylate, cyclohexyl acrylate, hydroxyethyl acrylate, 2-hydroxypropyl acrylate, 2-ethoxyethyl acrylate, N,N-diethylaminoethyl acrylate, N,N-dimethylaminoethyl acrylate, dicyclopentanyl acrylate, dicyclopentenyl acrylate, diglycidyl acrylate, tetrahydrofurfuryl acrylate, isoboronyl acrylate, isodecyl acrylate, lauryl acrylate, morpholine acrylate, phenoxyethyl acrylate, phenoxydiethylene glycol acrylate, 2,2,2-trifluoroethyl acrylate, 2,2,3,3,3-pentafluoropropyl acrylate, 2,2,3,3-tetrafluoropropyl acrylate, 2,2,3,4,4,4-hexafluorobutyl acrylate, 2-ethylhexyl methacrylate, butylethyl methacrylate, butoxyethyl methacrylate, 2-cyanoethyl methacrylate, benzyl methacrylate, cyclohexyl methacrylate, hyeroxyethyl methacrylate, 2-hydroxypropyl methacrylate, 2-ethoxyethyl acrylate, N,N-diethylaminoethyl methacrylate, N,N-dimethylaminoethyl methacrylate, dicyclopentanyl methacrylate, dicyclopentenyl methacrylate, glycidyl methacrylate, tetrahydrofurfuryl methacrylate, isobornyl methacrylate, isodecyl methacrylate, lauryl methacrylate, morpholine methacrylate, phenoxyethyl methacrylate, phenoxydiethylene glycol methacrylate, 2,2,2-trifluoroethyl methacrylate, 2,2,3,3-tetrafluoropropyl methacrylate, 2,2,3,4,4,4-hexafluorobutyl methacrylate or an oligomer thereof may be mentioned.

As a bifunctional polymerizable compound (also called a bifunctional monomer), for example, 4,4'-biphenyl diacrylate, diethylstilbestrol diacrylate, 1,4-bisacryloyloxybenzene, 4,4'-bisacryloyloxydiphenyl ether, 4,4'-bisacryloyloxydiphenylmethane, 3,9-[1,1-dimethyl-2-acryloyloxyethyl]-2,4,8,10-tetraspiro[5,5]undecane, $\alpha,\alpha'$-bis[4-acryloyloxyphenyl]-1,4-diisopropylbenzene, 1,4-bisacryloyloxytetrafluorobenzene, 4,4'-bisacryloyloxyoctafluorobiphenyl, diethylene glycol acrylate, 1,4-butandiol diacrylate, 1,3-butylene glycol diacrylate, dicyclopentanyl diacrylate, glycerol diacrylate, 1,6-hexanediol diacrylate, neopentyl glycol diacrylate, tetraethylene glycol diacrylate, 1,9-nonanediol diacrylate, polyethylene glycol diacrylate, polypropylene glycol diacrylate, 1,9-nonanediol dimethacrylate, polyethylene glycol dimethacrylate, polypropylene glycol dimethacrylate or an oligomer thereof may be mentioned.

As a multifunctional polymerizable compound (also called a multifunctional monomer), for example, trimethylolpropane triacrylate, pentaerythritol tetraacrylate, pentaerythritol triacrylate, ditrimethylolpropane tetraacrylate, dipentaerythritol hexaacrylate, dipentaerythritol monohydroxypentaacrylate, 4,4'-diacryloyloxystilbene, 4,4'-diacryloyloxydimethylstilbene, 4,4-diacryloyloxydiethylstilbene, 4,4'-diacryloyloxydipropylstilbene, 4,4'-diacryloyloxydibutylstilbene, 4,4'-diacryloyloxydipentylstilbene, 4,4'-diacryloyloxydihexylstilbene, 4,4'-diacryloyloxydifluorostilbene, 2,2,3,3,4,4-hexafluoropentanediol-1,5-diacrylate, 1,1,2,2,3,3-hexafluoropropyl-1,3-diacrylate, diethylene glycol dimethacrylate, 1,4-butanediol dimethacrylate, 1,3-butylene glycol dimethacrylate, 1,6-hexanediol dimethacrylate, neopentyl glycol dimethacrylate, tetraethylene glycol dimethacrylate, trimethylolpropane trimethacrylate, pentaerythritol tetramethacrylate, pentaerythritol trimethacrylate, ditrimethylolpropane tetramethacrylate, dipentaerythritol hexamethacrylate, dipentaerythritol monohydroxypentamethacrylate, 2,2,3,3,4,4-hexafluoropentanediol-1,5-dimethacrylate or an oligomer thereof may be mentioned.

Such a radical-type polymerizable compound may be used alone or in combination of two or more depending upon optical properties of the obtainable liquid crystal display device and the adhesion between the liquid crystal layer and the vertical liquid crystal alignment film.

In order to promote formation of a cured product of the liquid crystal composition, it is preferred to incorporate a radical initiator (hereinafter sometimes referred to as a photopolymerization initiator) which generates radicals by ultraviolet rays, in the liquid crystal composition, for the purpose of promoting radical polymerization of the polymerizable compound. Specifically, the same compound as the above "photo-radical generator" may be mentioned.

Such a radical initiator may be used alone or in combination of two or more depending upon optical properties of the obtainable liquid crystal display device and the adhesion between the liquid crystal layer and the vertical liquid crystal alignment film.

As the above polymerizable compound, the following ion-type polymerizable compound may also be used. Specifically, it is a compound having at least one type of crosslink-forming group selected from the group consisting of a hydroxy group, a hydroxyalkyl group and a lower alkoxyalkyl group.

More specifically, the above "compound having at least one type of crosslink-forming group selected from the group consisting of a hydroxy group, a hydroxyalkyl group and a lower alkoxyalkyl group" may be mentioned.

Further, as the ion-type polymerizable compound, a compound having a crosslink-forming group and containing an epoxy group or an isocyanate group may also be employed. Specifically, for example, bisphenol acetone glycidyl ether, a phenol novolac epoxy resin, a cresol novolac epoxy resin, triglycidyl isocyanurate, tetraglycidyl aminodiphenylene, tetraglycidyl-m-xylenediamine, tetraglycidyl-1,3-bis(aminoethyl)cyclohexane, tetraphenylglycidyl ether ethane, triphenylglycidyl ether ethane, bisphenol hexafluoroacetodiglycidyl ether, 1,3-bis(1-(2,3-epoxypropoxy)-1-trifluoromethyl-2,2,2-trifluoromethyl)benzene, 4,4-bis(2,3-epoxypropoxy)octafluorobiphenyl, triglycidyl-p-aminophenol, tetraglycidyl metaxylenediamine, 2-(4-(2,3-epoxypropoxy)phenyl)-2-(4-(1,1-bis(4-(2,3-epoxypropoxy)phenyl)ethyl)phenyl)propane or 1,3-bis(4-(1-(4-(2,3-epoxypropoxy)phenyl)-1-(4-(1-(4-(2,3-epoxypropoxy)phenyl)-1-methylethyl)phenyl)ethyl)phenoxy)-2-propanol may be mentioned.

In a case where the ion-type polymerizable compound is used, for the purpose of promoting its polymerization reaction, the following ionic initiator which generates an acid or a base by ultraviolet rays may be incorporated. Specifically, for example, a triazine compound, an acetophenone derivative compound, a disulfone compound, a diazomethane compound, a sulfonic acid derivative compound, a diaryliodonium salt, a triarylsulfonium salt, a triarylphosphonium salt or an iron arene complex may be used, but the ionic initiator is not limited thereto. More specifically, for example, diphenyliodonium chloride, diphenyliodonium trifluoromethanesulfonate, diphenyliodonium mesylate, diphenyliodonium tosylate, diphenyliodonium bromide, diphenyliodonium tetrafluoroborate, diphenyliodonium hexafluoroantimonate, diphenyliodonium hexafluoroarsenate, bis(p-tert-butylphenyl)iodonium hexafluorophosphate, bis(p-tert-butylphenyl)iodonium mesylate, bis(p-tert-butylphenyl)iodonium tosylate, bis(p-tert-butylphenyl)iodonium trifluoromethanesulfonate, bis(p-tert-butylphenyl)iodonium tetrafluoroborate, bis(p-tert-butylphenyl)iodonium chloride, bis(p-chlorophenyl)iodonium chloride, bis(p-chlorophenyl)iodonium tetrafluoroborate, triphenylsulfonium chloride, triphenylsulfonium bromide, tri(p-methoxyphenyl)sulfonium tetrafluoroborate, tri(p-methoxyphenyl)sulfonium hexafluorophosphonate, tri(p-ethoxyphenyl)sulfonium tetrafluoroborate, triphenylphosphonium chloride, triphenylphosphonium bromide, tri(p-methoxyphenyl)phosphonium tetrafluoroborate, tri(p-methoxyphenyl)phosphonium hexafluorophosphonate, tri(p-ethoxyphenyl)phosphonium tetrafluoroborate, bis[[(2-nitrobenzyl)oxy]carbonylhexane-1,6-diamine], nitrobenzylcyclohexyl carbamate, di(methoxybenzyl)hexamethylene dicarbamate, bis[[(2-nitrobenzyl)oxy]carbonylhexane-1,6-diamine], nitrobenzyl cyclohexyl carbamate or di(methoxybenzyl)hexamethylene dicarbamate may be mentioned.

<Method for preparing vertical liquid crystal alignment film and liquid crystal display devid>

The substrate used for the liquid crystal display device of the present invention is not particularly limited so long as it is a highly transparent substrate, and not only a glass substrate, but also a plastic substrate such as an acrylic substrate, a polycarbonate substrate or a PET (polyethylene terephthalate) substrate, and further a plastic film may be used. In a case where the liquid crystal display device is used as a reverse device for a light control window, the substrate is preferably a plastic substrate or film. Further, from the viewpoint of simplification of the process, it is preferred to use a substrate having an ITO (indium tin oxide) electrode, an IZO (indium zinc oxide) electrode, an IGZO (indium gallium zinc oxide) electrode, an organic conductive film to power the liquid crystal formed thereon. Further, in a case where the device is a reflection-type reverse device, a substrate having a silicon wafer, a metal such as aluminum or a dielectric multilayer film formed thereon may be used only for one of the substrates.

In the liquid crystal display device, at least one of the substrates has a vertical liquid crystal alignment film to vertically align liquid crystal molecules. This vertical liquid crystal alignment film may be obtained by applying the liquid crystal aligning agent to the substrate, followed by baking and by alignment treatment e.g. by rubbing treatment or light irradiation. However, in the case of the vertical liquid crystal alignment film in the present invention, the baked film may be used as the vertical liquid crystal alignment film even without such an alignment treatment.

The method of applying the liquid crystal aligning agent is not particularly limited, and industrially, screen printing, offset printing, flexographic printing, an ink jet method, a dipping method, a roll coater method, a slit coater method, a spinner method or a spraying method may, for example, be mentioned, and the method may be properly selected depending upon the type of the substrate and the film thickness of the aimed vertical liquid crystal alignment film.

After the liquid crystal aligning agent is applied to the substrate, the solvent is evaporated at a temperature of from 30 to 300°C, preferably from 30 to 250°C, depending upon the type of the substrate and the sovent used for the liquid crystal aligning agent, by a heating means such as a hotplate, a circulating hot air oven or an IR (infrared) oven

to form the vertical liquid crystal alignment film. Particuarly when a plastic substrate is used as the substrate, the treatment is carried out preferably at a temperature of from 30 to 150°C.

If the thickness of the vertical liquid crystal alignment film after baking is too thick, such is disadvantageous in view of the electrical power consumption of the liquid crystal display device, and if it is too thin, the reliability of the device may be lowered, and accordingly it is preferably from 5 to 500 nm. It is more preferably from 10 to 300 nm, particularly preferably from 10 to 250 nm.

The liquid crystal composition used for the liquid crystal display device of the present invention is the above-described liquid crystal composition, and it is possible to incorporate spacers to control the space between electrodes (also called a gap) of the liquid crystal display device, in the liquid crystal composition.

The method of injecting the liquid crystal composition is not particularly limited, and for example, the following method may be mentioned. That is, in a case where a glass substrate is used as the substrate, a pair of substrates having the vertical liquid crystal alignment film formed thereon was prepared, a sealing agent is applied to four sides of one of the substrates except for a part, and the other substrate is bonded so that the vertical liquid crystal alignment film faces inside, to prepare an empy cell. And, the liquid crystal composition is vacuum injected from a part not coated with the sealing agent, to obtain a cell containing the liquid crystal composition.

In a case where a plastic substrate or film is used as the substrate, a method may be mentioned in which a pair of substrates having the vertical liquid crystal alignment film formed thereon is prepared, the liquid crystal composition is dropped on one of the substrates by an ODF (one drop filling) method or an ink jet method, and then the other substrate is bonded to obtain a cell containing the liquid crystal composition. In the liquid crystal display device of the present invention, since the adhesion between the liquid crystal layer and the vertical liquid crystal alignment film is high, it is not necessary to apply a sealing agent to four sides of the substrate.

The gap of the liquid crystal display device may be controlled e.g. by the above mentioned spacers. As the method, a method of introducing spacers having the desired size in the liquid crystal composition, or a method of using a substrate having a column spacer having the desired size may, for example, be mentioned. Further, in a case where a plastic or film substrate is used as the substrate and the substrates are bonded by laminating, the gap can be controlled without introducing spacers.

The gap of the liquid crystal display device is preferably from 1 to 100 μm, more preferably from 2 to 50 μm, particularly preferably from 5 to 20 μm. If the gap is too small, the contrast of the liquid crystal display device tends to decrease, and if it is too large, the drive voltage of the device tends to be high.

The liquid crystal display device of the present invention is obtained by curing the liquid crystal composition in such a state that the liquid crysal composition partly or entirely shows liquid crystallinity to form a cured product composite of the liquid crystal and the polymerizable compound. Curing of the liquid crystal composition is carried out by irradiating the above cell containing the liquid crystal composition with ultraviolet rays. As a light source of an ultraviolet irradiation apparatus used, for example, a metal halide lamp or a high pressure mercury lamp may be mentioned. The wavelength of the ultraviolet rays is preferably from 250 to 400 nm. It is more preferably from 310 to 370 nm. A heat treatment may be carried out after irradiation with ultraviolet rays. In such a case, the temperature is from 40 to 120°C, preferably from 40 to 80°C.

As described above, by using the vertical liquid crystal alignment film obtained from the liquid crystal aligning agent containing the specific polymer having the first side chain structure and the second side chain structure, a liquid crystal display device can be obtained in which favorable optical properties, that is, favorable transparency when no voltage is applied and favorable scattering property when a voltage is applied are achieved, and the adhesion between the liquid crystal layer and the vertical liquid crystal alignment film is high.

The liquid crystal display device of the present invention can be suitably used for e.g. a liquid crystal display used for display, a light control window or an optical shutter device controlling transmission and blocking of light. In such a case, as the substrate of the liquid crystal display device, a plastic substrate or film may be used.

Further, the liquid crystal display device of the present invention (hereinafter sometimes referred to as the present device) can be suitably used for a liquid crystal display device used for transport equipment or transport machinery such as automobiles, trains and aircraft, specifically, a light control window or an optical shutter device used for a room mirror, controlling transmission and blocking of light. Particularly, as described above, since the present device provides favorable transparency when no voltage is applied and favorable scattering property when a voltage is applied, when the present device is used for a glass window of a vehicle, the light intake efficiency is high at night, and a higher anti-dazzling effect against external light will be achieved as compared with a conventional reverse device. Accordingly, the safety at the time of driving a vehicle and comfortability can be further improved. Further, in a case where the present device is prepared in a film form and bonded to a glass window of a vehicle, the reliability of the device tends to be high as compared with a conventional reverse device. That is, failure or deterioration due to low adhesion between the liquid crystal layer and the vertical liquid crystal alignment film is less likely to occur.

In addition, the present device may be used also as a light guide plate of a display device such as a LCD (liquid crystal display) or an OLED (organic light-emitting diode) display or a back board of a transparent display employing

such a display. Specifically, in a case where the present device is used for a back board of a transparent display, for example, in a case where an image is to be displayed on a transparent display used in combination with the present device, the present device suppresses entrance of light from the rear side. On that occasion, the present device is in a scattering state with a voltage applied when an image is to be displayed on the transparent display, whereby the image can be clearly displayed, and after display of the screen is completed, the device is in a transparent state with no voltage applied.

EXAMPLES

Now, the present invention will be described in further detail with reference to Examples. Abbreviations used in Examples are as follows.

(Liquid crystal)

L1: MLC-6608 (manufactured by Merck Japan Limited)

(Polymerizable compound)

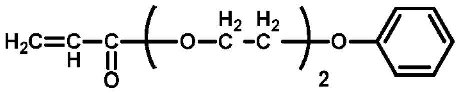

R1

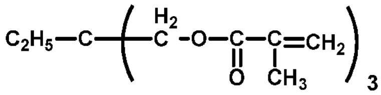

R2

(Photopolymerization initiator)

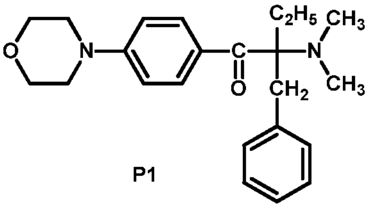

P1

(First side chain type diamine)

A1: 1,3-Diamino-4-[4-(trans-4-n-heptylcyclohexyl)phenoxy]benzene
A2: 1,3-Diamino-4-[4-(trans-4-n-heptylcyclohexyl)phenoxymethyl]benzene
A3: 1,3-Diamino-4-{4-[trans-4-(trans-4-n-pentylcyclohexyl)cyclohexyl]phenoxy}benzene
A4: Diamine represented by the following formula [A4]
A5: 1,3-Diamino-4-octadecyloxybenzene

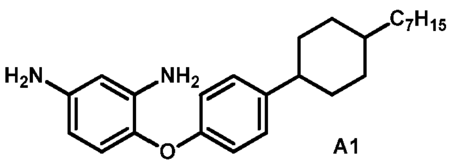

A1

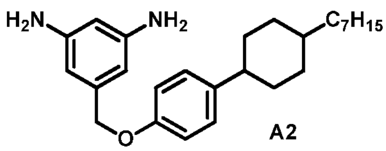

A2

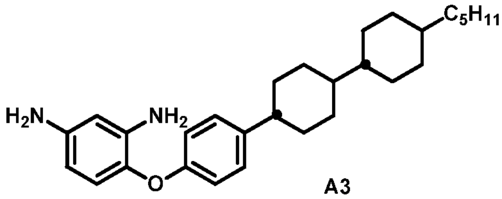

A3

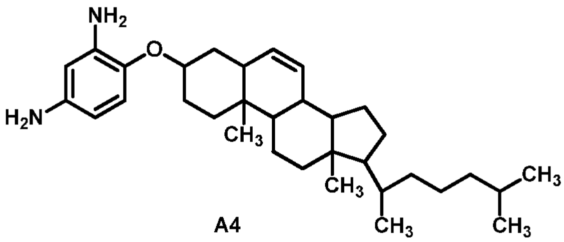

A4

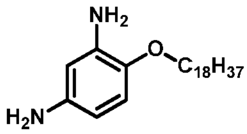

A5

(Second side chain type diamine)

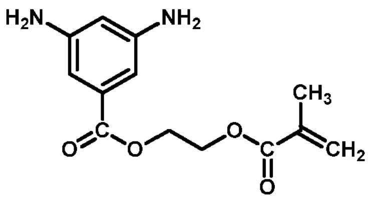

B1

(Other diamine)

C1: m-Phenylenediamine
C2: 3,5-Diaminobenzoic acid

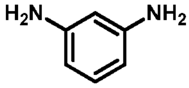

C1

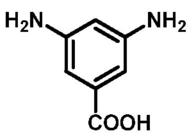

C2

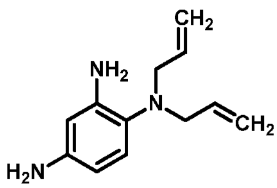

C3

(Tetracarboxylic acid)

D1: 1,2,3,4-Cyclobutanetetracarboxylic acid dianhydride
D2: Bicyclo[3,3,0]octane-2,4,6,8-tetracarboxylic acid dianhydride
D3: Tetracarboxylic acid dianhydride represented by the following formula [D3]
D4: Tetracarboxylic acid dianhydride represented by the following formula [D4]

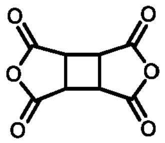

D1

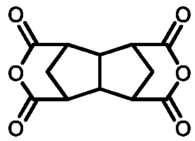

D2

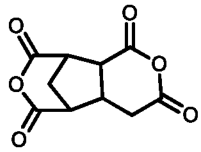

D3

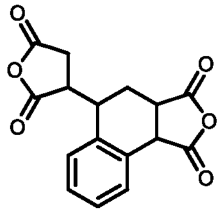

D4

(Specific generator)

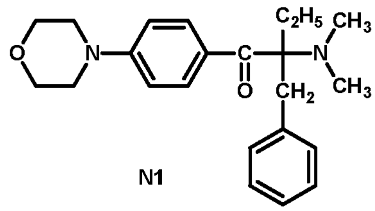

N1

(Specific adhesive compound)

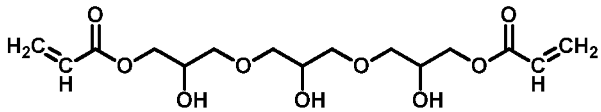

M1

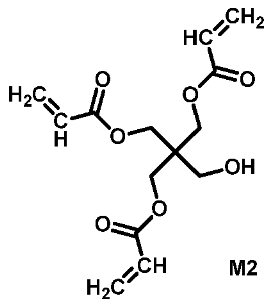

M2

<Specific crosslinkable compound>

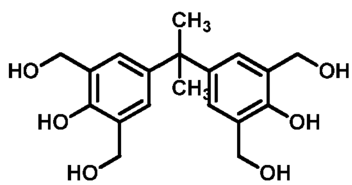

K1

<Solvent>

| | |
|---|---|
| NMP: | N-Methyl-2-pyrrolidone |
| NEP: | N-Ethyl-2-pyrrolidone |
| γ-BL: | γ-Butyrolactone |
| BCS: | Ethylene glycol monobutyl ether |
| PB: | Propylene glycol monobutyl ether |
| PGME: | Propylene glycol monomethyl ether |

[Measurement of molecular weight of polyimide-based polymer]

The molecular weight was measured using a room temperature gel permeation chromatography (GPC) apparatus (GPC-101, manufactured by SHOWA DENKO K.K.) and columns (KD-803, KD-805, Shodex) as follows.
Column temperature: 50°C
Eluent: N,N'-Dimethylformamide (as additives, 30 mmol/L (liter) of lithium bromide monohydrate ($LiBr \cdot H_2O$), 30 mmol/L of phosphoric acid anhydride crystals (o-phosphoric acid) and 10 ml/L of tetrahydrofuran (THF))

Flow rate: 1.0 ml/min

Standard sample for preparation of analytical curve: TSK standard polyethylene oxide (molecular weight: about 900,000, 150,000, 100,000 and 30,000) (manufactured by TOSOH CORPORATION) and polyethylene glycol (molecular weight: about 12,000, 4,000 and 1,000) (manufactured by Polymer Laboratories Ltd.)

[Measurement of imidization degree of polyimide-based polymer]

20 mg of a polyimide powder was put in an NMR (nuclear magnetic resonance) sample tube (NMR sampling tube standard, Φ5 (manufactured by KUSANO SCIENTIFIC CORPORATION)), and deuterated dimethyl sulfoxide (DMSO-d6, 0.05 mass%TMS (tetramethylsilane) mixture) (0.53 ml) was added, and ultrasonic waves were applied for complete dissolution. The solution was subjected to 500 MHz proton NMR measurement by an NMR measuring apparatus (JNW-ECA500, manufactured by JEOL Ltd. DATUM Solution Business Operations). The imidization degree was obtained in accordance with the following formula from the peak integrated value of proton derived from a structure which would not be changed as between before and after the imidization as standard proton, and the peak integrated value of proton derived from a NH group of the amide acid which appeared in the vicinity of from 9.5 to 10.0 ppm.

$$\text{Imidization degree (\%)} = (1-\alpha \cdot x/y) \times 100$$

wherein x is the peak integrated value of proton derived from the NH group of the amino acid, y is the peak integrated value of standard proton, and α is the proportion of the number of standard proton per one proton of the NH group of the amide acid in the case of a polyamide acid (imidization degree of 0%).

[Preparation of polyimide-based polymer]

<Preparation Example 1>

D2 (5.74 g, 23.0 mmol), A1 (7.08 g, 18.6 mmol), B1 (2.46 g, 9.30 mmol) and C2 (0.47 g, 3.10 mmol) were mixed in NMP (34.5 g), followed by reaction at 50°C for 8 hours, and then D1 (1.50 g, 7.65 mmol) and NMP (17.3 g) were added, followed by reaction at 40°C for 8 hours to obtain a polyamide acid solution (1) having a resin solid content concentration of 25 mass%. Of the polyamide acid, the number average molecular weight was 21,600, and the weight average molecular weight was 67,800.

<Preparation Example 2>

The polyamide acid solution (1) (30.0 g) obtained in Preparation Example 1 was diluted to 6 mass% with NMP, and acetic anhydride (3.15 g) and pyridine (2.40 g) as imidizing catalysts were added, followed by reaction at 50°C for 3 hours. The obtained reaction solution was poured into methanol (460 ml), and the resulting precipitate was collected by filtration. The precipitate was washed with methanol and vacuum-dried at 60°C to obtain a polyimide powder (2). Of the polyimide, the imidization degree was 55%, the number average molecular weight was 17,800, and the weight average molecular weight was 49,100.

<Preparation Example 3>

D2 (1.19 g, 7.65 mmol), A2 (3.60 g, 7.75 mmol), B1 (0.82 g, 3.10 mmol) and C2 (0.71 g, 4.65 mmol) were mixed in NMP (16.0 g), followed by reaction at 50°C for 8 hours, and then D1 (1.50 g, 7.65 mmol) and NMP (8.00 g) were added, followed by reaction at 40°C for 8 hours to obtain a polyamide acid solution having a resin solid content concentration of 25 mass%.
The obtained polyamide acid solution (30.0 g) was diluted to 6 mass% with NMP, and acetic anhydride (2.52

g) and pyridine (2.43 g) as imidizing catalysts were added, followed by reaction at 50°C for 2.5 hours. The obtained reaction solution was poured into methanol (460 ml), and the resulting precipitate was collected by filtration. The precipitate was washed with methanol and vacuum-dried at 60°C to obtain a polyimide powder (3). Of the polyimide, the imidization degree was 50%, the number average molecular weight was 16,500, and the weight average molecular weight was 48,200.

<Preparation Example 4>

D2 (2.11 g, 8.41 mmol), A2 (3.36 g, 8.52 mmol), B1 (0.90 g, 3.41 mmol), C2 (0.52 g, 3.41 mmol) and C3 (0.35 g, 1.70 mmol) were mixed in NMP (17.8 g), followed by reaction at 50°C for 8 hours, and then D1 (1.65 g, 8.41 mmol) and NMP (8.88 g) were added, followed by reaction at 40°C for 8 hours to obtain a polyamide acid solution having a resin solid content concentration of 25 mass%.

The obtained polyamide acid solution (30.0 g) was diluted to 6 mass% with NMP, and acetic anhydride (2.85 g) and pyridine (2.50 g) as imidizing catalysts were added, followed by reaction at 50°C for 3 hours. The obtained reaction solution was poured into methanol (460 ml), and the resulting precipitate was collected by filtration. The precipitate was washed with methanol and vacuum-dried at 60°C to obtain a polyimide powder (4). Of the polyimide, the imidization degree was 61%, the number average molecular weight was 15,500, and the weight average molecular weight was 45,900.

<Preparation Example 5>

D2 (3.32 g, 13.3 mmol), A4 (2.48 g, 5.04 mmol), B1 (0.44 g, 1.68 mmol), C2 (1.28 g, 8.39 mmol) and C3 (0.34 g, 1.68 mmol) were mixed in NMP (17.5 g), followed by reaction at 50°C for 8 hours, and then D1 (0.65 g, 3.31 mmol) and NMP (8.77 g) were added, followed by reaction at 40°C for 8 hours to obtain a polyamide acid solution having a resin solid content of 25 mass%.

The obtained polyamide acid solution (30.0 g) was diluted to 6 mass% with NMP, and acetic anhydride (2.25 g) and pyridine (2.35 g) as imidizing catalysts were added, followed by reaction at 50°C for 3 hours. The obtained reaction solution was poured into methanol (460 ml), and the resulting precipitate was collected by filtration. The precipitate was washed with methanol and vacuum-dried at 60°C to obtain a polyimide powder (5). Of the polyimide, the imidization degree was 45%, the number average molecular weight was 16,200, and the weight average molecular weight was 48,400.

<Preparation Example 6>

D2 (1.75 g, 7.01 mmol), A3 (6.15 g, 14.2 mmol), B1 (1.88 g, 7.10 mmol), C1 (0.38 g, 3.55 mmol), C2 (1.08 g, 7.10 mmol) and C3 (0.72 g, 3.55 mmol) were mixed in NEP (34.9 g), followed by reaction at 50°C for 8 hours, and then D1 (5.50 g, 28.1 mmol) and NEP (17.5 g) were added, followed by reaction at 40°C for 8 hours to obtain a polyamide acid solution (6) having a resin solid content concentration of 25 mass%. Of the polyamide acid, the number average molecular weight was 22,100, and the weight average molecular weight was 69,400.

<Preparation Example 7>

The polyamide acid solution (6) (30.0 g) obtained in Preparation Example 6 was diluted to 6 mass% with NMP, and then acetic anhydride (2.20 g) and pyridine (2.35 g) as imidizing catalysts were added, followed by reaction at 50°C for 2.5 hours. The obtained reaction solution was poured into methanol (460 ml), and the resulting precipitate was collected by filtration. The precipitate was washed with methanol and vacuum-dried at 60°C to obtain a polyimide powder (7). Of the polyimide, the imidization degree was 42%, the number average molecular weight was 18,800, and the weight average molecular weight was 51,200.

<Preparation Example 8>

D2 (2.68 g, 10.7 mmol), A5 (3.27 g, 8.68 mmol), B1 (1.15 g, 4.34 mmol) and C2 (0.22 g, 1.45 mmol) were mixed in NMP (16.0 g), followed by reaction at 50°C for 8 hours, and then D1 (0.70 g, 3.57 mmol) and NMP (8.01 g) were added, followed by reaction at 40°C for 8 hours to obtain a polyamide acid solution having a resin solid content concentration of 25 mass%.

The obtained polyamide acid solution (30.0 g) was diluted to 6 mass% with NMP, and acetic anhydride (2.55 g) and pyridine (2.45 g) as imidizing catalysts were added, followed by reaction at 50°C for 3 hours. The obtained reaction solution was poured into methanol (460 ml), and the resulting precipitate was collected by filtration. The precipitate was

washed with methanol and vacuum-dried at 60°C to obtain a polyimide powder (8). Of the polyimide, the imidization degree was 56%, the number average molecular weight was 16,800, and the weight average molecular weight was 47,200.

<Preparation Example 9>

D3 (3.40 g, 15.2 mmol), A2 (3.03 g, 7.68 mmol), B1 (0.81 g, 3.07 mmol) and C2 (0.70 g, 4.61 mmol) were mixed in NMP (23.8 g), followed by reaction at 50°C for 8 hours to obtain a polyamide acid solution having a resin solid content concentration of 25 mass%.

The obtained polyamide acid solution (30.0 g) was diluted to 6 mass% with NMP, and acetic anhydride (3.15 g) and pyridine (2.65 g) as imidizing catalysts were added, followed by reaction at 50°C for 3.5 hours. The obtained reaction solution was poured into methanol (460 ml), and the resulting precipitate was collected by filtration. The precipitate was washed with methanol and vacuum-dried at 60°C to obtain a polyimide powder (9). Of the polyimide, the imidization degree was 65%, the number average molecular weight was 15,300, and the weight average molecular weight was 44,900.

<Preparation Example 10>

D3 (3.55 g, 15.8 mmol), A4 (2.37 g, 4.81 mmol), B1 (0.85 g, 3.21 mmol) and C2 (1.22 g, 8.02 mmol) were mixed in NMP (24.0 g), followed by reaction at 50°C for 12 hours to obtain a polyamide acid solution having a resin solid content concentration of 25 mass%.

The obtained polyamide acid solution (30.0 g) was diluted to 6 mass% with NMP, and acetic anhydride (2.55 g) and pyridine (2.60 g) as imidizing catalysts were added, followed by reaction at 50°C for 3 hours. The obtained reaction solution was poured into methanol (460 ml), and the resulting precipitate was collected by filtration. The precipitate was washed with methanol and vacuum-dried at 60°C to obtain a polyimide powder (10). Of the polyimide, the imidization degree was 41%, the number average molecular weight was 14,900, and the weight average molecular weight was 45,100.

<Preparation Example 11>

D4 (4.29 g, 14.3 mmol), A3 (3.13 g, 7.23 mmol), B1 (0.96 g, 3.62 mmol), C2 (0.55 g, 3.62 mmol) and C3 (0.74 g, 3.62 mmol) were mixed in NMP (20.7 g), followed by reaction at 50°C for 8 hours, and then D1 (0.70 g, 3.57 mmol) and NMP (10.4 g) were added, followed by reaction at 40°C for 8 hours to obtain a polyamide acid solution having a resin solid content concentration of 25 mass%.

The obtained polyamide acid solution (30.0 g) was diluted to 6 mass% with NMP, and acetic anhydride (2.55 g) and pyridine (2.40 g) were added as imidizing catalysts, followed by reaction at 50°C for 3.5 hours. The obtained reaction solution was poured into methanol (460 ml), and the resulting precipitate was collected by filtration. The precipitate was washed with methanol and vacuum-dried at 60°C to obtain a polyimide powder (11). Of the polyimide, the imidization degree was 55%, the number average molecular weight was 18,800, and the weight average molecular weight was 52,700.

<Preparation Example 12>

D2 (6.89 g, 27.5 mmol), A1 (8.49 g, 22.3 mmol) and C2 (2.26 g, 14.9 mmol) were mixed in NMP (38.9 g), followed by reaction at 50°C for 8 hours, and then D1 (1.80 g, 9.18 mmol) and NMP (19.5 g) were added, followed by reaction at 40°C for 8 hours to obtain a polyamide acid solution (12) having a resin solid content concentration of 25 mass%. Of the polyamide acid, the number average molecular weight was 23,500, and the weight average molecular weight was 70,400.

<Preparation Example 13>

The polyamide acid solution (12) (30.0 g) obtained in Preparation Example 12 was diluted to 6 mass% with NMP, and acetic anhydride (3.15 g) and pyridine (2.40 g) as imidizing catalysts were added, followed by reaction at 50°C for 3 hours. The obtained reaction solution was poured into methanol (460 ml), and the obtained precipitate was collected by filtration. The precipitate was washed with methanol and vacuum-dried at 60°C to obtain a polyimide powder (13). Of the polyimide, the imidization degree was 55%, the number average molecular weight was 19,600, and the weight average molecular weight was 52,300.

<Preparation Example 14>

D2 (1.98 g, 7.90 mmol), A2 (3.16 g, 8.01 mmol) and C2 (1.22 g, 8.01 mmol) were mixed in NMP (15.8 g), followed by reaction at 50°C for 8 hours, and then D1 (1.55 g, 7.90 mmol) and NMP (7.90 g) were added, followed by reaction at 40°C for 8 hours to obtain a polyamide acid solution having a resin solid content concentration of 25 mass%.

The obtained polyamide acid solution (30.0 g) was diluted to 6 mass% with NMP, and acetic anhydride (2.50 g) and pyridine (2.43 g) as imidizing catalysts were added, followed by reaction at 50°C for 2.5 hours. The obtained reaction solution was poured into methanol (460 ml), and the resulting precipitate was collected by filtration. The precipitate was washed with methanol and vacuum-dried at 60°C to obtain a polyimide powder (14). Of the polyimide, the imidization degree was 51 %, the number average molecular weight was 17,800, and the weight average molecular weight was 49,900.

<Prepration Example 15>

D2 (4.21g 16.8 mmol), C1 (1.47 g, 13.6 mmol) and C2 (1.38 g, 9.09 mmol) were mixed in NMP (16.3 g), followed by reaction at 50°C for 8 hours, and then D1 (1.10 g, 5.61 mmol) and NMP (8.17 g) were added, followed by reaction at 40°C for 8 hours to obtain a polyamide acid solution (15) having a resin solid content concentration of 25 mass%. Of the polyamide acid, the number average molecular weight was 25,500, and the weight average molecular weight was 78,500.

<Preparation Example 16>

D2 (3.83 g, 15.3 mmol), B1 (1.64 g, 6.20 mmol), C1 (1.34 g, 12.4 mmol) and C2 (0.31 g, 2.07 mmol) were mixed in NMP (16.2 g), followed by reaction at 50°C for 8 hours, and then D1 (1.00 g, 5.10 mmol) and NMP (8.12 g) were added, followed by reaction at 40°C for 8 hours to obtain a polyamide acid solution (16) having a resin solid content concentration of 25 mass%. Of the polyamide acid, the number average molecular weight was 23,500, and the weight average molecular weight was 74,900.

The polyimide-based polymers obtained in Preparation Examples are shown in Tables 4 and 5. In Tables, *1 represents a polyamide acid.

[Table 4]

| Preparation Example | Polymer | Tetracarboxylic acid component | Diamine component | | | Imidization degree (%) |
|---|---|---|---|---|---|---|
| | | | First side chain type diamine | Second side chain type diamine | Other diamine | |
| 1 | Polyamide acid solution (1) | D1 (1.50 g, 7.65 mmol) D2 (5.74 g, 23.0 mmol) | A1 (7.08 g, 18.6 mmol) | B1 (2.46 g, 9.30 mmol) | C2 (0.47 3.10 mmol) g, | *1 |
| 2 | Polyimide powder (2) | D1 (1.50 g, 7.65 mmol) D2 (5.74 g, 23.0 mmol) | A1 (7.08 g, 18.6 mmol) | B1 (2.46 g, 9.30 mmol) | C2 (0.47 3.10 mmol) g, | 55 |
| 3 | Polyimide powder (3) | D1 (1.50 g, 7.65 mmol) D2 (1.91 g, 7.65 mmol) | A2 (3.06 g, 7.75 mmol) | B1 (0.82 g, 3.10 mmol) | C2 (0.71 4.65 mmol) g, | 50 |

(continued)

| Preparation Example | Polymer | Tetracarboxylic acid component | Diamine component | | | Imidization degree (%) |
|---|---|---|---|---|---|---|
| | | | First side chain type diamine | Second side chain type diamine | Other diamine | |
| 4 | Polyimide powder (4) | D1 (1.65 g, 8.41 mmol) D2 (2.11 g, 8.41 mmol) | A2 (3.36 g, 8.52 mmol) | B1 (0.90 g, 3.41 mmol) | C2 (0.52 g, 3.41 mmol) C3 (0.35 g, 1.70 mmol) | 61 |
| 5 | Polyimide powder (5) | D1 (0.65 g, 3.31 mmol) D2 (3.32 g, 13.3 mmol) | A4 (2.48 g, 5.04 mmol) | B1 (0.44 g, 1.68 mmol) | C2 (1.28 g, 8.39 mmol) C3 (0.34 g, 1.68 mmol) | 45 |
| 6 | Polyamide acid solution (6) | D1 (5.50 g, 28.1 mmol) D2 (1.75 g, 7.01 mmol) | A3 (6.15 g, 14.2 mmol) | B1 (1.88 g, 7.10 mmol) | C1 (0.38 g, 3.55 mmol) C2 (1.08 g, 7.10 mmol) C3 (0.72 g, 3.55 mmol) | *1 |
| 7 | Polyimide powder (7) | D1 (5.50 g, 28.1 mmol) D2 (1.75 g, 7.01 mmol) | A3 (6.15 g, 14.2 mmol) | B1 (1.88 g, 7.10 mmol) | C1 (0.38 g, 3.55 mmol) C2 (1.08 g, 7.10 mmol) C3 (0.72 g, 3.55 mmol) | 42 |
| 8 | Polyimide powder (8) | D1 (0.70 g, 3.57 mmol) D2 (2.68 g, 10.7 mmol) | A5 (3.27 g, 8.68 mmol) | B1 (1.15 g, 4.34 mmol) | C2 (0.22 g, 1.45 mmol) | 56 |
| 9 | Polyimide powder (9) | D3 (3.40 g, 15.2 mmol) | A2 (3.03 g, 7.68 mmol) | B1 (0.81 g, 3.07 mmol) | C2 (0.70 g, 4.61 mmol) | 65 |
| 10 | Polyimide powder (10) | D3 (3.55 g, 15.8 mmol) | A4 (2.37 g, 4.8 1mmol) | B1 (0.85 g, 3.21 mmol) | C2 (1.22 g, 8.02 mmol) | 41 |

[Table 5]

| Preparation Example | Polymer | Tetracarboxylic acid component | Diamine component | | | Imidization degree (%) |
|---|---|---|---|---|---|---|
| | | | First side chain type diamine | Second side chain type diamine | Other diamine | |
| 11 | Polyimide powder (11) | D1 (0.70 g, 3.57 mmol)<br>D4 (4.29 g, 14.3 mmol) | A3 (3.13 g, 7.23 mmol) | B1 (0.96 g, 3.62 mmol) | C2 (0.55 g, 3.62 mmol)<br>C3 (0.74 g, 3.62 mmol) | 55 |
| 12 | Polyamide acid solution (12) | D1 (1.80 g, 9.18 mmol)<br>D2 (6.89 g, 27.5 mmol) | A1 (8.49 g,<br>22.3 mmol) | - | C2 (2.26 14.9 mmol)<br>g, | *1 |
| 13 | Polyimide powder (13) | D1 (1.80 g, 9.18 mmol)<br>D2 (6.89 g, 27.5 mmol) | A1 (8.49 g,<br>22.3 mmol) | - | C2 (2.26 14.9 mmol)<br>g, | 55 |
| 14 | Polyimide powder (14) | D1 (1.55 g, 7.90 mmol)<br>D2 (1.98 g, 7.90 mmol) | A2 (3.16 g,<br>8.01 mmol) | - | C2 (1.22 8.01 mmol)<br>g, | 51 |
| 15 | Polyamide acid solution (15) | D1 (1.10 g, 5.61 mmol)<br>D2 (4.21 g, 16.8 mmol) | - | - | C1 (1.47 g, 13.6 mmol)<br>C2 (1.38 g, 9.09 mmol) | *1 |
| 16 | Polyamide acid solution (16) | D1 (1.00 g, 5.10 mmol)<br>D2 (3.83 g, 15.3 mmol) | - | B1 (1.64 g,<br>6.20 mmol) | C1 (1.34 g, 12.4 mmol)<br>C2 (0.31 g, 2.07 mmol) | *1 |

[Preparation of liquid crystal composition]

L1 (2.40 g), R1 (1.20 g), R2 (1.20 g) and P1 (0.012 g) were mixed to obtain a liquid crystal composition (1).

[Preparation of liquid crystal aligning agent]

In the after-described Examples 1 to 13 and Comparative Examples 1 to 5, Examples for preparation of liquid crystal aligning agent are described. The liquid crystal aligning agent is used for preparation of a liquid crystal display device and its evaluation. The respective liquid crystal aligning agents obtained in Examples and Comparative Examples are shown in Tables 6 and 7.

In Tables 6 and 7, numerical values in brackets with respect to the specific generator, the specific adhesive compound and the specific crosslinkable compound, represent their contents per 100 parts by mass of the specific polymer.

[Preparation of liquid crystal display device and evaluation of liquid crystal alignment property (glass substrate)]

The liquid crystal aligning agent in the after-described Example or Comparative Example was subjected to filtration under pressure through a membrane filter having a pore size of 1 μm, and a liquid crystal display device was prepared. Specifically, the liquid crystal aligning agent was applied by spin coating on an ITO surface of a 100×100 mm ITO electrode-provided glass substrate (100 mm × 100 mm × 0.7 mm in thickness) washed with pure water and IPA (isopropyl alcohol), and subjected to a heat treatment on a hotplate at 100°C for 5 minutes and in a circulating hot air clean oven at 210°C for 30 minutes to obtain an ITO substrate provided with a vertical liquid crystal alignment film having a film thickness of 100 nm. Two such ITO substrates provided with a vertical liquid crystal alignment film were prepared, and spacers having a thickness of 6 μm were applied to the vertical liquid crystal alignment film of one of the substrates. Then, on the vertical liquid crystal alignment film to which the spacers were applied, the above liquid crystal composition (1) was dropped by an ODF method, and the other substrate was bonded so that the vertical liquid crystal alignment films faced each other to prepare a non-treated liquid crystal display device.

The non-treated liquid crystal display devic was irradiated with ultraviolet rays for an irradiation time of 30 seconds using a metal halide lamp with an illuminance of 20 mW while wavelengths of at most 350 nm were cut off. On that occasion, the temperature in the irradiation apparatus in which the liquid crystal cell was irradiated with ultraviolet rays was controlled to 25°C. By such an operation, a liquid crystal display device (reverse device) was obtained.

Using the liquid crystal display device, the liquid crystal alignment property was evaluated, by observing the device with a polarizing microscope (ECLIPSE E600WPOL, manufactured by NIKON CORPORATION) to confirm whether the liquid crystal was vertically aligned or not. Specifically, a device in which the liquid crystal was vertically aligned was evaluated as excellent (represented by "good" in Tables 8 and 9).

Further, the liquid crystal display device after the above evaluation of the liquid crystal alignment property was completed, was stored in a high temperature chamber at a temperature of 90°C for 240 hours. Then, the liquid crystal alignment property was evaluated under the same conditions as above. Specifically, a device in which the liquid crystal alignment property was not disturbed and the liquid crystal was uniformly aligned, was evaluated as excellent (represented by "good" in Tables 8 and 9).

[Preparation of liquid crystal display device and evaluation of liquid crysal alignment property (plastic substrate)]

The liquid crystal aligning agent in the after-described Example or Comparative Example was subjected to filtration under pressure through a membrane filter having a pore size of 1 μm, and a liquid crystal display device was prepared. Specifically, the liquid crystal aligning agent was applied by a bar coater on an ITO surface of a 150×150 mm ITO electrode-provided PET (polyethylene terephthalate) substrate (150 mm × 150 mm × 0.2 mm in thickness) washed with pure water, and subjected to a heat treatment on a hotplate at 100°C for 5 minutes and in a circulating hot air clean oven at 120°C for 2 minutes to obtain an ITO substrate provided with a vertical liquid crystal alignment film having a film thickness of 100 nm. Two such ITO substrates provided with a vertical liquid crystal alignment film were prepared, and spacers having a thickness of 6 μm were applied to the vertical liquid crystal alignment film of one of the substrates. Then, on the vertical liquid crystal alignment film to which the spacers were applied, the above liquid crystal composition (1) was dropped by an ODF method, and the other substrate was bonded so that the vertical liquid crystal alignment films faced each other to prepare a non-treated liquid crystal display device.

Then, a reverse device was prepared in the same manner as in the case of the above glass substrate, and further, the liquid crystal alignment property of the device and the liquid crystal alignment property after storage in a constant temperature chamber were evaluated (represented by "good" in Tables 8 and 9).

[Evaluation of optical properties (transparency and scattering property) (glass substrate)]

The transparency when no voltage was applied was evaluated by measuring the transmittance of the liquid crystal display device (glass substrate) in a state where no voltage was applied. Specifically, the transmittance was measured using UV-3600 (manufactured by Shimadzu Corporation) as a measurement apparatus, at a temperature of 25°C using the above-mentioned ITO electrode-provided glass substrate as a reference at a scanning wavelength of from 300 to 800 nm. The transparency was evaluated by the transmittance at a wavelength of 450 nm, and a device with a higher transmittance was evaluated as excellent in the transparency (the transmittance (%) is shown in Tables 8 and 9).

The scattering property when a voltage was applied was evaluated by applying an alternating voltage of 30 V to the liquid crystal display device (glass substrate) and visually observing the liquid crystal alignment state. Specifially, a device which was turbid, that is, a device of which scattering property was observed was evaluated as excellent (represented by "good" in Tables 8 and 9).

[Evaluation of optical properties (transparency and scattering property) (plastic substrate)]

The transparency when no voltage was applied was conducted by measuring the transmittance under the same conditions as above (evaluation of optical properties (transparency and scattering property) (glass substrate)) (the above ITO electrode-provided PET substrate was used as a reference), and a device with a higher transmittance was evaluated as excellent (the transmittance (%) is shown in Tables 8 and 9).

The scattering property when a voltage was applied was evaluated by applying an alternating voltage of 30 V under the same conditions as above (evaluation of optical properties (transparency and scattering property (glass substrate)) and visually observing the liquid crystal alignment state, and a device which was turbid was evaluated as excellent (represented by "good" in Tables 8 and 9).

[Evaluation of adhesion between liquid crystal layer and vertical liquid crystal alignment film (glass substrate)]

The above obtained liquid crystal display device (glass substrate) was stored in a high temperature high humidity chamber at a temperature of 80°C under a humidity of 90% for 48 hours, and presence or absence of bubbles in the liquid crystal display device (glass substrate) and separation of the device were confirmed. A device in which no bubbles were observed and separation of the device (separation of the liquid crystal layer and the vertical liquid crystal alignment film) did not occur was evaluated as excellent (represented by "good" in Tables 8 and 9).

[Evaluation of adhesion between liquid crystal layer and vertical liquid crystal alignment film (plastic substrate)]

The above obtained liquid crystal display device (plastic substrate) was stored in a high temperature high humidity chamber at a temperature of 80°C under a humidity of 90% for 48 hours, and presence or absence of bubbles in the liquid crystal display device (plastic substrate) and separation of the device were confirmed. A device in which no bubbles were observed and separation of the device (separation of the liquid crystal layer and the vertical liquid crystal alignment film) did not occure was evaluated as excellent (represented by "good" in Tables 8 and 9).

<Example 1 (reference example)>

To the polyamide acid solution (1) (5.50 g) having a resin solid content concentration of 25 mass% obtained in Preparation Example 1, NMP (10.5 g) and BCS (14.6 g) were added, followed by stirring at 25°C for 4 hours to obtain a liquid crystal aligning agent (1). The liquid crystal aligning agent was confirmed to be a uniform solution without abnormality such as turbidity or precipitation.

<Example 2 (reference example)>

To the polyimide powder (2) (1.40 g) obtained in Preparation Example 2, NEP (14.9 g) was added, followed by stirring at 60°C for 24 hours to dissolve the polyimide powder (2). Then, PB (14.9 g) was added, followed by stirring at 25°C for 2 hours to obtain a liquid crystal aligning agent (2). The liquid crystal aligning agent was confirmed to be a uniform solution without abnormality such as turbidity or precipitation.

<Example 3 (reference example)>

To the polyimide powder (3) (1.45 g) obtained in Preparation Example 3, γ-BL (3.08 g) and PGME (27.7 g) were added, followed by stirring at 60°C for 24 hours to obtain a liquid crystal aligning agent (3). The liquid crystal aligning agent was confirmed to be a uniform solution without abnormality such as turbidity or precipitation.

<Example 4>

To the polyimide powder (3) (1.45 g) obtained in Preparation Example 3, γ-BL (3.08 g) and PGME (27.7 g) were added, followed by stirring at 60°C for 24 hours. Then, N1 (0.073 g), M1 (0.29 g) and K1 (0.102 g) were added, followed by stirring at 25°C for 4 hours to obtain a liquid crystal aligning agent (4). The liquid crystal aligning agent was confirmed to be a uniform solution without abnormality such as turbidity or precipitation.

<Example 5>

To the polyimide powder (4) (1.40 g) obtained in Preparation Example 4, γ-BL (4.46 g) and PGME (25.3 g) were added, followed by stirring at 60°C for 24 hours. Then, N1 (0.028 g), M1 (0.42 g) and K1 (0.098 g) were added,

followed by stirring at 25°C for 4 hours to obtain a liquid crystal aligning agent (5). The liquid crystal aligning agent was confirmed to be a uniform solution without abnormality such as turbidity or precipitation.

<Example 6>

To the polyimide powder (5) (1.40 g) obtained in Preparation Example 5, γ-BL (5.94 g) and PGME (23.8 g) were added, followed by stirring at 60°C for 24 hours. Then, N1 (0.07 g), M2 (0.07 g) and K1 (0.07 g) were added, followed by stirring at 25°C for 4 hours to obtain a liquid crystal aligning agent (6). The liquid crystal aligning agent was confirmed to be a uniform solution without abnormality such as turbidity or precipitation.

<Example 7>

To the polyamide acid solution (6) (5.50 g) having a resin solid content concentration of 25 mass% obtained in Preparation Example 6, NEP (10.5 g) and PB (14.6 g) were added, followed by stirring at 25°C for 4 hours. Then, N1 (0.069 g), M1 (0.276 g) and K1 (0.138 g) were added, followed by stirring at 25°C for 4 hours to obtain a liquid crystal aligning agent (7). The liquid crystal aligning agent was confirmed to be a uniform solution without abnormality such as turbidity or precipitation.

<Example 8 (reference example)>

To the polyimide powder (7) (1.45 g) obtained in Preparation Example 7, NEP (15.4 g) was added, followed by stirring at 60°C for 24 hours to dissolve the polyimide powder (7). Then, BCS (6.15 g) and PB (9.23 g) were added, followed by stirring at 25°C for 4 hours to obtain a liquid crystal aligning agent (8). The liquid crystal aligning agent was confirmed to be a uniform solution without abnormalitity such as turbidity or precipitation.

<Example 9>

To the polyimide powder (7) (1.45 g) obtained in Preparation Example 7, NEP (15.4 g) was added, followed by stirring at 60°C for 24 hours to dissolve the polyimide powder (7). Then, BCS (6.15 g), PB (9.23 g), N1 (0.145 g), M2 (0.145 g) and K1 (0.073 g) were added, followed by stirring at 25°C for 4 hours to obtain a liquid crystal aligning agent (9). The liquid crystal aligning agent was confirmed to be a uniform solution without abnormalitity such as turbidity or precipitation.

<Example 10 (reference example)>

To the polyimide powder (8) (1.50 g) obtained in Preparation Example 8, NEP (15.9 g) was added, followed by stirring at 60°C for 24 hours to dissolve the polyimide powder (8). Then, PB (15.9 g) was added, followed by stirring at 25°C for 2 hours to obtain a liquid crystal aligning agent (10). The liquid crystal aligning agent was confirmed to be a uniform solution without abnormality such as turbidity or precipitation.

<Example 11>

To the polyimide powder (9) (1.45 g) obtained in Preparation Example 9, γ-BL (4.62 g), PGME (23.1 g) and PB (3.08 g) were added, followed by stirring at 60°C for 24 hours. Then, N1 (0.102 g), M2 (0.363 g) and K1 (0.073 g) were added, followed by stirring at 25°C for 4 hours to obtain a liquid crystal aligning agent (11). The liquid crystal aligning agent was confirmed to be a uniform solution without abnormality such as turbidity or precipitation.

<Example 12>

To the polyimide powder (10) (1.40 g) obtained in Preparation Example 10, NEP (17.8 g) was added, followed by stirring at 60°C for 24 hours to dissolve the polyimide powder (10). Then, BCS (5.94 g), PB (5.94 g), N1 (0.07 g), M1 (0.49 g) and K1 (0.14 g) were added, followed by stirring at 25°C for 4 hours to obtain a liquid crystal aligning agent (12). The liquid crystal aligning agent was confirmed to be a uniform solution without abnormalitity such as turbidity or precipitation.

<Example 13>

To the polyimide powder (11) (1.40 g) obtained in Preparation Example 11, γ-BL (2.97 g) and PGME (26.7 g)

were added, followed by stirring at 60°C for 24 hours. Then, N1 (0.07 g), M2 (0.42 g) and K1 (0.042 g) were added, followed by stirring at 25°C for 4 hours to obtain a liquid crystal aligning agent (13). The liquid crystal aligning agent was confirmed to be a uniform solution without abnormality such as turbidity or precipitation.

<Comparative Example 1>

To the polyamide acid solution (12) (5.45 g) having a resin solid content concentration of 25 mass% obtained in Preparation Example 12, NMP (10.4 g) and BCS (14.5 g) were added, followed by stirring at 25°C for 4 hours to obtain a liquid crystal aligning agent (14). The liquid crystal aligning agent was confirmed to be a uniform solution without abnormality such as turbidity or precipitation.

<Comparative Example 2>

To the polyimide powder (13) (1.45 g) obtained in Preparation Example 13, NEP (15.4 g) was added, followed by stirring at 60°C for 24 hours to dissolve the polyimide powder (13). Then, PB (15.4 g) was added, followed by stirring at 25°C for 2 hours to obtain a liquid crystal aligning agent (15). The liquid crystal aligning agent was confirmed to be a uniform solution without abnormality such as turbidity or precipitation.

<Comparative Example 3>

To the polyimide powder (14) (1.45 g) obtained in Preparation Example 14, γ-BL (3.08 g) and PGME (27.7 g) were added, followed by stirring at 60°C for 24 hours to obtain a liquid crystal aligning agent (16). The liquid crystal aligning agent was confirmed to be a uniform solution without abnormality such as turbidity or precipitation.

<Comparative Example 4>

To the polyamide acid solution (15) (5.50 g) having a resin solid content concentration of 25 mass% obtained in Preparation Example 15, NMP (10.5 g) and BCS (14.6 g) were added, followed by stirring at 25°C for 4 hours to obtain a liquid crystal aligning agent (17). The liquid crystal aligning agent was confirmed to be a uniform solution without abnormality such as turbidity or precipitation.

<Comparative Example 5>

To the polyamide acid solution (1) (5.50 g) having a resin solid content concentration of 25 mass% obtained in Preparation Example 16, NMP (10.5 g) and BCS (14.6 g) were added, followed by stirring at 25°C for 4 hours to obtain a liquid crystal aligning agent (18). The liquid crystal aligning agent was confirmed to be a uniform solution without abnormality such as turbidity or precipitation.

[Results of evaluation]

Using the liquid crystal aligning agents (1) to (13) obtained in Examples 1 to 13, the liquid crystal aligning agents (14) to (18) obtained in Comparative Examples 1 to 5 and the above liquid crystal composition (1), the liquid crystal display device was prepared, and the liquid crystal aligning property, the optical properties (transparency and scattering property) and the adhesion between the liquid crystal layer and the vertical liquid crystal alignment film were evaluated.

Evaluation using the liquid crystal aligning agents (1), (2), (7) to (10), (12), (14), (15), (17) and (18) was carried out with the device using the glass substrate, and evaluation using the liquid crystal aligning agents (3) to (6), (11), (13) and (16) was carried out with the device using the plastic substrate. The evaluation results are shown in Tables 8 and 9.

With respect to the evaluation of the adhesion between the liquid crystal layer and the vertical liquid crystal alignment film in devices using the liquid crystal aligning agents (2), (3), (4), (8), (9) and (10), in addition to the above standard test, as an emphasized test, the adhesion after storage in a high temperature high humidity chamber at a temperature of 80°C under a humidity of 90% for 144 hours was also evaluated (the other conditions were the same as the above conditions). As a result, in the devices using the liquid crystal aligning agents (2), (4) and (9), no bubbles were obserbed, however, in the devices using the liquid crystal aligning agents (3), (8) and (10), bubbles were confirmed in a small amount.

[Table 6]

| Example | Liquid crystal aligning agent | Specific polymer | Polymer | Specific generator | Specific adhesive compound | Specific crosslinkable compound |
|---|---|---|---|---|---|---|
| 1* | (1) | Polyamide acid solution (1) | - | - | - | - |
| 2* | (2) | Polyimide powder (2) | - | - | - | - |
| 3* | (3) | Polyimide powder (3) | - | - | - | - |
| 4 | (4) | Polyimide powder (3) | - | N1(5) | M1(20) | K1(7) |
| 5 | (5) | Polyimide powder (4) | - | N1(2) | M1(30) | K1(7) |
| 6 | (6) | Polyimide powder (5) | - | N1(5) | M2(5) | K1(5) |
| 7 | (7) | Polyamide acid solution (6) | - | N1(5) | M1(20) | K1(10) |
| 8* | (8) | Polyimide powder (7) | - | - | - | - |
| 9 | (9) | Polyimide powder (7) | - | N1 (10) | M2(10) | K1(5) |
| 10* | (10) | Polyimide powder (8) | - | - | - | - |
| 11 | (11) | Polyimide powder (9) | - | N1(7) | M2(25) | K1(5) |
| 12 | (12) | Polyimide powder (10) | - | N1(5) | M1(35) | K1(10) |
| 13 | (13) | Polyimide powder (11) | - | N1(5) | M2(30) | K1(3) |
| * indicates a reference example. | | | | | | |

[Table 7]

| Comparative Example | Liquid crystal aligning agent | Specific polymer | Polymer | Specific generator | Specific adhesive compound | Specific crosslinkable compound |
|---|---|---|---|---|---|---|
| 1 | (14) | - | Polyamide acid solution (12) | - | - | - |
| 2 | (15) | - | Polyimide powder (13) | - | - | - |
| 3 | (16) | - | Polyimide powder (14) | - | - | - |
| 4 | (17) | - | Polyamide acid solution (15) | - | - | - |

(continued)

| Comparative Example | Liquid crystal aligning agent | Specific polymer | Polymer | Specific generator | Specific adhesive compound | Specific crosslinkable compound |
|---|---|---|---|---|---|---|
| 5 | (18) | - | Polyamide acid solution (16) | - | - | - |

[Table 8]

| Example | Liquid crystal aligning agent | Liquid crystal alignment property | | Optical properties | | Adhesion between liquid crystal layer and vertical liquid crystal alignment film (standard test/emphasized test) |
|---|---|---|---|---|---|---|
| | | Initial | After storage in high temperature chamber | Transmittance (%) | Scattering property | |
| 1* | (1) | Good | Good | 85.0 | Good | Good / - |
| 2* | (2) | Good | Good | 85.8 | Good | Good / Good |
| 3* | (3) | Good | Good | 88.5 | Good | Good / *1 |
| 4 | (4) | Good | Good | 89.0 | Good | Good / Good |
| 5 | (5) | Good | Good | 89.4 | Good | Good / - |
| 6 | (6) | Good | Good | 87.8 | Good | Good / - |
| 7 | (7) | Good | Good | 86.0 | Good | Good / - |
| 8* | (8) | Good | Good | 86.4 | Good | Good / *1 |
| 9 | (9) | Good | Good | 87.1 | Good | Good / Good |
| 10* | (10) | Good | Good | 84.5 | Good | Good / *1 |
| 11 | (11) | Good | Good | 88.9 | Good | Good / - |
| 12 | (12) | Good | Good | 87.7 | Good | Good / - |
| 13 | (13) | Good | Good | 87.4 | Good | Good / - |
| *1 indicates a reference example. | | | | | | |

[Table 9]

| Comparative Example | Liquid crystal aligning agent | Liquid crystal alignment property | | Optical properties | | Adhesion between liquid crystal layer and vertical liquid crystal alignment film (standard test/ emphasized test) |
|---|---|---|---|---|---|---|
| | | Initial | After storage in high temperature chamber | Transm ittance (%) | Scattering property | |
| 1* | Liquid crystal aligning agent (14) | Good | *3 | 84.4 | Good | *1 / - |

(continued)

| Comparative Example | Liquid crystal aligning agent | Liquid crystal alignment property | | Optical properties | | Adhesion between liquid crystal layer and vertical liquid crystal alignment film (standard test/ emphasized test) |
|---|---|---|---|---|---|---|
| | | Initial | After storage in high temperature chamber | Transmittance (%) | Scattering property | |
| 2* | Liquid crystal aligning agent (15) | Good | *3 | 85.3 | Good | *1 / - |
| 3* | Liquid crystal aligning agent (16) | Good | *3 | 87.8 | Good | *2 / - |
| 4 | Liquid crystal aligning agent (17) | *4 | *4 | *4 | *4 | *4 |
| 5 | Liquid crystal aligning agent (18) | *4 | *4 | *4 | *4 | *4 |
| *1 indicates a reference example.<br>*1: Bubbles were observed in a small amount in the device.<br>*2: Bubbles were observed in a large amount in the device.<br>*3: The liquid crystal alignment property was disturbed.<br>*4: The liquid crystal was not vertically aligned. | | | | | | |

As evident from above, the liquid crystal display devices in Examples are liquid crystal optical devices which have favorable optical properties, that is, in which the liquid crystal alignment property after storage in a high temperature chamber, the transparency when no voltage was applied and the scattering property when a voltage was applied were favorable, as compared with Comparative Examples. Further, in the liquid crystal display devices, the adhesion between the liquid crystal layer and the vertical liquid crystal alignment film was high. Even when a plastic substrate is employed as the substrate of the liquid crystal display device, such properties were favorable.

Particularly in Examples in which the second side chain type diamine represented by the above formula [2a] having the second side chain structure was used, the liquid crystal alignment property was not disturbed even when the liquid crystal display device was stored in a high temperature chamber for a long time, and further, no bubbles were observed in the device even after the liquid crystal display device was stored in a high temperature high humidity chamber, as compared with Comparative Examples in which the above second side chain type diamine was not used. Such are confirmed speficially by comparison between Example 1 and Comparative Example 1, between Example 2 and Comparative Example 2, and between Example 3 and Comparative Example 3, under the same conditions.

Further, in a case where the above formula [1-1] was employed among the first side chain structures, optical properties of the liquid crystal display device, particularly the transparency when no voltage was applied, were more excellent as compared with the case of the formula [1-2]. Further, the adhesion between the liquid crystal layer and the vertical liquid crystal alignment film was also excellent. Such are confirmed specifically by comparison between Example 2 and Example 10 under the same conditions (the adhesion between the liquid crystal layer and the vertical liquid crystal alignment film was compared by the emphasized test).

Further, it was confirmed that the adhesion between the liquid crystal layer and the vertical liquid crystal alignment film in the liquid crystal display device was further improved by incorporating the specific generatore, the specific adhesive compound and the specific crosslinkable compound in the liquid crystal aligning agent, as compared with a case where they were not incorporated. Such are specifically confirmed by comparison between Example 3 and Example 4, and between Example 8 and Example 9, under the same conditions in the emphasized test.

INDUSTRIAL APPLICABILITY

The liquid crystal display device of the present invention can be suitably used as a reverse device. The present device is useful for e.g. a liquid crystal display used for display and further a light control window or an optical shutter device controlling transmission and blocking of light, and as the substrate of such a reverse device, a plastic substrate can be used.

## Claims

**1.** A liquid crystal display device, which is in a transparent state when no voltage is applied and in a scattering state when a voltage is applied, and which comprises a liquid crystal layer formed by disposing a liquid crystal composition containing a polymerizable compound which undergoes a polymerization reaction by ultraviolet rays, between a pair of substrates provided with an electrode, and irradiating the liquid crystal composition with ultraviolet rays and curing it in such a state that the liquid crystal composition partly or entirely shows liquid crystallinity, and at least one of the substrates being provided with a liquid crystal alignment film to vertically align a liquid crystal, wherein the liquid crystal alignment film is a liquid crystal alignment film obtained from a liquid crystal aligning agent containing a solvent and a polymer having a side chain structure (first side chain structure) represented by the following formula [1-1] or [1-2] and a side chain structure (second side chain structure) represented by the following formula [2]:

$$-X^1-X^2-X^3-X^4-\left(-X^5-\right)_n-X^6 \qquad [1-1]$$

wherein $X^1$ and $X^3$ are each independently at least one binding group selected from the group consisting of a single bond, - $(CH_2)_a$- (wherein a is an integer of from 1 to 15), -O-, -$CH_2O$-, -COO- and -OCO-; $X^2$ is a single bond or -$(CH_2)_b$- (wherein b is an integer of from 1 to 15); $X^4$ is at least one bivalent cyclic group selected from the group consisting of a benzene ring, a cyclohexane ring and a heterocyclic ring, or a $C_{17-51}$ bivalent organic group having a steroid skeleton, provided that an optional hydrogen atom on the cyclic group may be substituted by a $C_{1-3}$ alkyl group, a $C_{1-3}$ alkoxy group, a $C_{1-3}$ fluorine-containing alkyl group, a $C_{1-3}$ fluorine-containing alkoxy group or a fluorine atom; $X^5$ is at least one cyclic group selected from the group consisting of a benzene ring, a cyclohexane ring and a heterocyclic ring, provided that an optional hydrogen atom on such a cyclic group may be substituted by a $C_{1-3}$ alkyl group, a $C_{1-3}$ alkoxy group, a $C_{1-3}$ fluorine-containing alkyl group, a $C_{1-3}$ fluorine-containing alkoxy group or a fluorine atom; n is an integer of from 0 to 4; and $X^6$ is at least one member selected from the group consisting of a $C_{1-18}$ alkyl group, a $C_{1-18}$ fluorine-containing alkyl group, a $C_{1-18}$ alkoxy group and a $C_{1-18}$ fluorine-containing alkoxy group;

$$-x^7-x^8 \qquad [1-2]$$

wherein $X^7$ is at least one binding group selected from the group consisting of a single bond, -O-, -$CH_2O$-, -CONH-, -NHCO-, -CON$(CH_3)$-, -N$(CH_3)$CO-, -COO- and -OCO-; and $X^8$ is a $C_{8-22}$ alkyl group or a $C_{6-18}$ fluorine-containing alkyl group;

$$-Y^1-Y^2-Y^3-Y^4 \qquad [2]$$

wherein $Y^1$ and $Y^3$ are each independently at least one binding group selected from the group consisting of a single bond, -O-, -NH-, -N$(CH_3)$-, -$CH_2O$-, -CONH-, -NHCO-, -CON$(CH_3)$-, -N$(CH_3)$CO-, -COO- and -OCO-; $Y^2$ is a $C_{1-18}$ alkylene group, or a $C_{6-24}$ organic group having at least one cyclic group selected from the group consisting of a benzene ring, a cyclocyclohexane ring and a heterocyclic ring, provided that an optional hydrogen atom on such a cyclic group may be substituted by a $C_{1-3}$ alkyl group, a $C_{1-3}$ alkoxy group, a $C_{1-3}$ fluorine-containing alkyl group, a $C_{1-3}$ fluorine-containing alkoxy group or a fluorine atom; and $Y^4$ is at least one member selected from the group consisting of structures represented by the following formulae [2-a] to [2-g]:

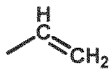

[2-a]

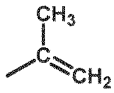

[2-b]

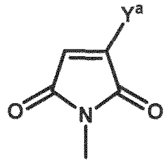

[2-c]

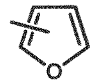

[2-d]

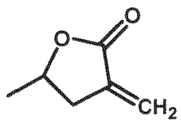

[2-e]

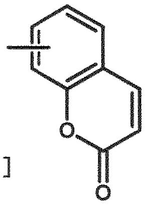

[2-f ]

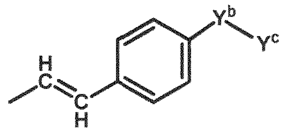

[2-g]

wherein $Y^a$ is a hydrogen atom or a benzene ring; $Y^b$ is a single bond, or at least one cyclic group selected from the group consisting of a benzene ring, a cyclohexane ring and a heterocyclic ring; and $Y^c$ is at least one member selected from the group consisting of a $C_{1-18}$ alkyl group, a $C_{1-18}$ fluorine-containing alkyl group, a $C_{1-18}$ alkoxy group and a $C_{1-18}$ fluorine-containing alkoxy group, wherein the liquid crystal aligning agent is a liquid crystal aligning agent containing a polyimide precursor obtained by a reaction of a diamine component containing a diamine having the side chain structure represented by the above formula [1-1] or [1-2] and a diamine having the side chain structure represented by the above formula [2], and a tetracarboxylic acid component, or a polyimide obtained by imidizing the polyimide precursor, wherein the liquid crystal aligning agent contains at least one generator selected from the group consisting of a photo-radical generator, a photo-acid generator and a photo-base generator,
wherein the liquid crystal aligning agent contains a compound having at least one member selected from the group consisting of structures represented by the following formulae [b-1] to [b-8]:

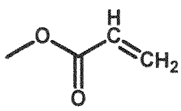

[b-1]

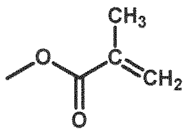

[b-2]

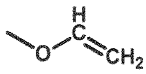

[b-3]

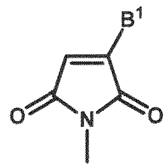

[b-4]

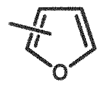

[b-5]

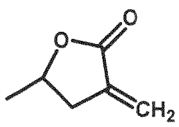

[b-6]

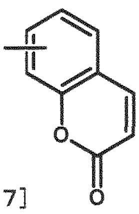

[b-7]

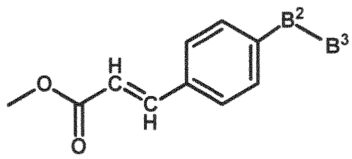

[b-8]

wherein $B^1$ is a hydrogen atom or a benzene ring, $B^2$ is at least one cyclic group selected from the group consisting of a benzene ring, a cyclohexane ring and a heterocyclic ring, and $B^3$ is at least one member selected from the group consisting of a $C_{1-8}$ alkyl group, a $C_{1-18}$ fluorine-containing alkyl group, a $C_{1-18}$ alkoxy group and a $C_{1-18}$ fluorine-containing alkoxy group, and
wherein the liquid crystal aligning agent contains a compound having at least one group selected from the group consisting of an epoxy group, an isocyanate group, an oxetane group, a cyclocarbonate group, a hydroxy group, a hydroxyalkyl group and a lower alkoxyalkyl group.

**2.** The liquid crystal display device according to Claim 1, wherein the proportion of the diamine having the side chain structure represented by the above formula [1-1] or [1-2] is from 10 to 80 mol% based on the diamine component.

3. The liquid crystal display device according to Claim 1 or 2, wherein the proportion of the diamine having the side chain structure represented by the above formula [2] is from 1 to 50 mol% based on the diamine component.

4. The liquid crystal display device according to any one of Claims 1 to 3, wherein the diamine having the side chain structure represented by the above formula [1-1] or [1-2] is a diamine represented by the following formula [la]:

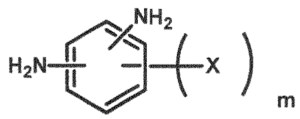

[1a]

wherein X is the structure represented by the above formula [1-1] or [1-2], and m is an integer of from 1 to 4.

5. The liquid crystal display device according to Claim 4, wherein the diamine is a diamine represented by the following formula [la-1]:

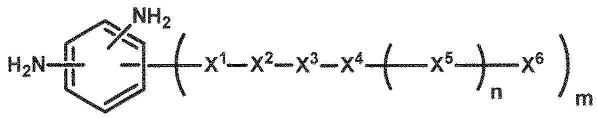

[1a−1]

wherein $X^1$, $X^2$, $X^3$, $X^4$, $X^5$, $X^6$ and n are as defined for the formula [1-1] in Claim 1, and m is an integer of from 1 to 4.

6. The liquid crystal display device according to any one of Claims 1 to 5, wherein the diamine having the side chain structure represented by the above formula [2] is a diamine represented by the following formula [2a]:

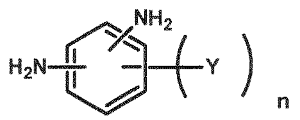

[2a]

wherein Y is the structure represented by the above formula [2], and n is an integer of from 1 to 4.

7. The liquid crystal display device according to any one of Claims 1 to 6, wherein the tetracarboxylic acid component is a tetracarboxylic acid dianhydride represented by the following formula [3]:

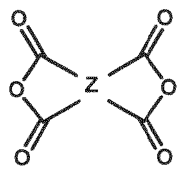

[3]

wherein Z is at least one member selected from the group consisting of structures represented by the following formulae [3a] to [3k]:

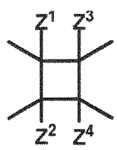

[3a]

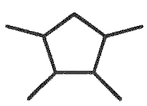

[3b]

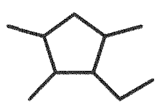

[3c]

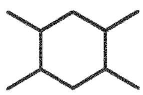

[3d]

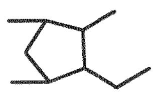

[3e]

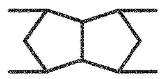

[3f ]

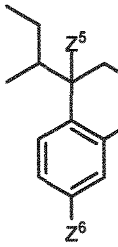
[3g]
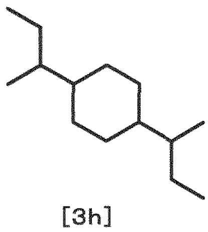
[3h]
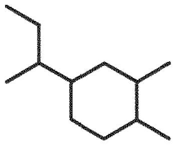
[3i ]
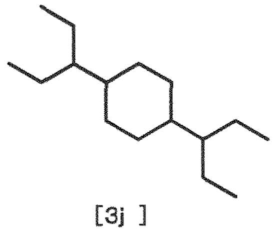
[3j ]
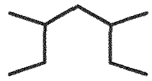
[3k]

wherein $Z^1$ to $Z^4$ are each independently at least one member selected from the group consisting of a hydrogen atom, a methyl group, a chlorine atom and a benzene ring, and $Z^5$ and $Z^6$ are each independently a hydrogen atom or a methyl group.

**8.** The liquid crystal display device according to any one of Claims 1 to 7, wherein the liquid crystal aligning agent contains at least one solvent selected from the group consisting of 1-hexanol, cyclohexanol, 1,2-ethanediol, 1,2-propanediol, propylene glycol monobutyl ether, ethylene glycol monobutyl ether, dipropylene glycol dimethyl ether, cyclohexanone, cyclopentanone and solvents represented by the following formulae [D1] to [D3]:

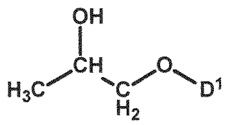
[D1]
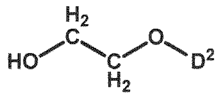
[D2]
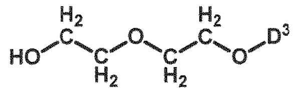
[D3]

wherein $D^1$ is a $C_{1-3}$ alkyl group, $D^2$ is a $C_{1-3}$ alkyl group, and $D^3$ is a $C_{1-4}$ alkyl group.

**9.** The liquid crystal display device according to any one of Claims 1 to 8, wherein the liquid crystal aligning agent contains at least one solvent selected from the group consisting of N-methyl-2-pyrrolidone, N-ethyl-2-pyrrolidone and $\gamma$-butyrolactone.

**10.** The liquid crystal display device according to any one of Claims 1 to 9, wherein the substrate is a glass substrate or a plastic substrate.

**11.** A liquid crystal alignment film to be used for the liquid crystal display device as defined in any one of Claims 1 to 10.

**12.** A liquid crystal aligning agent to form the liquid crystal alignment film as defined in Claim 11.

## Patentansprüche

**1.** Flüssigkristall-Anzeigevorrichtung, die sich in einem transparenten Zustand befindet, wenn keine Spannung angelegt wird, und in einem Streuzustand, wenn eine Spannung angelegt wird, und die eine Flüssigkristallschicht umfasst, die durch Anordnen einer Flüssigkristall-Zusammensetzung gebildet wird, die eine polymerisierbare Verbindung enthält, die eine Polymerisationsreaktion durch ultraviolette Strahlen durchläuft, zwischen einem Paar von Substraten, die mit einer Elektrode versehen sind, und Bestrahlen der Flüssigkristall-Zusammensetzung mit ultravioletten Strahlen und Härten in einem solchen Zustand, dass die Flüssigkristall-Zusammensetzung teilweise oder vollständig Flüssigkristallinität zeigt, und wenigstens eines der Substrate mit einem Flüssigkristall-Ausrichtungsfilm versehen ist, um einen Flüssigkristall vertikal auszurichten, wobei der Flüssigkristall-Ausrichtungsfilm ein Flüssigkristall-Ausrichtungsfilm ist, der aus einem Flüssigkristall-Ausrichtungsmittel erhalten wird, das ein Lösungsmittel und ein Polymer mit einer Seitenkettenstruktur (erste Seitenkettenstruktur), dargestellt durch die folgende Formel [1-1] oder [1-2] und einer Seitenkettenstruktur (zweite Seitenkettenstruktur), dargestellt durch die folgende Formel [2], enthält:

$$-X^1-X^2-X^3-X^4-\left(-X^5-\right)_n-X^6 \qquad [1-1]$$

wobei $X^1$ und $X^3$ jeweils unabhängig voneinander für wenigstens eine Bindungsgruppe stehen, ausgewählt aus der Gruppe, bestehend aus einer Einfachbindung, $-(CH_2)_a-$(wobei a für eine ganze Zahl von 1 bis 15 steht), -O-, $-CH_2O-$, -COO- und -OCO-; $X^2$ für eine Einfachbindung oder $-(CH_2)_b-$ steht (wobei b für eine ganze Zahl von 1 bis 15 steht); $X^4$ für wenigstens eine zweiwertige cyclische Gruppe steht, ausgewählt aus der Gruppe, bestehend aus einem Benzolring, einem Cyclohexanring und einem heterocyclischen Ring oder einer zweiwertigen organischen $C_{17-51}$-Gruppe mit einem Steroidgerüst, mit der Maßgabe, dass ein optionales Wasserstoffatom an der cyclischen Gruppe durch eine $C_{1-3}$-Alkylgruppe, eine $C_{1-3}$-Alkoxygruppe, eine fluorhaltige $C_{1-3}$-Alkylgruppe, eine fluorhaltige $C_{1-3}$-Alkoxygruppe oder ein Fluoratom substituiert sein kann; $X^5$ für wenigstens eine cyclische Gruppe steht, ausgewählt aus der Gruppe, bestehend aus einem Benzolring, einem Cyclohexanring und einem heterocyclischen Ring, mit der Maßgabe, dass ein optionales Wasserstoffatom an einer solchen cyclischen Gruppe durch eine $C_{1-3}$-Alkylgruppe, eine $C_{1-3}$-Alkoxygruppe, eine fluorhaltige $C_{1-3}$-Alkylgruppe, eine fluorhaltige $C_{1-3}$-Alkoxygruppe oder ein Fluoratom substituiert sein kann; n für eine ganze Zahl von 0 bis 4 steht; und $X^6$ für wenigstens ein Element steht, ausgewählt aus der Gruppe, bestehend aus einer $C_{1-18}$-Alkylgruppe, einer fluorhaltigen $C_{1-18}$-Alkylgruppe, einer $C_{1-18}$-Alkoxygruppe und einer fluorhaltigen $C_{1-18}$-Alkoxygruppe;

$-x^7-x^8$ [1-2]

wobei $X^7$ für wenigstens eine Bindungsgruppe steht, ausgewählt aus der Gruppe, bestehend aus einer Einfachbindung, -O-, $-CH_2O-$, -CONH-, -NHCO-, $-CON(CH_3)-$,$-N(CH_3)CO-$, -COO- und -OCO-; und $X^8$ für eine $C_{8-22}$-Alkylgruppe oder eine fluorhaltige $C_{6-18}$-Alkylgruppe steht;

$Y^1-Y^2-Y^3-Y^4$ [2]

wobei $Y^1$ und $Y^3$ jeweils unabhängig voneinander für wenigstens eine Bindungsgruppe stehen, ausgewählt aus der Gruppe, bestehend aus einer Einfachbindung, -O-, -NH-,$-N(CH_3)-$, $-CH_2O-$, -CONH-, -NHCO-, $-CON(CH_3)-$, $-N(CH_3)CO-$, -COO- und -OCO-; $Y^2$ für eine $C_{1-18}$-Alkylengruppe oder eine organische $C_{6-24}$-Gruppe mit wenigstens einer cyclischen Gruppe steht, ausgewählt aus der Gruppe, bestehend aus einem Benzolring, einem Cyclohexanring und einem heterocyclischen Ring, mit der Maßgabe, dass ein optionales Wasserstoffatom an einer solchen cyclischen Gruppe durch eine $C_{1-3}$-Alkylgruppe, eine $C_{1-3}$-Alkoxygruppe, eine fluorhaltige $C_{1-3}$-Alkylgruppe, eine fluorhaltige $C_{1-3}$-Alkoxygruppe oder ein Fluoratom substituiert sein kann; und $Y^4$ für wenigstens ein Element steht, ausgewählt aus der Gruppe, bestehend aus Strukturen der folgenden Formeln [2-a] bis [2-g]:

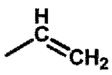
[2-a]

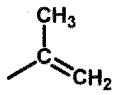
[2-b]

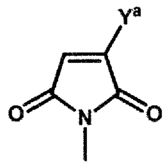
[2-c]

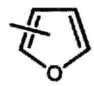
[2-d]

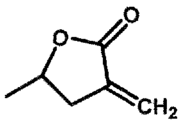
[2-e]

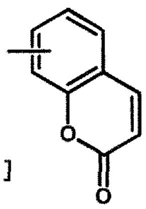
[2-f]

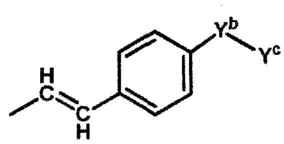
[2-g]

wobei $Y^a$ für ein Wasserstoffatom oder einen Benzolring steht; $Y^b$ für eine Einfachbindung oder wenigstens eine cyclische Gruppe steht, ausgewählt aus der Gruppe, bestehend aus einem Benzolring, einem Cyclohexanring und einem heterocyclischen Ring; und $Y^c$ für wenigstens ein Element steht, ausgewählt aus der Gruppe, bestehend aus einer $C_{1-18}$-Alkylgruppe, einer fluorhaltigen $C_{1-18}$-Alkylgruppe, einer $C_{1-18}$-Alkoxygruppe und einer fluorhaltigen $C_{1-18}$-Alkoxygruppe, wobei das Flüssigkristall-Ausrichtungsmittel ein Flüssigkristall-Ausrichtungsmittel ist, das einen Polyimid-Vorläufer enthält, der durch eine Reaktion einer Diamin-Komponente, die ein Diamin mit der durch die obige Formel [1-1] oder [1-2] dargestellten Seitenkettenstruktur und ein Diamin mit einer durch die obige Formel [2] dargestellten Seitenkettenstruktur enthält, und einer Tetracarbonsäure-Komponente erhalten wird, oder ein Polyimid, das durch Imidisieren des Polyimid-Vorläufers erhalten wird; wobei das Flüssigkristall-Ausrichtungsmittel wenigstens einen Generator enthält, ausgewählt aus der Gruppe, bestehend aus einem Photoradikalgenerator, einem Photosäuregenerator und einem Photobasengenerator, wobei das Flüssigkristall-Ausrichtungsmittel eine Verbindung mit wenigstens einem Element enthält, ausgewählt aus der Gruppe, bestehend aus Strukturen der folgenden Formeln [b-1] bis [b-8]:

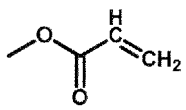
[b−1]

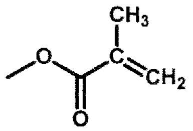
[b−2]

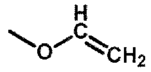
[b−3]

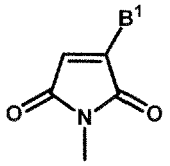
[b−4]

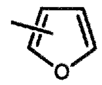
[b−5]

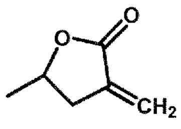
[b−6]

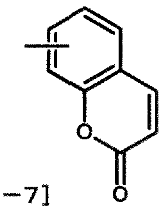
[b−7]

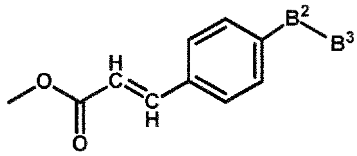
[b−8]

wobei $B^1$ für ein Wasserstoffatom oder einen Benzolring steht, $B^2$ für wenigstens eine cyclische Gruppe steht, ausgewählt aus der Gruppe, bestehend aus einem Benzolring, einem Cyclohexanring und einem heterocyclischen Ring, und $B^3$ für wenigstens ein Element steht, ausgewählt aus der Gruppe, bestehend aus einer $C_{1-18}$-Alkylgruppe, einer fluorhaltigen $C_{1-18}$-Alkylgruppe, einer $C_{1-18}$-Alkoxygruppe und einer fluorhaltigen $C_{1-18}$-Alkoxygruppe, und wobei das Flüssigkristall-Ausrichtungsmittel eine Verbindung mit wenigstens einer Gruppe enthält, ausgewählt aus der Gruppe, bestehend aus einer Epoxygruppe, einer Isocyanatgruppe, einer Oxetangruppe, einer Cyclocarbonatgruppe, einer Hydroxygruppe, einer Hydroxyalkylgruppe und einer Niederalkoxyalkylgruppe.

**2.** Die Flüssigkristall-Anzeigevorrichtung nach Anspruch 1, wobei der Anteil des Diamins mit der durch die obige Formel [1-1] oder [1-2] dargestellten Seitenkettenstruktur von 10 bis 80 Mol-% bezogen auf die Diaminkomponente beträgt.

**3.** Die Flüssigkristall-Anzeigevorrichtung nach Anspruch 1 oder 2, wobei der Anteil des Diamins mit der durch die obige Formel [2] dargestellten Seitenkettenstruktur von 1 bis 50 Mol-% bezogen auf die Diaminkomponente beträgt.

**4.** Die Flüssigkristall-Anzeigevorrichtung nach einem der Ansprüche 1 bis 3, wobei das Diamin mit der durch die obige Formel [1-1] oder [1-2] dargestellten Seitenkettenstruktur ein Diamin der folgenden Formel [1a] ist:

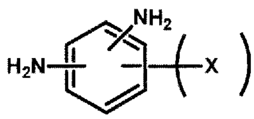
[1a]

wobei X für die durch die obige Formel [1-1] oder [1-2] dargestellte Struktur steht und m für eine ganze Zahl von 1 bis 4 steht.

**5.** Die Flüssigkristall-Anzeigevorrichtung nach Anspruch 4, wobei das Diamin ein Diamin der folgenden Formel [1a-1] ist:

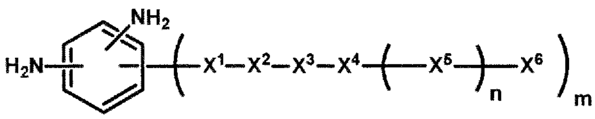
[1a−1]

wobei $X^1$, $X^2$, $X^3$, $X^4$, $X^5$, $X^6$ und n wie für die Formel [1-1] in Anspruch 1 definiert sind und m für eine ganze Zahl von 1 bis 4 steht.

**6.** Die Flüssigkristall-Anzeigevorrichtung nach einem der Ansprüche 1 bis 5, wobei das Diamin mit der durch die obige Formel [2] dargestellten Seitenkettenstruktur ein Diamin der folgenden Formel [2a] ist:

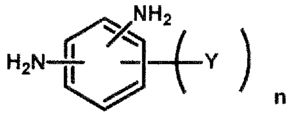

[2a]

wobei Y für die durch die obige Formel [2] dargestellte Struktur steht und n für eine ganze Zahl von 1 bis 4 steht.

**7.** Die Flüssigkristall-Anzeigevorrichtung nach einem der Ansprüche 1 bis 6, wobei die Tetracarbonsäure-Komponente ein Tetracarbonsäuredianhydrid der folgenden Formel [3] ist:

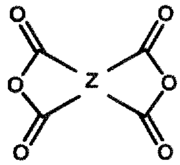

[3]

wobei Z für wenigstens ein Element steht, ausgewählt aus der Gruppe, bestehend aus Strukturen der folgenden Formeln [3a] bis [3k]:

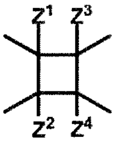
[3a]

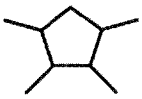
[3b]

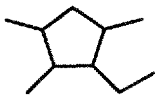
[3c]

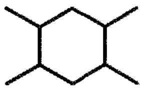
[3d]

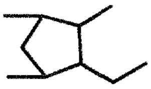
[3e]

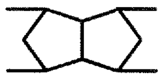
[3f ]

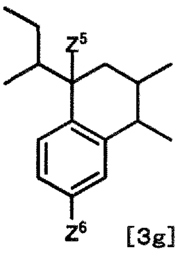
[3g]

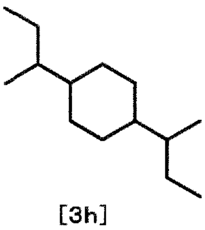
[3h]

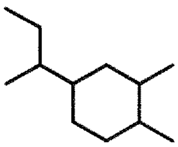
[3i ]

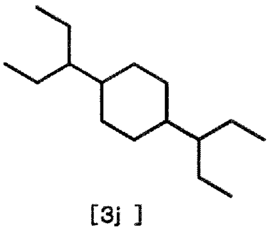
[3j ]

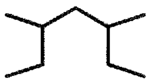
[3k]

wobei $Z^1$ bis $Z^4$ jeweils unabhängig voneinander für wenigstens ein Element stehen, ausgewählt aus der Gruppe, bestehend aus einem Wasserstoffatom, einer Methylgruppe, einem Chloratom und einem Benzolring, und $Z^5$ und $Z^6$ jeweils unabhängig voneinander für ein Wasserstoffatom oder eine Methylgruppe stehen.

**8.** Die Flüssigkristall-Anzeigevorrichtung nach einem der Ansprüche 1 bis 7, wobei das Flüssigkristall-Ausrichtungsmittel wenigstens ein Lösungsmittel enthält, ausgewählt aus der Gruppe, bestehend aus 1-Hexanol, Cyclohexanol, 1,2-Ethandiol, 1,2-Propandiol, Propylenglycolmonobutylether, Ethylenglycolmonobutylether, Dipropylenglycoldimethylether, Cyclohexanon, Cyclopentanon und Lösungsmitteln der folgenden Formeln [D1] bis [D3]:

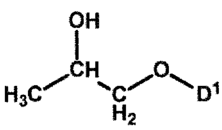
[D1]

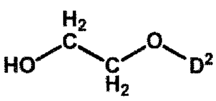
[D2]

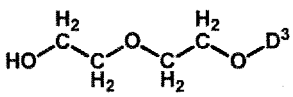
[D3]

wobei $D^1$ für eine $C_{1-3}$-Alkylgruppe steht, $D^2$ für eine $C_{1-3}$-Alkylgruppe steht und $D^3$ für eine $C_{1-4}$-Alkylgruppe steht.

**9.** Die Flüssigkristall-Anzeigevorrichtung nach einem der Ansprüche 1 bis 8, wobei das Flüssigkristall-Ausrichtungsmittel wenigstens ein Lösungsmittel enthält, ausgewählt aus der Gruppe, bestehend aus N-Methyl-2-pyrrolidon, N-Ethyl-2-pyrrolidon und γ-Butyrolacton.

**10.** Die Flüssigkristall-Anzeigevorrichtung nach einem der Ansprüche 1 bis 9, wobei das Substrat ein Glassubstrat oder ein Kunststoffsubstrat ist.

**11.** Flüssigkristall-Ausrichtungsfilm, zur Verwendung für die wie in einem der Ansprüche 1 bis 10 definierten Flüssigkristall-Anzeigevorrichtung.

**12.** Flüssigkristall-Ausrichtungsmittel zur Bildung eines wie in Anspruch 11 definierten Flüssigkristall-Ausrichtungsfilms.

## Revendications

**1.** Dispositif d'affichage à cristaux liquides, qui est dans un état transparent quand aucune tension n'est appliquée et dans un état de diffusion quand une tension est appliquée, et qui comprend une couche de cristaux liquides formée par disposition d'une composition de cristaux liquides contenant un composé polymérisable qui subit une réaction de polymérisation par des rayons ultraviolets, entre une paire de substrats dotés d'une électrode, et irradiation de la composition de cristaux liquides avec des rayons ultraviolets et durcissement de celle-ci dans un état tel que la composition de cristaux liquides présente partiellement ou entièrement une cristallinité liquide, et au moins l'un des substrats étant doté d'un film d'alignement de cristaux liquides pour aligner verticalement un cristal liquide, dans lequel le film d'alignement de cristaux liquides est un film d'alignement de cristaux liquides obtenu à partir d'un agent d'alignement de cristaux liquides contenant un solvant et un polymère ayant une structure de chaîne latérale (première structure de chaîne latérale) représentée par l'une des formules [1-1] et [1-2] qui suivent et une structure de chaîne latérale (deuxième structure de chaîne latérale) représentée par la formule [2] qui suit :

$$-X^1-X^2-X^3-X^4\left(-X^5-\right)_n-X^6 \qquad [1-1]$$

dans laquelle $X^1$ et $X^3$ sont chacun indépendamment au moins un groupe de liaison choisi dans le groupe constitué par une liaison simple, $-(CH_2)_a-$ (où a est un entier de 1 à 15), -O-, $-CH_2O-$, -COO- et -OCO- ; $X^2$ est une liaison simple ou $-(CH_2)_b-$ (où b est un entier de 1 à 15) ; $X^4$ est au moins un groupe cyclique divalent choisi dans le groupe constitué par un cycle benzène, un cycle cyclohexane et un cycle hétérocyclique, ou un groupe organique divalent en $C_{17}$ à $C_{51}$ ayant une charpente de stéroïde, sous réserve qu'un atome d'hydrogène optionnel sur le groupe cyclique puisse être remplacé par un groupe alkyle en $C_1$ à $C_3$, un groupe alcoxy en $C_1$ à $C_3$, un groupe alkyle en $C_1$ à $C_3$ contenant du fluor, un groupe alcoxy en $C_1$ à $C_3$ contenant du fluor, ou un atome de fluor ; $X^5$ est au moins un groupe cyclique choisi dans le groupe constitué par un cycle benzène, un cycle cyclohexane et un cycle hétérocyclique, sous réserve qu'un atome d'hydrogène optionnel sur un tel groupe cyclique puisse être remplacé par un groupe alkyle en $C_1$ à $C_3$, un groupe alcoxy en $C_1$ à $C_3$, un groupe alkyle en $C_1$ à $C_3$ contenant du fluor, un groupe alcoxy en $C_1$ à $C_3$ contenant du fluor, ou un atome de fluor ; n est un entier de 0 à 4 ; et $X^6$ est au moins un membre choisi dans le groupe constitué par un groupe alkyle en $C_1$ à $C_{18}$, un groupe alkyle en $C_1$ à $C_{18}$ contenant du fluor, un groupe alcoxy en $C_1$ à $C_{18}$ et un groupe alcoxy en $C_1$ à $C_{18}$ contenant du fluor ;

$$-x^7-x^8 \qquad [1-2]$$

dans laquelle $X^7$ est au moins un groupe de liaison choisi dans le groupe constitué par une liaison simple, -O-, $-CH_2O-$, -CONH-, -NHCO-, $-CON(CH_3)-$, $-N(CH_3)CO-$, -COO- et -OCO- ; et $X^8$ est un groupe alkyle en $C_8$ à $C_{22}$ ou un groupe alkyle en $C_6$ à $C_{18}$ contenant du fluor ;

$$-Y^1-Y^2-Y^3-Y^4 \qquad [2]$$

dans laquelle $Y^1$ et $Y^3$ sont chacun indépendamment au moins un groupe de liaison choisi dans le groupe constitué par une liaison simple, -O-, -NH-, $-N(CH_3)-$, $-CH_2O-$, -CONH-, -NHCO-, $-CON(CH_3)-$, $-N(CH_3)CO-$, -COO- et -OCO- ; $Y^2$ est un groupe alkylène en $C_1$ à $C_{18}$, ou un groupe organique en $C_6$ à $C_{24}$ ayant au moins un groupe cyclique

choisi dans le groupe constitué par un cycle benzène, un cycle cyclocyclohexane et un cycle hétérocyclique, sous réserve qu'un atome d'hydrogène optionnel sur un tel groupe cyclique puisse être remplacé par un groupe alkyle en $C_1$ à $C_3$, un groupe alcoxy en $C_1$ à $C_3$, un groupe alkyle en $C_1$ à $C_3$ contenant du fluor, un groupe alcoxy en $C_1$ à $C_3$ contenant du fluor, ou un atome de fluor ; et $Y^4$ est au moins un membre choisi dans le groupe constitué par les structures représentées par les formules [2-a] à [2-g] qui suivent :

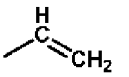

[2−a]

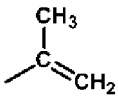

[2−b]

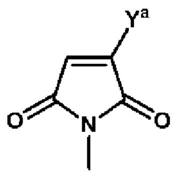

[2−c]

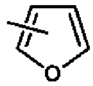

[2−d]

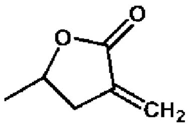

[2−e]

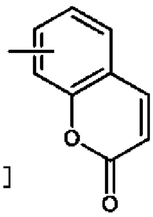

[2−f ]

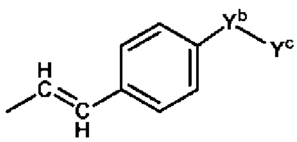

[2−g]

dans lesquelles $Y^a$ est un atome d'hydrogène ou un cycle benzène ; $Y^b$ est une liaison simple, ou au moins un groupe cyclique choisi dans le groupe constitué par un cycle benzène, un cycle cyclohexane et un cycle hétérocyclique ; et $Y^c$ est au moins un membre choisi dans le groupe constitué par un groupe alkyle en $C_1$ à $C_{18}$, un groupe alkyle en $C_1$ à $C_{18}$ contenant du fluor, un groupe alcoxy en $C_1$ à $C_{18}$, et un groupe alcoxy en $C_1$ à $C_{18}$ contenant du fluor,

dans lequel l'agent d'alignement de cristaux liquides est un agent d'alignement de cristaux liquides contenant un précurseur de polyimide obtenu par réaction d'un composant diamine contenant une diamine ayant la structure de chaîne latérale représentée par la formule [1-1] ou [1-2] ci-dessus et une diamine ayant la structure de chaîne latérale représentée par la formule [2] ci-dessus, et d'un composant acide tétracarboxylique, ou un polyimide obtenu par imidation du précurseur de polyimide,

dans lequel l'agent d'alignement de cristaux liquides contient au moins un générateur choisi dans le groupe constitué par un générateur photo-radicalaire, un générateur de photo-acide et un générateur de photo-base,

dans lequel l'agent d'alignement de cristaux liquides contient un composé ayant au moins un membre choisi dans le groupe constitué par les structures représentées par les formules [b-1] à [b-8] qui suivent :

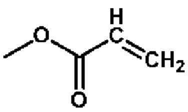

[b−1]

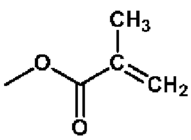

[b−2]

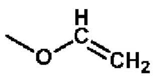

[b−3]

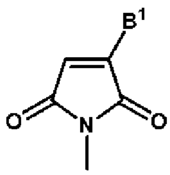

[b−4]

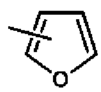

[b−5]

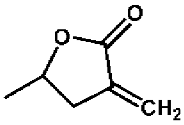

[b−6]

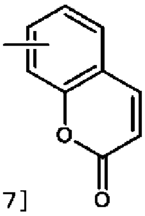

[b−7]

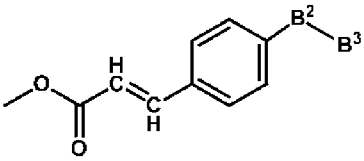

[b−8]

dans lesquelles $B^1$ est un atome d'hydrogène ou un cycle benzène, $B^2$ est au moins un groupe cyclique choisi dans

le groupe constitué par un cycle benzène, un cycle cyclohexane et un cycle hétérocyclique, et $B^3$ est au moins un membre choisi dans le groupe constitué par un groupe alkyle en $C_1$ à $C_{18}$, un groupe alkyle en $C_1$ à $C_{18}$ contenant du fluor, un groupe alcoxy en $C_1$ à $C_{18}$, et un groupe alcoxy en $C_1$ à $C_{18}$ contenant du fluor, et

dans lequel l'agent d'alignement de cristaux liquides contient un composé ayant au moins un groupe choisi dans le groupe constitué par un groupe époxy, un groupe isocyanate, un groupe oxétane, un groupe cyclocarbonate, un groupe hydroxy, un groupe hydroxyalkyle et un groupe alcoxyalkyle inférieur.

**2.** Dispositif d'affichage à cristaux liquides selon la revendication 1, dans lequel la proportion de la diamine ayant la structure de chaîne latérale représentée par la formule [1-1] ou [1-2] ci-dessus est de 10 à 80 % en moles basés sur le composant diamine.

**3.** Dispositif d'affichage à cristaux liquides selon la revendication 1 ou 2, dans lequel la proportion de la diamine ayant la structure de chaîne latérale représentée par la formule [2] ci-dessus est de 1 à 50 % en moles basés sur le composant diamine.

**4.** Dispositif d'affichage à cristaux liquides selon l'une quelconque des revendications 1 à 3, dans lequel la diamine ayant la structure de chaîne latérale représentée par la formule [1-1] ou [1-2] ci-dessus est une diamine représentée par la formule [1a] qui suit :

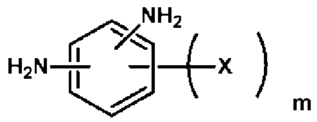

[1a]

dans laquelle X est la structure représentée par la formule [1-1] ou [1-2] ci-dessus, et m est un entier de 1 à 4.

**5.** Dispositif d'affichage à cristaux liquides selon 4, dans lequel la diamine est une diamine représentée par la formule [1a-1] qui suit :

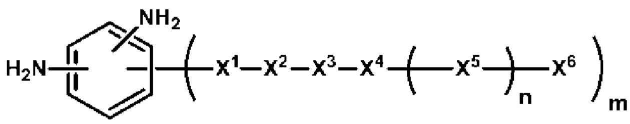

[1a−1]

dans laquelle $X^1$, $X^2$, $X^3$, $X^4$, $X^5$, $X^6$ et n sont tels que définis à propos de la formule [1-1] dans la revendication 1, et m est un entier de 1 à 4.

**6.** Dispositif d'affichage à cristaux liquides selon l'une quelconque des revendications 1 à 5, dans lequel la diamine ayant la structure de chaîne latérale représentée par la formule [2] ci-dessus est une diamine représentée par la formule [2a] qui suit :

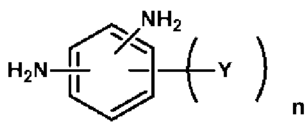

[2a]

dans laquelle Y est la structure représentée par la formule [2] ci-dessus, et n est un entier de 1 à 4.

**7.** Dispositif d'affichage à cristaux liquides selon l'une quelconque des revendications 1 à 6, dans lequel le composant acide tétracarboxylique est un dianhydride d'acide tétracarboxylique représenté par la formule [3] qui suit :

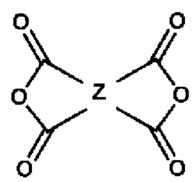

[3]

dans laquelle Z est au moins un membre choisi dans le groupe constitué par les structures représentées par les formules [3a] à [3k] qui suivent :

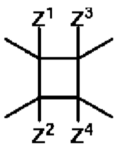
[3a]

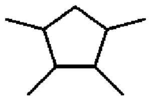
[3b]

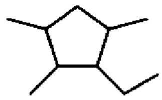
[3c]

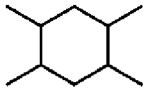
[3d]

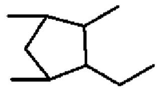
[3e]

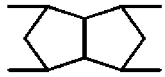
[3f ]

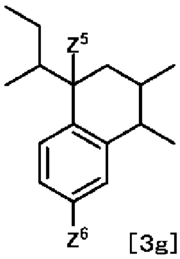
[3g]

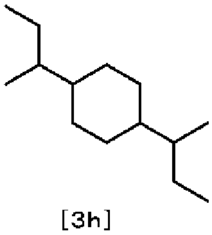
[3h]

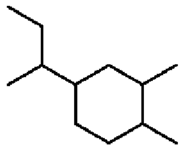
[3i ]

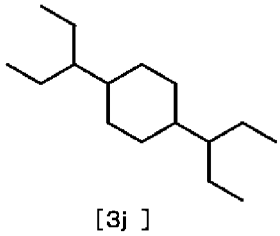
[3j ]

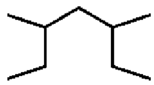
[3k]

dans lesquelles $Z^1$ à $Z^4$ sont chacun indépendamment au moins un membre choisi dans le groupe constitué par un atome d'hydrogène, un groupe méthyle, un atome de chlore et un cycle benzène, et $Z^5$ et $Z^6$ sont chacun indépendamment un atome d'hydrogène ou un groupe méthyle.

**8.** Dispositif d'affichage à cristaux liquides selon l'une quelconque des revendications 1 à 7, dans lequel l'agent d'alignement de cristaux liquides contient au moins un solvant choisi dans le groupe constitué par le 1-hexanol, le cyclohexanol, le 1,2-éthanediol, le 1,2-propanediol, l'éther monobutylique de propylèneglycol, l'éther monobutylique d'éthylèneglycol, l'éther diméthylique de dipropylèneglycol, la cyclohexanone, la cyclopentanone et les solvants représentés par les formules [D1] à [D3] qui suivent :

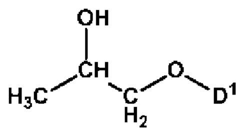
[D1]

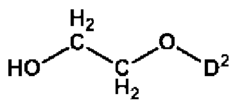
[D2]

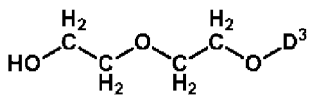
[D3]

dans lesquelles $D^1$ est un groupe alkyle en $C_1$ à $C_3$, $D^2$ est un groupe alkyle en $C_1$ à $C_3$, et $D^3$ est un groupe alkyle en $C_1$ à $C_4$.

**9.** Dispositif d'affichage à cristaux liquides selon l'une quelconque des revendications 1 à 8, dans lequel l'agent d'alignement de cristaux liquides contient au moins un solvant choisi dans le groupe constitué par la N-méthyl-2-pyrrolidone, la N-éthyl-2-pyrrolidone, et la y-butyrolactone.

**10.** Dispositif d'affichage à cristaux liquides selon l'une quelconque des revendications 1 à 9, dans lequel le substrat est un substrat en verre ou un substrat en matière plastique.

**11.** Film d'alignement de cristaux liquides destiné à être utilisé pour le dispositif d'affichage à cristaux liquides tel que défini dans l'une quelconque des revendications 1 à 10.

**12.** Agent d'alignement de cristaux liquides pour former le film d'alignement de cristaux liquides tel que défini dans la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2885116 B
- JP 4132424 B
- WO 2012002513 A1
- WO 2011132751 A
- WO 2012014898 A